# EUROPÄISCHE PATENTSCHRIFT

(11) **EP 1 425 417 B1**
(45) Veröffentlichungstag und Bekanntmachung des Hinweises auf die Patenterteilung: **31.10.2007**
(21) Anmeldenummer: 02760329.9
(22) Anmeldetag: 02.09.2002
(51) Int. Cl.: C12Q 1/68

(54) **DETEKTION VON WECHSELWIRKUNGEN AUF SONDEN-ARRAYS**
INTERACTION DETECTION ON SEVERAL PROBE ARRAYS
DETECTION D'INTERACTIONS SUR DES ENSEMBLES DE SONDES

(30) Priorität: 31.08.2001 DE 10142643
(43) Veröffentlichungstag der Anmeldung: 09.06.2004
(73) Patentinhaber: Clondiag Chip Technologies GmbH, 07749 Jena (DE)
(72) Erfinder: ELLINGER, Thomas, 07743 Jena (DE); ERMANTRAUT, Eugen, 07745 Jena (DE); EHRICHT, Ralf, 07749 Jena (DE); ENGELS, Joachim, W., 61476 Kronberg (DE); JAHN-HOFMANN, Kerstin, 62363 Neu-Isenburg (DE); HOLZHEY, Nancy, D- 07743 Jena (DE)
(74) Vertreter: Maiwald Patentanwalts GmbH
(86) Internationale Anmeldenummer: PCT/EP2002/009780
(87) Internationale Veröffentlichungsnummer: WO 2003/018838

(56) Entgegenhaltungen:
- EP-A- 0 902 034
- WO-A-01/40515
- WO-A-94/24143
- WO-A-98/01533
- DE-A- 10 021 204
- GB-A- 2 236 852
- US-A- 4 876 187
- US-A- 5 367 066
- US-A- 5 552 538
- US-A- 5 700 642
- US-A- 5 843 655
- US-A- 6 156 501

## Beschreibung

Die Erfindung betrifft ein Verfahren zum Nachweis von Wechselwirkungen zwischen Sondenmolekülen und Targetmolekülen auf Sonden-Arrays, bei dem auf die Markierung der Targetmoleküle verzichtet werden kann. Ferner betrifft die Erfindung für ein derartiges Verfahren geeignete Sonden-Arrays und Kits sowie ein Verfahren zur Herstellung und Qualitätsüberwachung von Sonden-Arrays.

Biomedizinische Tests basieren häufig auf der Feststellung der Wechselwirkung zwischen einem Molekül, das in bekannter Menge und Position vorhanden ist (der molekularen Sonde) und dem nachzuweisenden Molekül bzw. den nachzuweisenden Molekülen (dem molekularen Target). Moderne Tests werden in der Regel mit einer Probe parallel an einigen Sonden durchgeführt (D. J. Lockhart, E. A. Winzeler; Genomics, gene expression and DNA arrays; Nature 2000,405, 827-836). Die Sonden werden hierbei üblicherweise in vorgegebener Art und Weise auf einer geeigneten, beispielsweise in WO 00/12575 beschriebenen Matrix immobilisiert (siehe z.B. US 5,412,087, WO 98/36827) bzw. synthetisch erzeugt (siehe z.B. US 5,143,854, US 5,658,734, WO 90/03382).

Der Nachweis einer solchen Wechselwirkung erfolgt üblicherweise folgendermaßen: Die Sonde bzw. die Sonden werden in vorgegebener Art und Weise an einer bestimmten Matrix fixiert. Die Targets werden in einer Lösung mit den Sonden in Kontakt gebracht und unter definierten Bedingungen inkubiert. In Folge der Inkubation findet zwischen Sonde und Target eine spezifische Wechselwirkung statt. Die entstehende Bindung ist deutlich stabiler als die Bindung von Molekülen, für die die Sonde unspezifisch ist. Anschließend wird das System mit entsprechenden Lösungen gewaschen, so daß die Moleküle, die nicht spezifisch gebunden sind, entfernt werden.

Zum Nachweis der Wechselwirkung zwischen Target und Sonde werden heute eine Vielzahl von Verfahren eingesetzt, von denen einige im folgenden beschrieben werden:

Als Nachweisverfahren, die auf einer Markierung des Targets beruhen, sind insbesondere Fluoreszenz-basierte Verfahren bekannt. Dabei werden die Targets vor, nach oder im Verlauf der spezifischen Interaktion mit den Sonden mit fluoreszierenden Markern versehen. So werden Analysen basierend auf hochintegrierten Sonden-Arrays u.a. wegen hoher Ortsauflösung und im Vergleich zu anderen herkömmlichen Methoden geringerem Aufwand in der Regel fluoreszenzoptisch ausgelesen (A. Marshall, J. Hodgson, DNA Chips: An array of possibilities, Nature Biotechnology 1998, 16, 27-31; G. Ramsay, DNA Chips: State of the Art, Nature Biotechnology 1998, 16, 40-44).

Für die effektive Markierung von Targets mit Fluorophoren sind verschiedene Verfahren bekannt. Einerseits werden Konjugate aus einem Fluorophor bzw. einer Ankergruppe für fluoreszierende Moleküle und einer reaktiven Gruppe genutzt, um Targets auf chemischem Wege zu markieren. Speziell für die Markierung von Nukleinsäuren sind verschiedene kommerzielle Produkte verfügbar, wie z.B. BiotinChemLink von Roche Biochemicals, Mannheim, Deutschland; Ulyssis von Molecular Probes, Eugene, Oregon, USA; Psoralen-Biotin von Ambion Inc., Austin, Texas, USA. Als Produkt des Prozesses entstehen Targets, die intern mit Substituenten modifiziert sind. Da letztere das Hybridisierungsverhalten der Targets in schwer voraussagbarer Weise beeinflussen, sind optimal stringente Hybridisierungsbedingungen, wie sie beispielsweise für die Detektion von Punktmutationen notwendig sind, schwieriger zu definieren.

Ferner werden enzymatische Aktivitäten genutzt, um Targetmoleküle mit Fluorophoren zu markieren. So werden beispielsweise Nukleinsäure-Targets mittels Polymerasen kopiert, wobei in die Kopie fluoreszierende Monomere bzw. mit Ankergruppen wie beispielsweise Biotin, Digoxigenin oder dergleichen gekoppelte Monomere eingebaut werden. In einer Weiterentwicklung dieses cDNA-Protokolls ist es möglich, für quantitative Array-Experimente zwei verschiedene Proben, nämlich die zu untersuchende Probe sowie eine Standardprobe, mit unterschiedlichen Farbstoffen zu markieren, und diese gleichzeitig mit dem Array zu hybridisieren (vergleichende Hybridisierung), wobei die von der zu untersuchenden Probe generierten Signale mit denen der Standardprobe verglichen werden und somit jedes Array-Element eine interne Eichung erfährt. Auf diese Weise ist allerdings nur eine Normierung von zwei jeweils selbst nicht standardisierten Meßwerten gegeneinander gewährleistet.

Bei allen auf dem Kopieren des Targets basierenden Markierungsverfahren wirkt sich nachteilig aus, daß die einzelnen Target-Sequenzen mit unterschiedlicher Effizienz kopiert werden und im Extremfall, z.B. durch Ausbildung stabiler Sekundärstrukturen, für bestimmte Targets ein Informationsverlust auftreten kann. Außerdem entstehen auch hier wie bei den vorstehend genannten chemischen Methoden intern markierte Kopien des Targets mit den beschriebenen Nachteilen.

Dieses Problem kann umgangen werden, indem die Markierung außerhalb der zu detektierenden Region, beispielsweise am Terminus des nachzuweisenden Moleküls erfolgt. Zu diesem Zweck wurden Template-unabhängige Polymerasen wie die Terminale Deoxynukleotidyl-Transferase oder die Poly(A)-Polymerase verwendet, die sukzessive Basen mit dem 3'-Terminus von DNA bzw. RNA verknüpfen (G. Martin, W. Keller, Tailing and 3' end labeling of RNA with yeast poly(A) polymerase and various nucleotides. RNA 1998, 4, 226-230, V. Rosenmeyer, A. Laubrock, R. Seibl, Nonradioactive 3' end labeling of RNA molecules of different length by Terminal Deoxynucleotidyl Transferase. Analytical Biochemistry 1995, 224, 446-449, D. Figeys, A. Renborg, N. J. Dovichi, Labeling of double stranded DNA by ROX-dideoxycytosine triphosphate using Terminal Deoxynucleotidyl Transferase and separation by capillary electrophoresis. Anal. Chem. 1994, 66, 4382-4383).

Ein genereller Nachteil des enzymatischen Einbaus von Basen, die mit Fluorophoren oder Ankermolekülen modifiziert sind, ist, daß diese in der Regel schlechte Substrate für Polymerasen darstellen und dadurch ineffizient inkorporiert werden. Diese Situation ist bei den vorstehend genannten Template-unabhängigen Polymerasen besonders ausgeprägt, so daß die gewünschte hohe spezifische Markierung auf diesem Weg nicht erreicht wird. Eine effiziente Markierung ist überhaupt nur mit ausgewählten Kombinationen aus Polymerase und markierter Base zu erzielen.

Weitere Einschränkungen ergeben sich aus der Detektionstechnik. Die gegenwärtig sensitivsten Fluoreszenz-Reader nutzen für die Anregung des Fluorophors die engen spektralen Linien von Laserquellen, so daß für eine sensitive Detektion nur Farbstoffe verwendet werden können, die von verfügbaren Lasern anregbar sind. Ein Nachteil der Fluoreszenz-basierten Detektion auf Sonden-Arrays besteht in der im Vergleich zur radioaktiven Markierung etwa 100-fach geringeren Sensitivität (F. Bertucci et al., Sensitivity issues in DNA-array based expression measurements and performance of nylon microarrays for small samples. Human Molecular Genetics 1999, 8 (9), 1715 -1722). Die Detektion eines Targets ist daher häufig erst nach dessen Amplifikation bzw. nach Signalamplifikation möglich. Die US-Patentschrift 4,683,202 offenbart eine Amplifikation durch PCR für qualitative Nachweise. Quantitative Assays auf Sonden-Arrays erfordern ein Verfahren mit linearer Amplifikationskinetik. Ein solches Verfahren ist von J. Phillips, J. H. Eberwine (Antisense RNA amplification: A linear amplification method for analyzing the mRNA population from single living cell. Methods 1996, 10 (3), 283-288) sowie von Wang et al., (High fidelity mRNA amplification for gene profiling., Nat. Biotechnol. 2000, 18 (4), 457 - 459) beschrieben worden.

Neben diesen Fluoreszenz-basierten Verfahren sind Methoden zur Markierung des Targets bekannt, die einen auf anderen Effekten beruhenden Nachweis der Targets gestatten.: Speziell bei der Benutzung von Arrays mit großer Ausdehnung wird das Target häufig radioaktiv markiert. Die Wechselwirkung wird durch Inkubation mit einem Röntgenfilm oder einem Phosphoimager nachgewiesen. Des weiteren kann das Target mit einem Farbstoff markiert und dessen Anwesenheit mit Hilfe eines Photometers nachgewiesen werden. In DE 19543232 ist die Markierung des Target mit Detektionskügelchen beschrieben, deren Anwesenheit nach Wechselwirkung des Targets mit dem Sonden optisch nachgewiesen wird.

In DE 10033334 ist ein Verfahren offenbart, bei dem die Wechselwirkung von Targets mit spezifischen Sonden auf Sonden-Arrays über eine Reaktion sichtbar gemacht werden kann, bei der am Ort der Wechselwirkung ein unlösliches Produkt entsteht und abgelagert wird. Das Verfahren implementiert eine Signalamplifikation und zeichnet sich durch einen äußerst einfachen Detektoraufbau aus.

In Nature Biotechnology 1998, 16, 725-727 wird der Nachweis des Komplexes aus Target und Sonde durch Massenspektrometrie beschrieben. Ferner werden massensensitive Verfahren wie Oberflächenplasmonresonanz eingesetzt (J. M. Brockman et al., A multistep chemical modification procedure to create DNA Arrays on gold surfaces for the study of protein-DNA Interactions with surface plasmon resonance imaging, J. Am. Chem. Soc. 1999, 121, 8044-8051). Die US-Patentschrift 5,605,662 offenbart ein Verfahren zum direkten elektrischen Nachweis der Wechselwirkung.

Die auf einer Markierung des Targets beruhenden Nachweisverfahren weisen die gemeinsamen Nachteile auf, daß sie nicht standardisierbar sind und die Einführung einer Markierung aufwendig ist.

Ferner sind Verfahren zum Nachweis von molekularen Wechselwirkungen bekannt, bei denen auf eine direkte Markierung der Target-Nukleinsäure verzichtet werden kann.

In WO 92/01813 ist ein Verfahren offenbart, nach dem mit einer linearen Kinetik eine Vielzahl von Kopien eines zirkulären einzelsträngigen Templates hergestellt werden kann. In WO 2000/04193 wird der Einsatz dieses als RCA (Rolling Circle Amplification) bezeichneten Mechanismus zur Detektion molekularer Interaktionen auf Sonden-Arrays beschrieben. Nach spezifischer Wechselwirkung zwischen der am 3'-Ende auf dem Array immobilisierten Sonde und dem Target wird ein Adapter-Oligonukleotid mit dem Target hybridisiert. Dieses setzt sich aus einer zum Target komplementären Sequenz und einer Sequenz zusammen, die Komplementarität zu einem zirkulären einzelsträngigen DNA-Molekül aufweist. Die beiden Module sind über eine 5'-5'-Bindung miteinander verknüpft. Nach Zugabe des zirkulären einzelsträngigen DNA-Moleküls, einer Polymerase und der entsprechenden teilweise markierten Bausteine erfolgt an den Sonden, an denen eine Wechselwirkung stattgefunden hat, DNA-Synthese nach dem RCA-Mechanismus, wobei durch den Einbau einer Vielzahl markierter Bausteine eine Markierung und Signalamplifikation erfolgt. Dieses Verfahren zeichnet sich durch eine hohe Sensitivität und aufgrund der zweifachen spezifischen Hybridisierung zwischen Sonde und Target sowie zwischen Target und Adapter-Oligonukleotid durch eine hohe Spezifität aus. Es ist jedoch sehr aufwendig und nicht dazu geeignet, eine Vielzahl unterschiedlicher Wechselwirkungen auf einem Sonden-Array parallel zu detektieren.

Bei der als Sandwich-Hybridisierung bezeichneten Technik werden zwei Sonden verwendet, die an unterschiedliche, nicht überlappende Regionen der Target-Nukleinsäure binden (A.R. Dunn, J.A. Hassel, A novel method to map transcripts: evidence for homology between an adenovirus mRNA and discrete multiple regions ofthe viral genome. Cell 1977, 12, 23 - 36; M. Ranki et al., Sandwich hybridization as a convenient method for the detection of nucleic acids in crude samples. Gene 1983, 21 (1 - 2), 77 - 85). Eine der beiden Sonden wirkt als sogenannte Fang-Sonde (capture probe), mit deren Hilfe die Target-Nukleinsäure spezifisch an eine Oberfläche gebunden werden kann. Die zweite targetspezifische Sonde trägt eine detektierbare Einheit, so daß die Target-Nukleinsäure durch Hybridisierung an diese zweite Sonde markiert wird. Derartige Sandwich-Hybridisierungen erfüllen demnach zwei Funktionen, nämlich die Erhöhung der Spezifität des Nachweises durch doppelte Wechselwirkung mit zwei spezifischen Sonden und die Markierung hybridisierter Target-Nukleinsäuren durch Hybridisierung mit der Detektionssonde.

Eine Übersicht über Abwandlungen der Sandwich-Hybridisierungs-Methode ist in F. Lottspeich und H. Zorbas (Hrsg.), Bioanalytik, Spektrum, Akad. Verl., Heidelberg, Berlin, 1998, angegeben. In US 4,486,539 ist die Anwendung von Sandwich-Hybridisierungen zum Nachweis von mikrobiellen Nukleinsäuren beschrieben. In US 5,288,609 ist eine Sandwich-Methode offenbart, welche die Immobilisierung, Hybridisierung und den Nachweis der Target-Nukleinsäure in einem Schritt zuläßt. In US 5,354,657 ist ein Sandwich-Hybridisierungsverfahren beschrieben, bei dem die Detektion auf der Wechselwirkung von Digoxin bzw. Digoxigenin mit spezifischen detektierbaren Antikörpern beruht. In US 4,751,177 wird ein auf Sandwich-Hybridisierung basierendes Verfahren offenbart, bei dem eine bispezifische Fang-Sonde eingesetzt wird, deren eine Spezifität zur Hybridisierung mit der Target-DNA und deren andere Spezifität zur Hybridisierung mit einer Oberfläche dient. In EP 0 198 662 und EP 0 192 168 sind auf Sandwich-Hybridisierung basierende Verfahren beschrieben, bei denen der Immobilisierung des entstehenden Komplexes eine Hybridisierung von Fang- und Detektionssonde mit der Target-Nukleinsäure in Lösung vorgeschaltet ist.

In US 5,641,630 ist ein Verfahren offenbart, bei dem zunächst ein Komplex aus Target- und Fangsonde gebildet wird, welcher anschließend immobilisiert und danach durch Hybridisierung mit der Detektionssonde nachgewiesen wird. In US 5,695,926 ist ein Verfahren beschrieben, bei dem die Fang-Sonden eine Länge von 11 bis 19 Basen aufweisen und nicht kovalent auf einem hydrophoben Substrat immobilisiert sind. Aus US 4,882,269 ist ein auf Sandwich-Hybridisierung basierendes Verfahren bekannt, das eine Signalamplifikation gewährleistet.

Die vorstehend genannten Verfahren durch Sandwich-Hybridisierung besitzen den gemeinsamen Nachteil, daß für die Detektion jedes einzelnen Targets sowohl eine spezifische Fang-Sonde als auch eine spezifische Detektionssonde notwendig ist. Für den parallelen Nachweis einer Anzahl verschiedener Targets beispielsweise auf Sonden-Arrays ist eine ebenso große Anzahl spezifischer Detektionssonden notwendig, wodurch die vorstehend genannten Verfahren nur bis zu einem niedrigen Parallelisierungsgrad einsetzbar sind.

Um dieses Problem zu lösen, wurden im Stand der Technik Verfahren beschrieben, bei denen alle Targets eines Target-Gemisches mit einer einheitlichen AdapterSequenz versehen werden, indem das Targetgemisch ausgehend von einem Primer kopiert wird, der an seinem 5'-Ende die Adaptersequenz enthält. Das homogene und effiziente Einführen der Adaptersequenz über einen Adapter-Primer ist jedoch bei solchen Targets nachteilig, die nicht über gleiche Sequenzmodule verfügen, an die der Primer binden kann, so daß dieses Verfahren nur einen begrenzten Anwendungsbereich hat.

Eine sensitive, die Einführung einer einheitlichen Adaptersequenz erfordernde Sandwich-Hybridisierungs-Methode zum sensitiven Nachweis von Wechselwirkungen auf Sonden-Arrays basiert auf der Verwendung von vielfach markierten Dendrimeren (siehe US 5,487,973, US 5,484,904, US 5,175,270, kommerziell erhältlich von Genisphere Inc., Montvale, NJ, USA). Bei diesem Verfahren werden mit einer Adaptersequenz versehene Kopien des Targets mit einem Sonden-Array inkubiert, wobei eine spezifische Hybridisierung stattfindet. Der Nachweis der spezifischen Hybridisierung erfolgt in einem zweiten Schritt durch Hybridisierung eines vielfach markierten Dendrimers, welches das Komplement der Adaptersequenz trägt und so an die Adaptersequenz bindet. Aufgrund der Beschränkungen bei der Einführung der Adaptersequenz über einen Adapterprimer ist auch die Anwendbarkeit dieses Verfahrens auf Targets mit einheitlichen Sequenzmodulen wie beispielsweise auf polyadenylierte eukaryontische RNA begrenzt.

Die vorstehend beschriebenen Nachweisverfahren, bei denen auf eine direkte Markierung des Targets verzichtet wird, besitzen den gemeinsamen Nachteil, daß sie, wenn überhaupt, nur begrenzt parallelisierbar und damit nicht für Array-basierte Nachweisverfahren geeignet sind. Sollte die Parallelisierbarkeit dieser Methoden gewährleistet werden, wäre dies wiederum mit einer Modifikation oder dem Kopieren der Targets verbunden und somit aufwendig und nicht standardisierbar.

Bislang sind keine Verfahren bekannt, mit denen eine Vielzahl unterschiedlicher Wechselwirkungen zwischen Targets und Sonden auf einem Sonden-Array effizient, d.h. insbesondere mit hoher Sensitivität und Spezifität; homogen, d.h. mit gleicher Effizienz für unterschiedliche Targets; und parallel detektiert werden können.

Es besteht daher ein starkes Bedürfnis nach weiteren Verfahren zum Nachweis von Targets mittels Sonden-Arrays, welche die Nachteile des Stands der Technik nicht aufweisen.

Ein vielversprechender Ansatz besteht darin, auf die mit den vorstehend beschriebenen Problemen verbundene Markierung der Targets zu verzichten. Derartige Verfahren basieren demnach auf der Markierung der Sonden und dem selektiven Entfernen von Sonden nach der Wechselwirkung mit den Targets.

In WO 98/01533 ist ein derartiges Sonden-Array offenbart, bei dem auf der Oberfläche eines festen Trägers eine Vielzahl von spaltbaren Signalelementen immobilisiert ist. Die Signalelemente umfassen einen chemischen Linker mit einer potentiellen Bruchstelle, insbesondere einer Siloxan-Gruppe, wobei an dem Linker entgegengesetzt zur Stelle der Immobilisierung auf einer Oberfläche eine Markierung angebracht ist. Die Targetspezifität wird durch zwei Oligonukleotidsonden vermittelt, die unterhalb bzw. oberhalb der Siloxan-Bruchstelle mit dem chemischen Linker verknüpft sind. Durch die Bindung des Targets sowohl an die erste als auch an die zweite Oligonukleotidsonde eines spaltbaren Signalelements bleibt die Markierung trotz einer nachfolgenden Spaltung der Siloxan-Bruchstelle mit der Substratoberfläche verknüpft. Durch die Gegenwart oder Abwesenheit von Signalen nach dem Kontakt mit der Probe und dem Kontakt mit einem die Bruchstelle spaltenden Agens wird die Gegenwart oder Abwesenheit von Target angezeigt.

Die Synthese der in WO 98/01533 beschriebenen Signalelemente ist jedoch äußerst aufwendig, so daß eine effiziente und homogene Markierung des Sonden-Arrays vor der Wechselwirkung mit den Targets nicht gewährleistet ist. Ferner besteht bei dem in WO 98/01533 beschriebenen Verfahren die Möglichkeit, daß die zwei Sondensequenzen eines Signalelements nicht wie vorstehend beschrieben gemeinsam mit einem Targetmolekül wechselwirken, sondern daß an jede der beiden Sonden jeweils ein Targetmolekül hybridisiert. In letzerem Fall wird nach der Spaltung der Siloxan-Bruchstelle die Markierung von der Substratoberfläche abgelöst und ein fälschlicherweise negatives Meßergebnis erhalten.

In US 4,876,187 sind Sonden zum Nachweis von Targets beschrieben, die eine Markierung, eine spaltbare Bindung und einen Immobilisierungsanker aufweisen. Der ebenfalls dort beschriebene Assay unter Verwendung derartiger Sonden umfaßt die Schritte Immobilisierung, Hybridisierung, enzymatisches Schneiden der spaltbaren Bindung sowie Detektion von verbliebenen mit der Oberfläche gekoppelten Markern.

Ein an einer Reihe von Sonden parallel durchführbarer Nachweis ist in US 4,876,187 nicht beschrieben. Insbesondere sind die dort beschriebenen Sonden für Array-Verfahren nicht geeignet, da eine enzymatische Spaltung von auf einer Oberfläche immoblisierten Sonden aufgrund der räumlichen Nähe der Spaltstelle zur Oberfläche äußerst ineffizient ist, wodurch ein hoher Hintergrund durch fälschlicherweise positive Signale erzeugt werden würde. Ferner ist die in US 4,876,187 beschriebene Methode der kovalenten Immobilisierung auf der Oberfläche nicht spezifisch für die dafür vorgesehenen reaktiven Gruppen, so daß die Immobilisierung auch an anderen Gruppen innerhalb der Sonde erfolgt. Falls sich die Immobilisierungsstelle zwischen der Spaltstelle und der Markierung befindet, verbleibt die Markierung auch nach der Spaltung an der Oberfläche. Somit ist eine quantitative Entfernung der Markierung von Sonden, an die keine Targets hybridisiert haben, von der Oberfläche nicht möglich, wodurch wiederum ein hoher Hintergrund erzeugt wird. Eine ebenfalls in US 4,876,187 beschriebene nicht kovalente Immobilisierung hat sich als nicht stabil erwiesen, so daß bereits ohne Schneiden Sonden in die Lösung entlassen werden und eventuell fälschlicherweise negative Meßergebnisse geliefert werden. Das in US 4,876,187 beschriebene Verfahren hat folglich aufgrund der damit vorstehend genannten Probleme keine praktische Bedeutung.

Die in US 4,775,619 und US 5,118,605 beschriebenen Verfahren umgehen die vorstehend beschriebene Problematik des hohen Hintergrundes durch Durchführung eines sogenannten inversen Assays. Dabei führt die Hybridisierung eines Targets mit einer immobilisierten und markierten Sonde zur Bildung einer labilen Bindung zwischen Oberfläche und Markierung, wie beispielsweise einer Restriktase-Schnittstelle oder einer chemisch labilen Einzelstrangregion. Die Spaltung dieser labilen Bindung führt zum Ablösen der Markierung, welche dann in der Lösung quantifiziert wird. Eine derartige Vorgehensweise ist für Array-Verfahren nicht praktikabel, da eine räumliche Auflösung nicht mehr gewährleistet ist, wenn die Detektion nicht über auf einer Oberfläche immobilisierte Markierungen erfolgt.

Die Übertragung der in US 4,775,619 und US 5,118,605 beschriebenen Methode auf Array-Anwendungen durch eine Aufnahme des Arrays vor der Wechselwirkung mit den Targets und nach dem Entfernen der Markierungen, womit eine Wechselwirkung für solche Sonden festgestellt wird, an denen nach der Inkubation mit Targets und dem Spalten der labilen Bindung kein Signal detektierbar ist, ist ebenfalls nicht möglich, da die Sondenkonzentrationen üblicherweise wesentlicher höher sind als die Konzentrationen der nachzuweisenden Targets und somit auch auf Array-Elementen, an denen einige der Markierungen aufgrund der Hybridisierung der Sonden mit den Targets abgespalten wurden, ein starkes Signal detektiert wird. Ein spezifischer Nachweis insbesondere von Targetmolekülen in geringer Konzentration ist auf diese Weise nicht möglich.

In US 5,367,066, US 5,552,538 und US 5,578,717 ist die Struktur und Synthese von Oligonukleotiden mit chemisch oder physikalisch spaltbaren Bindungen zum Einsatz bei Hybridisierungsassays, beispielsweise in den in US 4,775,619 und US 5,118,605 beschriebenen Assays, offenbart. Die Spaltbarkeit der Oligonukleotidsonden wird teilweise durch Einführen sperriger Seitengruppen erreicht, die jedoch das Hybridisierungsverhalten der Sequenzen nachteilig beeinflussen. Des weiteren ist die Synthese der dort beschriebenen Oligonukleotidbausteine kompliziert und insbesondere nicht direkt in die Standard-DNA-Synthesechemie zum Aufbau der Oligonukleotidsonden zu integrieren. Schließlich ist die Handhabbarkeit der Verbindungen aufgrund ihrer teilweisen Lichtempfindlichkeit stark eingeschränkt. Bekanntermaßen ist die Effizienz photochemischer Spaltungen nicht quantitativ.

Der vorliegenden Erfindung liegt somit die Aufgabe zugrunde, ein einfaches Verfahren zum Nachweis von molekularen Targets mit Hilfe von Sonden-Arrays zur Verfügung zu stellen, bei dem auf eine Markierung der Targets verzichtet werden kann und das die vorstehend beschriebenen Nachteile der Verfahren des Stands der Technik überwindet.

Des weiteren ist es eine Aufgabe der vorliegenden Erfindung Sonden-Arrays bereitzustellen, bei denen die Markierung durch Spaltung einer labilen Bindung effizient und selektiv von solchen Sonden entfernt werden kann, an denen keine spezifischen Wechselwirkungen mit Targets stattgefunden haben, insbesondere auch dann, wenn die Sonden auf einer Oberfläche immobilisiert sind.

Ferner ist es eine Aufgabe der vorliegenden Erfindung Sonden-Arrays bereitzustellen, bei denen die labilen Bindungen in den Sonden derart beschaffen sind, daß sie die Spezifität der Wechselwirkung zwischen Sonden und Targets nicht oder nur gering beeinflussen.

Ein weiteres Problem der im Stand der Technik beschriebenen Array-Experimente ist, daß der mit ihnen erreichte Standardisierungsgrad unbefriedigend ist. Beispielsweise sind in der Regel von unterschiedlichen Laboratorien durchgeführte Experimente nicht miteinander vergleichbar, so daß deren Daten nicht gesammelt und in gemeinsamen Analyse unterzogen werden können. Selbst die Vergleichbarkeit von Experimenten, die in einem Labor mit unterschiedlichen Arrays des gleichen Layouts bzw. unterschiedlichen, aber gleich aufgearbeiteten Proben ausgeführt wurden, ist nur bedingt gegeben (siehe z.B. Schuchhardt, J.; Beule, D.; Malik, A.; Wolski, E.; Eickhoff, H.L.; Herzel, H., Nucleic Acids Research, 2000, Vol. 28, No. 1, E47; Draghici, S.; Kuklin, A.; Hoff, B.; Shams, S. Drug Discovery & Development 2001, Vol. 4, No.3, 332; Zien A., Aigner T., Zimmer R., Lengauer T., Bioinformatics 2001 Jun;17:S323-5331; Tseng G.C., Oh M.K., Rohlin L., Liao J.C., Wong W.H. Nucleic Acids Res 2001 Jun 15;29(12):2549-2557, Lockhart D.J., Winzeler E.A., Nature 2000 Jun 15;405(6788):827-836).

Eine Ursache für die schlechte Standardisierbarkeit der Array-basierten Nachweisverfahren des Stands der Technik ist die schwankende Qualität der hergestellten Arrays. Insbesondere ist es in der Regel nicht möglich, die Qualität der hergestellten Arrays vor Durchführung des Experiments zu ermitteln und in die anschließende Auswertung mit einzubeziehen. Dies führt zwangsläufig zu erheblichen Fehlern.

Eine zweite Fehlerquelle für die Standardisierung von Meßergebnissen aus Array-Experimenten entsteht, falls das Nachweisverfahren auf der Markierung von Targets beruht. Unabhängig von der Methode ist die Targetmarkierung ein schlecht standardisierbarer Prozeß, der allein schon aufgrund der nicht erfaßbaren Schwankungen in der Qualität des Ausgangsmaterials mit ganz unterschiedlicher Effizienz abläuft und zusätzlich von der Qualität von Enzymen, Monomeren, markierten Bausteinen u.a. beeinflußt wird.

Im folgenden werden Ansätze beschrieben, mit denen Arrayexperimente zumindest teilweise normiert werden können. In US 5,800,992 wird ein Verfahren beschrieben, bei dem zwei unterschiedlich markierte Proben gegen ein und dasselbe Array hybridisiert werden. Eine Probe dient dabei als Referenz. Das Verfahren normiert dadurch gegen Schwankungen in der Spot-Qualität. In Bezug auf die unterschiedliche Markierungseffizienz wird allerdings nur bedingt eine Normierung erreicht, da man lediglich eine nicht klar definierte Probe, die zu untersuchende Probe, gegen eine andere nicht klar definierte Probe, die Referenz, normiert. Als weiterer Nachteil ergibt sich, daß die unterschiedliche Markierung beider Proben eine unterschiedliche Effizienz des Einbaus der Farbstoffe, eine unterschiedliche Quantenausbeute, Quenching und eine unterschiedliche Abhängigkeit zwischen Fluoreszenz und Konzentration zur Folge hat. Diese Unterschiede in den biochemischen und physikalischen Eigenschaften stellen weitere Fehlerquellen bei der Normierung dar.

Ein weiterer Ansatz wird in Selinger D.W., Cheung K.J., Mei R., Johansson E.M., Richmond C.S., Blattner F.R., Lockhart D.J., Church G.M., Nat. Biotechnol. 2000 Dec; 18(12):1262-8 beschrieben. Hier wird versucht, sowohl gegen Schwankungen der Spot-Qualität als auch gegen Schwankungen in der Qualität der Markierung des Targets zu normalisieren. Eine Normalisierung gegen die unterschiedliche Markierungseffizienz wird erreicht, indem der Probe extern erzeugte Targets abgestufter bekannter Konzentration, sog. Spiking-Targets, in einem bestimmten Mengenverhältnis zugegeben werden. Auf dem Array werden zusätzlich gegen diese Spiking-Targets gerichtete Oligonukleotide angeordnet, deren Intensität nach erfolgter Hybridisierung zur Chip zu Chip-Normierung eingesetzt werden können. Der Nachteil dieser Vorgehensweise besteht darin, daß bestimmte Einschränkungen der Probenqualität, die die Markierungseffizienz senken, wie beispielsweise eine Fragmentierung der Nukleinsäure oder eine Komplexierung mit Proteinen, nicht mit den Spiking-Sonden erfaßt werden.

Eine Normalisierung gegen Schwankungen der Spot-Qualität soll bei Selinger et al. dadurch erreicht werden, daß mit einem bestimmten Oligonukleotid bestückte Spots, sog. Eichspots, über das gesamte Array verteilt werden. Ein dazu komplementäres Oligonukleotid wird dem Sample zugegeben. Die Intensität der Eichspots wird gemessen und die Abweichung eines jeden Eichspots von der durchschnittlichen Eichspotintensität wird verwendet, um einen Faktor zu ermitteln, der bei der Berechnung der Ergebnisse aller anderen Spots miteinbezogen wird. In den auf jeden Spot anzuwendenden Faktor geht zusätzlich die Entfernung zum Eichspot ein. Diese Vorgehensweise ist äußerst kompliziert und hat den Nachteil, daß nur globale Schwankungen der Spotqualität über die Fläche erfaßt werden. Qualitätsprobleme, die nur einzelne Spots betreffen und keine Auswirkungen auf die Qualität der Nachbarspots besitzen, können mit dieser Methode nicht erfaßt werden.
Gegenwärtig ist somit kein Verfahren verfügbar, das sowohl die mit der Markierung der Targetmoleküle verbundenen Fehler vermeidet als auch das Einbeziehen der Arrayqualität auf Spotebene in die Auswertung von Arrayexperimenten gestattet.

Deswegen besteht eine weitere Aufgabe der vorliegenden Erfindung in der Bereitstellung von Sonden-Arrays, deren Aufbau eine standardisierte qualitative und gegebenenfalls quantitative Auswertung der Array-Experimente gestattet, die die bislang bekannten Möglichkeiten übertrifft.

Eine weitere Aufgabe der vorliegenden Erfindung besteht darin, ein Verfahren zur Herstellung von Sonden-Arrays bereitzustellen, das eine effiziente, homogene und/oder parallele Synthese der Sonden gewährleistet und insbesondere möglichst nicht durch den Einbau von labilen Bindungen in die Sondenmoleküle beeinflußt wird.

Bei der Herstellung von Sonden-Arrays werden derzeit zwei prinzipiell unterschiedliche Verfahren angewendet. Bei einer Methode werden separat synthetisierte Sonden, beispielsweise Oligonukleotide, mit Hilfe von Automaten, sogenannten Spottern, die das ortsspezifische Ablegen kleinster Flüssigkeitsmengen gewährleisten, auf Oberflächen aufgebracht und kovalent oder nicht kovalent mit dieser verknüpft. Das Verfahren arbeitet seriell. Jeder Spot wird individuell mit der Sonde bestückt. Die Qualität der einzelnen Spots ist von einer Vielzahl von Faktoren abhängig, die im Verlauf des seriellen Fertigungsprozesses variieren, so daß sich die einzelnen Spots in ihren Eigenschaften in nicht voraussagbarer Weise unterscheiden.

Alternativ werden DNA-Arrays durch ortsspezifische in situ-Synthese der Sonden, beispielsweise der Oligonukleotidsonden erzeugt. Die Synthese erfolgt parallel, beispielsweise im Wafermaßstab. Das Monitoring der Syntheseeffizienz an jedem einzelnen Array-Element gestaltet sich bei diesem hochparallelen, häufig im Wafermaßstab ausgeführten Verfahren als schwierig. Klassische Monitoring-Ansätze wie beispielsweise Trityl-Monitoring erweisen sich als untauglich, da sie nur ein summarisches Bild der Kopplungseffizienz über den gesamten Wafer abgeben.

Bei beiden vorstehend beschriebenen Herstellungsverfahren kann eine Aussage zur Qualität der erzeugten Arrays erst nach deren Fertigstellung erfolgen. Dazu werden beispielsweise zumindest stichprobenartig Chips einer Charge mit einer Standardprobe hybridisiert und die Chipqualität anhand der Hybridisierungssignale ermittelt. Nachteilig an diesem Verfahren ist, daß bei stichprobenartiger Hybridisierung keine sichere Aussage zur Qualität jedes einzelnen Chips gemacht werden können: Würde mit jedem einzelnen Chip eine Probehybridisierung durchgeführt werden, müßten deren Signale nach Auswertung durch ein geeignetes Verfahren wieder beseitigt werden.

Einen alternativen Ansatz zur Qualitätskontrolle von Arrays, die durch Synthese erzeugt wurden, wurde von M. Beier und J.D. Hoheisel, Nucleic Acids Res. 2000, Vol. 28, No.4 beschrieben. Gemäß dieser Veröffentlichung wird im Anschluß an die Synthese der Oligonukleotide auf der Arrayoberfläche ein Farbstoff über einen labilen Linker gekoppelt. Die an den einzelnen Spots ermittelte Signalintensität ist ein Maß für die Syntheseausbeute. Nachteil dieses Verfahrens ist, daß die Markierung vor dem Hybridisierungsassay entfernt werden muß und nicht gleichzeitig zur Detektion von Hybridisierungsereignissen verwendet werden kann.

Deshalb besteht eine weitere Aufgabe der vorliegenden Erfindung darin, ein Verfahren bereitzustellen, mit dem die Qualität jedes einzelnen Arrays ohne die Notwendigkeit weiterer Verfahrensschritte wie Probehybridisierungen sofort nach dessen Herstellung untersucht werden kann.

Diese und weitere Aufgaben der vorliegenden Erfindung werden durch die Bereitstellung der in den Patentansprüchen gekennzeichneten Ausführungsformen gelöst.

Die vorliegende Erfindung betrifft Sonden-Arrays, mit denen unterschiedliche Wechselwirkungen zwischen Sonden- und Targetmolekülen auf Sonden-Arrays hochspezifisch, hochsensitiv und quantitativ nachgewiesen werden können.

Die auf dem erfindungsgemäßen Sonden-Array angeordneten Sondenmoleküle, die dem Nachweis der molekularen Wechselwirkungen mit den Targetmolekülen dienen, umfassen mindestens eine Markierung, d.h. eine detektierbare Einheit, oder eine Ankergruppe, an die eine detektierbare Einheit gekoppelt werden kann, sowie mindestens eine Sollbruchstelle, d.h. eine labile bzw. selektiv spaltbare Bindung, die spezifisch destabilisiert bzw. gespalten werden kann.

Die Markierung, mit der Sonden im Verlauf ihrer Herstellung bzw. im Verlauf der Herstellung des Sonden-Arrays verknüpft worden sind, kann vorzugsweise in jeder Phase der Verwendung des Arrays detektiert werden, d.h. auch vor der Inkubation des Arrays mit der zu untersuchenden Probe, und erlaubt dadurch unter anderem eine Einschätzung der Qualität der hergestellten Arrays, indem die Belegungsdichte jedes einzelnen Array-Elemente nach der Array-Herstellung und vor ihrer Verwendung zum Nachweis von Targetmolekülen ermittelt werden kann. Ein weiterer Vorteil der erfindungsgemäßen Sonden-Arrays ist, daß die für die Qualitätskontrolle verwendeten Signale vor dem eigentlichen Array-Experiment nicht beseitigt werden müssen, sondern vielmehr die Basis für die Detektion spezifischer Wechselwirkungen bilden.

Die zwischen der Markierung und der Position der Verknüpfung der Sonden mit der Array-Oberfläche angeordnete selektiv spaltbare Bindung ermöglicht, daß die für die Qualitätskontrolle verwendete Markierung bzw. detektierbare Einheit auch zum spezifischen Nachweis der molekularen Wechselwirkung zwischen Sonden und Targets eingesetzt werden kann. Dabei ist die Sollbruchstelle bzw. selektiv spaltbare Bindung innerhalb des Sondenmoleküls so positioniert, daß ein Bruch der Bindung zum Ablösen der detektierbaren Einheit bzw. der Ankergruppe mit der detektierbaren Einheit von der Array-Oberfläche führt. Dagegen bleiben solche Markierungen mit der Array-Oberfläche verknüpft, deren Sondemoleküle spezifisch mit Targetmolekülen wechselgewirkt haben, da das mit der Markierung verknüpfte Spaltprodukt der Sonde bzw. Sondenfragment über die Wechselwirkung mit dem Target mit dem zweiten Spaltprodukt der Sonde, das auf der Oberfläche des Arrays immobilisiert ist, gekoppelt bleibt.

Die Sondenmoleküle des erfindungsgemäßen Sonden-Arrays umfassen folglich eine selektiv spaltbare Bindung, die derart beschaffen ist, daß ihre Spaltung zu einem Ablösen der Markierung von Sondenmolekülen führt, an denen keine spezifischen Wechselwirkungen mit Targetmolekülen stattgefunden haben.

Der Aufbau des erfindungsgemäßen Sonden-Arrays ermöglicht eine wesentliche Vereinfachung von Assays zum Nachweis von Targets in einer zu untersuchenden Probe. Der Nachweis der spezifischen Wechselwirkung zwischen Sonde und Target erfolgt über bereits bei der Herstellung der Sonden-Arrays angebrachte Markierungen. Damit kann auf eine Markierung der Targets, die in der Regel einen kosten- und arbeitsaufwendigen Prozeß darstellt und ferner häufig nicht ausreichend effizient und homogen ist, verzichtet werden.

Ferner wird durch das erfindungsgemäße Sonden-Array gewährleistet, daß die von der Markierung der Targetmoleküle und damit von den Targetmolekülen als solches abhängigen mehrstufigen Array-basierten Nachweisverfahren in einen homogenen, von den Target-Molekülen vollständig unabhängigen Array-basierten Assay überführt werden können. Daraus ergibt sich eine deutliche Erweiterung des Einsatzbereiches von Array-basierten Analysen.

Über eine Normierung der Signale durch Verwendung von internen, insbesondere nicht abspaltbaren Kontrollmarkierungen können die erfindungsgemäßen Sonden-Arrays ferner auch für quantitative Assays eingesetzt werden.

Im Rahmen der vorliegenden Erfindung werden die folgenden Begriffe und Definitionen verwendet:

Unter einer Sonde bzw. einem Sondenmolekül wird im Rahmen der vorliegenden Erfindung ein Molekül verstanden, das zum Nachweis anderer Moleküle durch ein bestimmtes, charakteristisches Bindungsverhalten bzw. eine bestimmte Reaktivität verwendet wird. Für die auf dem Array angeordneten Sonden mit selektiv spaltbarer Bindung kommt jede Art von Molekülen in Frage, die sich an feste Oberflächen koppeln lassen und eine spezifische Affinität aufweisen. In einer bevorzugten Ausführungsform handelt es sich um Biopolymere aus den Klassen der Peptide, Proteine, Nukleinsäuren und/oder deren Analoga. Besonders bevorzugt sind die spaltbaren Sonden Nukleinsäuren und/oder Nukleinsäureanaloga. Als Nukleinsäuren können sowohl DNA- als auch RNA-Moleküle verwendet werden.

Unter einem Target bzw. einem Targetmolekül wird im Rahmen der vorliegenden Erfindung das mit einer molekularen Sonde nachzuweisende Molekül verstanden. Bei einer bevorzugten Ausführungsform der vorliegenden Erfindung handelt es sich bei den zu detektierenden Targets um Nukleinsäuren. Der erfindungsgemäße Sonden-Array kann jedoch analog zum Nachweis von Protein/Sonden-Wechselwirkungen, Antikörper/Sonden-Wechselwirkungen, usw. eingesetzt werden.

Unter einer selektiv spaltbaren Bindung wird im Rahmen der vorliegenden Erfindung eine Bindung verstanden, die sich von anderen im Sondenmolekül vorliegenden Bindungen derart unterscheidet, daß sie unter bestimmten Bedingung spezifisch gespalten werden kann, ohne daß die anderen Bindungen, insbesondere die Bindungen des Rückgrats der Sondenmoleküle beeinträchtigt werden. Vorzugsweise wird die selektiv spaltbare Bindung durch Substitution eines oder zweier Atome, ggf. auch drei, vier, fünf oder mehrerer Atome, in mindestens einem für den Aufbau der Sonden verwendeten Monomerbaustein erzeugt. Die Substitution erfolgt vorzugsweise im Rückgrat der Polymerkette, so daß die Erkennung der Targets durch die funktionellen Gruppen der Sonden, z.B. durch die Nucleobasen im Fall von Oligonukleotidsonden, nicht beeinträchtigt wird. So werden z.B. im Fall von Oligonukleotidsonden vorzugsweise nur ein oder zwei Atome eines Nukleotidbausteins, besonders bevorzugt in der Phosphatgruppe des Nukleotids, substituiert, beispielsweise O durch S, und so eine selektiv spaltbar Bindung bereitgestellt. So kann beispielsweise bei der Verwendung von Nukleinsäuren als Sonden eine selektiv spaltbare Bindung gespalten werden, ohne die Phosphodiesterbindungen der Sonde zu spalten. Die selektiv spaltbare Bindung wird im Rahmen der vorliegenden Erfindung auch als labile Bindung oder Sollbruchstelle bezeichnet.

Unter einem Sample bzw. einer Probe wird im Rahmen der vorliegenden Erfindung ein komplexes Gemisch verstanden, das eine Vielzahl von Targets enthält.

Eine Markierung bezeichnet im Rahmen der vorliegenden Erfindung eine detektierbare Einheit, beispielsweise ein Fluorophor, oder eine Ankergruppe, an die eine detektierbare Einheit gekoppelt werden kann.

Unter einem Sonden-Array wird im Rahmen der vorliegenden Erfindung eine Anordnung von molekularen Sonden auf einer Oberfläche verstanden, wobei die Position einer jeden Sonde separat bestimmt ist. Insbesondere wird im Rahmen der vorliegenden Erfindung unter einem Sonden-Array ein Biochip bzw. Microarray verstanden, der eine hohe Dichte an Array-Elementen aufweist und somit die gleichzeitige Untersuchung einer Vielzahl von Sonden-Target-Wechselwirkungen ermöglicht (sog. Hochdichte-Arrays oder Microarrays). Vorzugsweise können Arrays mehr als 100, besonders bevorzugt mehr als 1000 und mehr als 10.000 Sonden-Spots und auch bis zu mehr als 100.000 Sonden-Spots pro Chip bzw. Träger umfassen. Solche Chips bzw. Träger sind kommerzielle erhältlich und auch in der hier genannten Literatur beschrieben (siehe als Überblick auch Science (2002) 295, S. 160-172).

Unter einem Array-Element wird im Rahmen der vorliegenden Erfindung ein bestimmtes Areal auf einer Oberfläche verstanden, auf dem eine einheitliche Zusammensetzung von Sonden angeordnet ist, wobei die Summe aller belegten Array-Elemente das Sonden-Array ist.

Der erfindungsgemäße Sonden-Array zum qualitativen und/oder quantitativen Nachweis von Targets aus einer Probe durch molekulare Wechselwirkungen zwischen Sondenmolekülen und Targetmolekülen auf dem Sonden-Array umfaßt eine Array-Oberfläche sowie an definierten Stellen auf der Array-Oberfläche immobilisierte Sondenmoleküle. Wesentliche Merkmale des erfindungsgemäßen Sonden-Arrays sind, daß die Sondenmoleküle mindestens eine Markierung aufweisen und innerhalb des Sondenmoleküls zwischen der Stelle ihrer Immobilisierung auf der Array-Oberfläche und der Markierung mindestens eine selektiv spaltbare Bindung aufweisen.

Bei einer besonders bevorzugten Ausführungsform des erfindungsgemäßen Sonden-Arrays sind die Sonden Oligonukleotide, die innerhalb ihrer Nukleotidsequenz eine selektiv spaltbare Bindung aufweisen. Beispielsweise kann es sich bei den Oligonukleotidsonden um Oligonukleotide mit einer Länge von 10 bis 100 Basen, vorzugsweise 15 bis 50 Basen und besonders bevorzugt von 20 bis 30 Basen Länge handeln, die auf der Array-Oberfläche immobilisiert sind.

Die im Rahmen der vorliegenden Erfindung eingesetzten selektiv spaltbaren Bindungen zeichnen sich dadurch aus, daß sie das Hybridisierungsverhalten der Sonden, insbesondere deren Spezifität und/oder Affinität für bestimmte Targetmoleküle, nicht oder nur gering beeinflussen. Des weiteren umfassen die Sondenmoleküle des erfindungsgemäßen Sonden-Arrays vorzugsweise labile Bindungen, die unter Bedingungen gespalten werden können, die die Wechselwirkung zwischen Sonde und Target nicht negativ beeinflussen und/oder die nach der Spaltung keine Verknüpfung des markierten Sondenfragments mit der Array-Oberfläche verursachen.

Ferner sind die selektiv spaltbaren Bindungen vorzugsweise derart beschaffen, daß sie auch dann effektiv spaltbar sind, wenn die Sonden an der Array-Oberfläche immobilisiert sein.

Die selektiv spaltbare Bindung des erfindungsgemäßen Sonden-Arrays kann vorzugsweise durch chemische und/oder physikalische Methoden selektiv gespalten werden.

Eine effiziente Spaltung an der Oberfläche ist insbesondere durch Agenzien mit geringem Ausmaß wie Atome und Ionen gewährleistet. Vorzugsweise ist die labile Bindung deshalb durch einfache chemische Agenzien selektiv spaltbar, beispielsweise durch Zugabe von Ionen, besonders bevorzugt von Säureanionen, Basekationen, Fluorid- und/oder Schwermetallionen wie Quecksilber- und/oder Silberionen.

Im Falle der Herstellung der Arrays durch Immobilisierung von separat synthetisierten Oligonukleotiden ist die selektiv spaltbare Bindung unter den Bedingungen, die bei der Immobilisierung der Sonden auf der Array-Oberfläche angewendet werden, stabil. Erfolgt die Herstellung der Sonden in situ durch ortsspezifische Synthese auf der Array-Oberfläche, ist es bevorzugt, daß die labile Bindung im Rahmen des Syntheseverlaufes effizient erzeugt werden kann. Besonders bevorzugt ist die Bereitstellung der labilen Bindung mittels Phosphoamiditchemie. Gleiches gilt im übrigen für den Einbau der detektierbaren Einheit.

Folglich ist es bevorzugt, daß die selektiv spaltbare Bindung in einer Nukleinsäure vorliegt, die durch herkömmliche DNA- oder RNA-Synthese hergestellt werden kann. Besonders bevorzugt umfassen die Sondenmoleküle des erfindungsgemäßen Sonden-Arrays eine Nukleinsäure der Formel A₁-S-A₂, wobei S eine Nukleinsäure bzw. ein Nukleotidbaustein ist, die bzw. der mindestens eine selektiv spaltbare Bindung umfaßt, und A₁ und A₂ beliebige Nukleinsäuren oder Nukleinsäureanaloga sind. Über eine der beiden Nukleinsäuren oder Nukleinsäureanaloga A₁ und A₂ ist das Sondenmolekül auf der Oberfläche des erfindungsgemäßen Sonden-Arrays immobilisiert, während die andere mindestens eine Markierung aufweist. S ist vorzugsweise ein Nukleotid-Dimer, das durch eine selektiv spaltbare Bindung verbrückt ist.

Beispiele für besonders bevorzugte DNA-Nukleotid-Bausteine S, die eine selektiv spaltbare Bindung umfassen, sind in der folgenden Formel I angegeben:

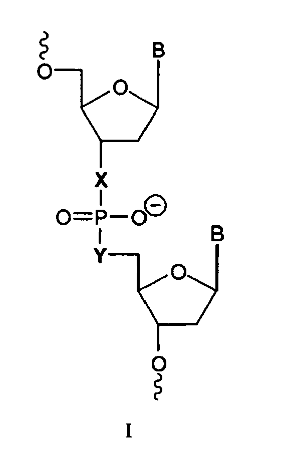

Dabei kann X und Y unabhängig voneinander ausgewählt werden aus der Gruppe vorzugsweise bestehend aus O, NH und S, wobei X und Y nicht gleichzeitig O sind.

B steht für eine Nucleobase wie die Purin-Derivate Adenin und Guanin sowie die Pyrimidine Cytosin und Thymin.

Die selektiv spaltbare Bindung innerhalb der Nukleotidsequenz derartiger Oligonukleotidsonden ist vorzugsweise eine Phosphothioatbindung oder eine Phosphoramidatbindung. Besonders bevorzugt ersetzt die Phosphothioatbindung, d.h. eine Zucker-O-P-S-Zucker-Bindung eine Phosphodiesterbindung, d.h. eine Zucker-O-P-O-Zucker-Bindung eines unmodifizierten Oligonukleotids. In dieser Ausführungsform sind zwei Nukleoside durch eine Phosphothioatbindung verbunden.

Alternativ kann die selektiv spaltbare Bindung innerhalb der Nukleotidsequenz auch eine andere Schwefel- oder Stickstoff-modifizierte Esterbindung wie beispielsweise eine Phosphonothioat-Bindung sein.

Weitere Beispiele für die Bereitstellung von selektiv spaltbaren Bindungen in den Sondenmolekülen des erfindungsgemäßen Sonden-Arrays sind Amid-, 1,2-Diol-, Disulfid- und/oder Sulfonyl-Gruppen sowie weitere Gruppen, die in US 5,118,605 beschrieben sind und unter den dort genannten Bedingungen spaltbar sind. Diese Gruppen sind allerdings weniger bevorzugt, da u.a. ihre Inkorporation in Oligonukleotidsonden mittels herkömmlicher Nukleinsäure-Synthese nicht möglich ist.

Alternativ können auch physikalische Methoden zur Spaltung der selektiv spaltbaren Bindung in den Sondenmolekülen eingesetzt werden. So kann die selektiv spaltbare Bindung beispielsweise photolytisch selektiv gespalten werden. Nukleotidbausteine, die eine photolytisch selektiv spaltbare Bindung umfassen und für die Synthese der Sondenmoleküle des erfindungsgemäßen Sonden-Arrays eingesetzt werden können, sind beispielsweise in US 5,367,066, US 5,552,538 und US 5,578,717 beschrieben.

Weitere Beispiele für besonders bevorzugte RNA-Nukleotid-Bausteine, die eine chemisch oder physikalisch selektiv spaltbare Bindung umfassen, sind in der folgenden Formel II angegeben:

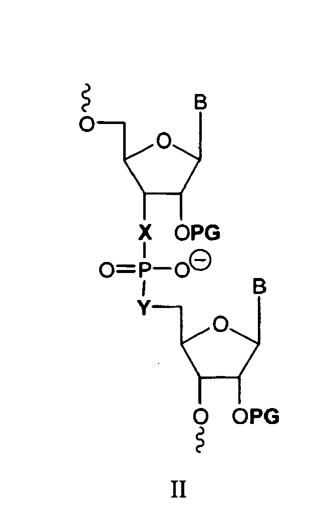

Dabei kann X und Y unabhängig voneinander ausgewählt werden aus der Gruppe vorzugsweise bestehend aus O, NH und S, wobei X und Y nicht gleichzeitig O sind, wenn PG keine labile Schutzgruppe ist.

PG wird vorzugsweise ausgewählt der Gruppe bestehend aus H und labilen Schutzgruppen wie 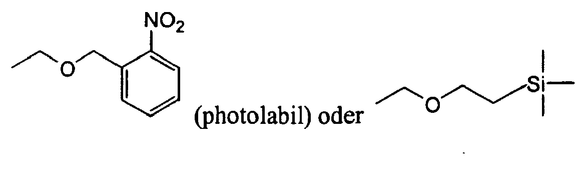 (labil z.B. gegen Fluorionen).

B steht in Formel II für eine Nucleobase wie die Purin-Derivate Adenin und Guanin sowie die Pyrimidine Cytosin und Uracil.

Ein weiterer Gegenstand der vorliegenden Erfindung ist somit die Verwendung von RNA-Nukleotidbausteinen mit selektiv spaltbaren Bindungen, insbesondere von photolabilen RNA-Nukleoitdbausteinen, als Baustein von DNA-Oligonukleotidsonden. Mit derartigen photolabilen RNA-Nukleoitdbausteinen wird eine photolytisch selektiv spaltbare Gruppe bereitgestellt. Die photolytische Spaltung erfolgt vorzugsweise im basischen Milieu, besonders bevorzugt bei einem pH größer 10.

Bevorzugt sind allerdings Sondenmoleküle mit selektiv spaltbaren Bindungen, die unter normalen atmosphärischen, Temperatur- und Licht-Bedingungen stabil sind.

Bei einer alternativen Ausführungsform ist die labile Bindung selektiv durch enzymatische Methoden spaltbar. Beispiele für Nukleoditbausteine, die derartige labile Bindungen umfassen, sind in US 4,775,619 und US 4,876,187 beschrieben. Enzymatische Methoden zur Spaltung der selektiv spaltbaren Bindung sind allerdings im Rahmen der vorliegenden Erfindung weniger bevorzugt, da enzymatische Aktivitäten durch die Nähe der selektiv spaltbaren Bindung zur Oberfläche aufgrund der Immobilisierung der Sondenmoleküle stark behindert werden. Folglich weist eine enzymatische Spaltungsreaktion nur eine sehr niedrige Effizienz auf, was einen unerwünschten hohen Signalhintergrund durch fälschlicherweise positive Meßergebnisse zur Folge hat. Somit kann bei einer bevorzugten Ausführungsform des erfindungsgemäßen Sonden-Arrays die selektiv spaltbare Bindung nicht durch enzymatische Methoden selektiv gespalten werden.

Bei einer weiteren bevorzugten Ausführungsform des erfindungsgemäßen Sonden-Arrays befindet sich die selektiv spaltbare Bindung ungefähr in der Mitte zwischen der Stelle der Immobilisierung der Sonde auf der Array-Oberfläche und der Position der Markierung der Sonde. Somit wird gewährleistet, daß die Wahrscheinlichkeit der Wechselwirkung des Targets mit dem immobilisierten Sondenfragment, welches dem nach der Bindungsspaltung an der Oberfläche verbleibenden Rest der Sonde entspricht, wesentlich vermindert bzw. nahezu ausgeschlossen ist. Befindet sich die selektiv spaltbare Bindung dagegen zu nahe an der Array-Oberfläche, so ist der Komplex aus Sonden- und Targetmolekül nach der Spaltung nicht mehr ausreichend stabilisiert, da die Hybridisierung des Targets mit dem an der Array-Oberfläche immobilisierten Sondenfragment nicht stabil genug ist. Dies würde zu fälschlicherweise negativen Meßergebnissen führen.

Bei einer bevorzugten Ausführungsform des erfindungsgemäßen Sonden-Arrays kann die selektiv spaltbare Bindung quantitativ gespalten werden. Somit wird gewährleistet, daß die Markierungen von denjenigen Sonden vollständig entfernt werden, an denen keine Wechselwirkung mit den nachzuweisenden Targets stattgefunden hat. Dagegen bleiben solche Markierungen mit der Array-Oberfläche verknüpft, deren Sonden spezifisch mit Targets wechselgewirkt haben, da das mit der Markierung verknüpfte Spaltprodukt der Sonde über die Wechselwirkung mit dem Target mit dem zweiten Spaltprodukt der Sonde, das weiterhin auf der Oberfläche des Arrays immobilisiert ist, gekoppelt bleibt.

Ferner ist es bevorzugt, daß die selektiv spaltbare Bindung in den Sonden derart beschaffen ist, daß sie die molekulare Wechselwirkung zwischen Sonden und Targets nicht beeinträchtigt. So ist gewährleistet, daß die Spezifität des Nachweises nicht durch die Modifizierung von Sondenmoleküle unter Einführung einer selektiv spaltbaren Bindung vermindert wird.

Des weiteren ist es bevorzugt, daß die selektiv spaltbare Bindung derart beschaffen ist, daß die Wechselwirkung zwischen Sonden und Targets während der selektiven Spaltung der selektiv spaltbaren Bindung vollständig erhalten bleibt.

Bei einer Ausführungsform des erfindungsgemäßen Sonden-Arrays weisen alle Sonden auf dem Sonden-Array sowohl mindestens eine spaltbare Bindung als auch mindestens eine Markierung auf. Bei weiteren Ausführungsformen kann es bevorzugt sein, daß mindestens eine Sonde sowohl mindestens eine spaltbare Bindung als auch mindestens eine Markierung aufweist, während andere Sonden nur mindestens eine Markierung oder nur mindestens eine spaltbare Bindung oder weder eine Markierung noch eine spaltbare Bindung aufweisen.

Vorzugsweise sind auf mindestens einem Array-Element des Sonden-Arrays Sondenmoleküle angeordnet, die keine selektiv spaltbare Bindung aufweisen. Bei dieser bevorzugten Ausführungsform weisen alle Sonden des Sonden-Arrays eine Markierung auf. Ein Teil der Sonden verfügt zusätzlich über eine labile Bindung, während zu Standardisierungszwecken eingesetzte Sonden keine spaltbare Bindung aufweisen. Letztere werden im Verlauf des Assays ihre Markierung nicht durch spezifische Spaltung der labilen Bindung verlieren. Da sie jedoch allen Schritten des Assays ausgesetzt sind, unterliegen sie wie alle anderen Sonden der mit diesen Schritten verbundenen unspezifischen Abnahme des Markierungssignals. Folglich können diese Sonden als Standards dienen, deren Signale die Obergrenze der nach dem Assay zu detektierenden Signale und damit die Obergrenze des dynamischen Bereiches der Analyse liefern. Diese Sonden können folglich zur Normierung verschiedener Experimente untereinander eingesetzt werden.

Bei einer besonders bevorzugten Ausführungsform sind die nicht mit einer selektiv spaltbaren Bindung versehenen Sondenmoleküle auf verschiedenen Array-Elementen angeordnet, die sich in ihrem Markierungsgrad unterscheiden. So können einige Array-Elemente ausschließlich markierte Sonden enthalten, während in anderen Array-Elementen ein Gemisch aus markierten und nicht markierten Sonden angeordnet ist. Besonders bevorzugt liegen die mit einem Gemisch aus markierten und unmarkierten Sonden versehenen Array-Elemente in Form einer Verdünnungsreihe vor. Das bedeutet, daß sich die jeweiligen Array-Elemente im Verhältnis von markierten zu unmarkierten Sonden charakteristisch und definiert unterscheiden.

Im Falle von erfindungsgemäßen Arrays, die durch Immobilisierung separat synthetisierter Sonden erzeugt werden, kann der unterschiedliche Markierungsgrad durch Mischung von markierten und unmarkierten Sonden vor deren Immobilisierung erreicht werden. Bei Arrays, die durch in situ-Synthese erzeugt werden, kann beispielsweise das die Markierung bewirkende Monomere während der Kopplung mit einem unmarkierten Monomer gleicher Reaktivität gemischt werden.

Die einen abgestuften Markierungsgrad aufweisenden Array-Elemente können zur Normierung des Experimentes eingesetzt werden. Zum einen repräsentieren sie die obere und untere Grenze des detektierbaren Bereichs. Zum anderen können im Rahmen der Auswertung die an den Array-Elementen ermittelten Signalintensitäten gegen den Markierungsgrad der Sonden aufgetragen werden, so daß eine Kennlinie des Array-Experimentes entsteht, gegen die die experimentellen Werte, d.h. die Werte, die an Array-Elementen mit über eine labile Bindung verfügenden Sonden erhalten werden, abgeglichen werden können.

Die nicht mit einer labilen Bindung versehenen Sonden können aus einer Vielzahl chemischer Verbindungen, die an Oberflächen gekoppelt werden können, ausgewählt werden. Vorzugsweise handelt es sich bei den nicht mit einer labilen Bindung versehenen Sonden jedoch um Moleküle, die chemisch den zur Detektion von Wechselwirkungen verwendeten Sonden weitgehend gleichen, wie z.B. Oligonukleotidsonden bei Hybridisierungs-basierten Assays. Besonders bevorzugt handelt es sich bei den Sondenmolekülen um Oligonukleotide einer definierten oder randomisierten Sequenz.

Bei einer weiteren Ausführungsform können die zur Normierung verwendeten Array-Elemente auch direkt, d.h. ohne Verknüpfung mit einem Sondenmolekül mit detektierbaren Einheiten versehen werden. Bei dieser Ausführungsform sind auf mindestens einem Array-Element detektierbare Einheiten ohne Verknüpfung mit einem Sondenmolekül angeordnet. Unterschiedliche Signalintensitäten werden dann bevorzugt durch Mischung der detektierbaren Einheiten mit nicht detektierbaren Einheiten gleicher Reaktivität bei deren Kopplung an die Oberfläche erreicht.

Bei einer weiteren Ausführungsform der erfindungsgemäßen Sonden-Arrays weisen alle Sonden mit labiler Bindung eine spezifische Affinität zu den in der zu untersuchenden Probe zu erwartenden Targets auf

Vorzugsweise sind allerdings auf mindestens einem Array-Element des erfindungsgemäßen Sonden-Arrays Sondenmoleküle angeordnet, die keine oder zumindest keine spezifische Affinität zu Targetmolekülen aufweisen. D.h. auf einigen Array-Elementen sind Sonden abgelegt, die keine Affinität zu im Sample zu erwartenden Targets aufweisen, bzw. deren Affinität zu Targets im Sample nicht zu einem detektierbaren Signal führt. Nach Spaltung der labilen Bindung wird die detektierbare Einheit bei diesen Sonden nicht von einer spezifischen Wechselwirkung mit zwischen Sonde und Target am Array zurückgehalten. Diese Sonden dienen daher als Kontrolle der Effizienz der Spaltungsreaktion. Sie definieren den dem Experiment inhärenten Signalhintergrund und damit das untere Ende des detektierbaren Bereiches.

Vorzugsweise sind die keine oder zumindest keine spezifische Affinität zu Targetmolekülen aufweisenden Sondenmoleküle Oligonukleotide mit einer definierten oder randomisierten Sequenz. So kann im Fall von Nukleinsäuren bzw. Nukleinsäure-Analoga als Sonden die Sequenz der Sonden so gewählt werden, daß sie keine signifikante Komplementarität zu Targets im Sample ausweist. Dies ist insbesondere bei Samples mit qualitativ definierter Zusammensetzung praktikabel. Bei Samples unbekannter Zusammensetzung können anstelle von definierten Sequenzen zumindest teilweise randomisierte Sequenzen Verwendung finden. Diese umfassen zwar möglicherweise Sequenzen, die zu in der Probe vorhandenen Targets komplementär sind. Der Anteil jeder einzelnen derart erzeugten spezifischen Sequenz beträgt bei vollständig randomisierten Array-Elementen jedoch lediglich 1/4ⁿ, wobei n für die Länge der Sonde steht. Aufgrund der geringen Menge jeder einzelnen spezifischen Sequenz führt deren Wechselwirkung mit im Sample vorhandenen Targets zu einem summarischen Signal, das unter der Detektionsgrenze liegt.

Bei einer Ausführungsform des erfindungsgemäßen Sonden-Arrays sind alle mit einer spaltbaren Bindung versehenen und gegen Targetsequenzen gerichteten Sonden komplementär zu natürlich im Target vorkommenden Sequenzen.

Alternativ sind auf mindestens einem Array-Element Sondenmoleküle angeordnet, die eine spezifische Affinität für zu der Probe vorzugsweise in bekannter Konzentration extern zugegebene Targetmoleküle aufweisen. Bei dieser Ausführungsform sind auf dem Array Sonden mit labiler Bindung angeordnet, die gegen Targets gerichtet sind, die dem Sample zum Zwecke der Standardisierung zugegeben werden. Dies wird als "spiking" bezeichnet. Eine Konzentrationsabstufung unterschiedlicher als spiking-Proben zugegebener Targets erlaubt eine weitere Standardisierung des Assays.

Bei einer weiteren bevorzugten Ausführungsform des erfindungsgemäßen Sonden-Arrays sind auf mindestens einem Array-Element sog. Kontrollsonden angeordnet, die eine Markierung und eine selektiv spaltbare Bindung, angeordnet zwischen Markierung und Immobilisierungsstelle der Sonde auf der Oberfläche, aufweisen. Derartige Kontrollsonden weisen eine spezifische Affinität, d.h. im Falle von Oligonukleotidsonden eine Komplementärität, entweder zu einem extern zugegebenen Target oder zu einem in allen mit dem Array zu untersuchenden Samples in ausreichender Konzentration vorhandenen Target auf. Unter ausreichender Konzentration wird in diesem Zusammenhang eine Konzentration an Targetmolekülen verstanden, die zu einem signifikanten, d.h. deutlich detektierbaren Signal nach der Wechselwirkung mit den Sonden führt.

Vorzugsweise sind die Array-Elemente, auf denen derartige Kontrollsonden angeordnet sind, über die gesamte Fläche des Arrays verteilt, besonders bevorzugt sind sie gleichmäßig verteilt. Eine Verteilung über die gesamte Fläche des Arrays bedeutet im Rahmen der vorliegenden Erfindung, daß sich ausgehend von dem Mittelpunkt der Array-Oberfläche in verschiedenen Abständen und verschiedenen Richtungen Array-Elemente mit derartigen Kontrollsonden befinden. Ein gleichmäßige Verteilung bedeutet vorzugsweise eine Anordnung der Array-Elemente mit derartigen Kontrollsonden als einheitliches Raster, beispielsweise als 10x10-Raster, bei dem jedes zehnte Array-Element ein derartiges Array-Element mit Kontrollsonden ist. Diese Ausführungsform ermöglicht die Normalisierung von experimentellen Schwankungen, die nach der Herstellung des Arrays u.a. in Abhängigkeit von dem Ort des Array-Elements auf der Array-Oberfläche auftreten können.

Wie bereits vorstehend erwähnt, ist die Markierung, die an die Sonden, vorzugsweise die Oligonukleotidsonden, gekoppelt ist, vorzugsweise eine detektierbare Einheit oder eine über eine Ankergruppe an die Sonden gekoppelte detektierbare Einheit. Hinsichtlich der Möglichkeiten der Detektion bzw. der Markierung erweist sich der erfindungsgemäße Sonden-Array im Vergleich zu den Sonden-Arrays des Standes der Technik als äußerst flexibel, da die Markierungseffizienz nicht von der Sequenz, Struktur oder sonstigen Beschaffenheit der (unbekannten) Targetmoleküle abhängt. So sind Verfahren unter Verwendung des erfindungsgemäßen Sonden-Arrays mit einer Vielzahl physikalischer, chemischer oder biochemischer Detektionsverfahren kompatibel. Voraussetzung ist lediglich, daß die zu detektierende Einheit bzw. Struktur direkt an eine Sonde, beispielsweise ein Oligonukleotid, gekoppelt bzw. über eine mit dem Oligonukleotid koppelbare Ankergruppe verknüpft werden kann.

Die Detektion der Markierung kann beispielsweise auf Fluoreszenz, Magnetismus, Ladung, Masse, Affinität, enzymatischer Aktivität, Reaktivität, einer Goldmarkierung und dergleichen beruhen. Vorzugsweise kann die Markierung bei den erfindungsgemäßen Sonden-Arrays in jeder Phase der Verwendung des Arrays detektiert werden. Dadurch wird beispielsweise eine Einschätzung der Qualität der Arrays gewährleistet, indem die Belegungsdichte jedes einzelnen Array-Elemente ermittelt werden kann.

Das erfindungsgemäße Sonden-Array gestattet ebenfalls eine Detektion mit nicht auf Fluoreszenz basierenden Methoden. Vorzugsweise basiert die Markierung allerdings auf der Verwendung von Fluorophor-markierten Strukturen bzw. Bausteinen. In Verbindung mit der Fluoreszenzdetektion kann die Markierung ein beliebiger an Sonden während oder nach deren Synthese koppelbarer Farbstoff sein. Beispiele hierfür sind Cy-Farbstoffe (Amersham Pharmacia Biotech, Uppsala, Schweden), Alexa-Farbstoffe, Texas-Rot, Fluorescein, Rhodamin (Molecular Probes, Eugene, Oregon, USA), Lanthanide wie Samarium, Yterbium und Europium (EG&G Wallac, Freiburg, Deutschland).

Neben Fluoreszenzmarkern können im Rahmen der vorliegenden Erfindung als Markierung bzw. als Detekierereinheit, die mit den Sonden gekoppelt ist, auch Lumineszenzmarker, Metallmarker, Enzymmarker, radioaktive Marker und/oder polymere Marker eingesetzt werden.

Ebenso kann eine Nukleinsäure als Markierung (Tag) genutzt werden, die durch Hybridisierung mit einer markierten Reportersonde detektiert werden kann (Sandwichhybridisierung). Einsatz finden zum Nachweis des Tags diverse molekularbiologische Nachweisreaktionen wie Primerextension, Ligation und RCA.

Bei einer alternativen Ausführungsform des erfindungsgemäßen Sonden-Arrays ist die detektierbare Einheit über eine Ankergruppe mit den Sonden gekoppelt. Bevorzugt verwendete Ankergruppen sind Biotin, Digoxigenin und dergleichen. Die Ankergruppen werden in einer anschließenden Reaktion mit spezifisch bindenden Komponenten, beispielsweise Streptavidin-Konjugaten oder Antikörper-Konjugaten umgesetzt, die selbst detektierbar sind, oder eine detektierbare Reaktion auslösen. Bei Einsatz von Ankergruppen kann die Umsetzung der Ankergruppen in detektierbare Einheiten vor, während oder nach Zugabe der Probe umfassend die Targets sowie vor, während oder nach der Spaltung der selektiv spaltbaren Bindung in den Sonden erfolgen. Bevorzugt ist allerdings die Umsetzung der Ankergruppen in detektierbare Einheiten nach der Herstellung des Sonden-Arrays und insbesondere vor der Spaltung der Sonden, um die Qualität des hergestellten Sonden-Arrays zu überprüfen.

Die Markierung kann erfindungsgemäß auch durch Wechselwirkung eines markierten Moleküls mit den Sondenmolekülen erfolgen. Beispielsweise kann die Markierung durch Hybridisierung eines wie vorstehend beschrieben markierten Oligonukleotids mit einer Oligonukleotidsonde erfolgen.

Weitere im Rahmen der vorliegenden Erfindung geeignete Markierungsverfahren und Nachweissysteme sind beispielsweise in Lottspeich und Zorbas, Bioanalytik, Spektrum Akademischer Verlag, Heidelberg, Berlin 1998, Kapitel 23.3 und 23.4 beschrieben.

Bei einer weiteren alternativen Ausführungsform des erfindungsgemäßen Sonden-Arrays werden Nachweisverfahren verwendet, die im Ergebnis ein Addukt mit einem bestimmten Löslichkeitsprodukt, das eine Präzipitation zur Folge hat, liefern. Zur Markierung werden Substrate eingesetzt, die in ein schwer lösliches, üblicherweise gefärbtes Produkt umgesetzt werden können. Beispielsweise können bei dieser Markierungsreaktion Enzyme verwendet werden, die den Umsatz eines Substrats in ein schwer lösliches Produkt katalysieren. Eine Reihe von in Frage kommenden Reaktionen, die geeignet sind, um zu einem Niederschlag an Array-Elementen zu führen, sowie Möglichkeiten für die Detektion des Niederschlags sind beispielsweise in der internationalen Patentanmeldung WO 01/07575 beschrieben.

Ein weiterer wesentlicher Aspekt der vorliegenden Erfindung ist ein Verfahren zur Herstellung eines vorstehend beschriebenen erfindungsgemäßen Sonden-Arrays, das die folgenden Schritte umfaßt:
a) Synthese von Sondenmoleküle, die eine Markierung aufweisen und zwischen der Stelle ihrer Immobilisierung auf der Array-Oberfläche und der Markierung eine selektiv spaltbare Bindung aufweisen; und
b) ortsspezifische Immobilisierung der Sondenmoleküle über eine definierte Position innerhalb des Sondenmoleküls auf der Array-Oberfläche.

Bei einer alternativen Ausführungsform des Verfahrens zur Herstellung eines vorstehend beschriebenen erfindungsgemäßen Sonden-Arrays erfolgt die Herstellung durch in situ-Synthese der Sondenmoleküle auf vorbestimmten Positionen der Array-Oberfläche, umfassend die folgenden Schritte:
a) Bereitstellung einer Array-Oberfläche, die mit geeigneten Reagenzien aktiviert werden kann bzw. mit Schutzgruppen versehen ist;
b) Kopplung bzw. Immobilisierung von Untereinheiten der zu synthetisierenden Sondenmoleküle an vorbestimmte Stellen auf der Array-Oberfläche vorzugsweise durch Deposition der Untereinheit, wobei die Kopplung an vorbestimmten Stellen vorzugsweise durch Aktivierung bzw. Entschützung der Array-Oberfläche und anschließende Kopplung der Untereinheit erfolgt;
c) in situ-Synthese der Sondenmoleküle aufbauend auf den in Schritt b) gekoppelten bzw. immobilisierten Untereinheiten unter Einbau einer Markierung und einer selektiv spaltbaren Bindung zwischen der Stelle der Immobilisierung der Sondenmoleküle auf der Array-Oberfläche und der Markierung.

Geeignete Reagenzien zur Aktivierung der Array-Oberfläche in Schritt b) des vorstehend genannten Verfahrens bzw. geeignete Schutzgruppen für die Array-Oberfläche sind dem Fachmann bekannt.

Die Immobilisierung von Molekülen auf der Array-Oberfläche kann entweder spezifisch oder unspezifisch erfolgen. Die spezifische Immobilisierung setzt eine Selektivität der Wechselwirkung bestimmter chemischer Funktionen des zu immobilisierenden Moleküls mit der Oberfläche des Substrats voraus. Ein Beispiel für eine spezifische nichtkovalente Immobilisierung ist die Bindung von Biotinmarkierter Nukleinsäure an ein mit Streptavidin beschichtetes Substrat. Aminomodifizierte Nukleinsäuren lassen sich spezifisch über die Reaktion der Aminogruppe mit einem Epoxid, einer Carboxy-Funktion oder einem Aldehyd immobilisieren. Vorzugsweise wird die Immobilisierung bei dem erfindungsgemäßen Verfahren über eine endständige Phosphatgruppe der Sonde bzw. eines Monomer-Bausteins einer Biopolymer-Sonde an einer aminierten Oberfläche durchgeführt.

Die unspezifische Immobilisierung erfolgt über eine Vielzahl von Mechanismen und chemischen Funktionen und kann sowohl kovalent als nicht kovalent sein. Beispiel hierfür ist die Immobilisierung von Nukleinsäuren auf poly-L-Lysin, aber auch die Immobilisierung von chemisch nicht modifizierten Nukleinsäuren auf epoxidierten, aminierten oder mit Aldehyd-Funktionen besetzten Substratoberflächen.

Vorzugsweise erfolgt die Immobilisierung der Sonden auf der Array-Oberfläche kovalent.

Für das Ablegen geringer Mengen Material an vorgesehenen Stellen auf einem Substrat im Rahmen des erfindungsgemäßen Herstellungsverfahrens existieren eine Vielzahl von Verfahren, von denen einige im folgenden aufgeführt sind. Eine Reihe derartiger Verfahren sind beispielsweise in D.J. Lockhart, E.A. Winzeler; Genomics, gene expression and DNA arrays; Nature, Vol. 405, S. 827-836, Juni 2000 beschrieben. In US 6,040,193 ist ein Verfahren beschrieben, das unter Einsatz von hydrophil strukturierten Arealen den Aufbau von Arrays durch Deposition von Tropfen aus einer Kapillare gestattet. In EP 0 268 237 ist ein Druckkopf beschrieben, der eine solche Deposition von geringen Mengen Material ebenfalls gewährleistet. Bekannt ist das Ablegen von Tropfen mit Hilfe von Transfernadeln. Diese Nadeln können auch geschlitzt sein, so daß in Analogie zur Feder eines Füllfederhalters Flüssigkeit an eine Vielzahl von Stellen auf einem Substrat gebracht werden kann (siehe z.B. US 6,269,846, US 6,101,946, US 6,235,473, US 5,910,288). In US 4,877,745 ist ein Gerät beschrieben, das die Erzeugung molekularer Arrays durch Pipettieren geringer Mengen an Material erlaubt. In US 5,731,152 ist ein Pipettierwerkzeug beschrieben, daß gleichzeitig die Deposition einer Vielzahl von unterschiedlichen Sonden ermöglicht. In US 5,551,487 ist ein der Ink-Jet-Technik entlehnter Druckkopf zur Erzeugung molekularer Sonden-Arrays beschrieben. Spezielle Werkzeuge zur Spot-weisen Deposition von Material auf Oberflächen sind u.a. auch in US 5,807,522 beschrieben und zitiert. Die Möglichkeit der Immobilisierung von Sonden unter Zuhilfenahme elektrischer Felder ist aus US 5,434,049 bzw. WO 97/12030A1 bekannt.

Dadurch daß die Sonden bei der Herstellung des Sonden-Arrays über eine definierte Position innerhalb des Sondemoleküls auf dem Array immobilisiert werden, können bei Spaltung der labilen Bindung die Markierungen von solchen Sonden, an denen keinen spezifische Wechselwirkung mit Targets stattgefunden hat, effizient von der Oberfläche entfernt werden.
Insbesondere wird bei dem erfindungsgemäßen Verfahren vermieden, daß weitere stabile Kontakte von Sonden und Oberfläche im Bereich zwischen labiler Bindung und detektierbarer Einheit aufgebaut werden.

Eine derartige spezifische Verknüpfung zwischen Sonde und Oberfläche kann nur bedingt durch Immobilisierung von separat, d.h. vor der Immobilisierung vollständig synthetisierten Sonden, gewährleistet werden. Somit sind derartige kovalente Immobilisierungsverfahren nicht für das erfindungsgemäße Herstellungsverfahren bevorzugt. Dies gilt auch für nicht-kovalente Immobilisierungsverfahren, die für bestimmte Anwendungen keine hinreichende Stabilität der Verknüpfung gewährleisten.

Im Rahmen der vorliegenden Erfindung wurde dagegen gefunden, daß eine sehr definierte Verknüpfung der Sonden mit der Oberfläche durch in situ-Synthese der Sonden auf der Oberfläche erreicht werden kann. Vorzugsweise erfolgt die Synthese der Sonden, insbesondere bei der Verwendung von Oligonukleotidsonden, somit in situ auf definierten Positionen der Array-Oberfläche.

Die in situ-Synthese von Sondenmolekülen auf Oberflächen ist ein Spezialfall der Immobilisierung. Dabei werden Monomere einer polymeren Verbindung auf der Oberfläche immobilisiert, vorzugsweise kovalent immobilisiert. Anschließend wird auf der Oberfläche das Sondenmolekül in situ synthetisch erzeugt. Besonders bevorzugt erfolgt die Synthese von Oligonukleotidsonden in situ, d.h. an der festen Phase unter Verwendung von Phosphoramiditbausteinen.

Im folgenden werden eine Reihe von Verfahren beschrieben, die im Rahmen der vorliegenden Erfindung zur Herstellung von molekularen Sonden-Arrays insbesondere unter Verwendung der Phosphoramidit-Methode bei der Nukleinsäuresynthese geeignet sind. Die Verfahren sind ohne den Anspruch der Vollständigkeit exemplarisch aufgeführt, weitere Verfahren und Verfahrenserweiterungen sind bekannt und denkbar.

In US 5,658,734 wird ein Verfahren beschrieben, bei dem zur Bestimmung der Sonden-Elements Photoresists Einsatz finden. In US 6,001,311, US 5,985,551 und US 0,574,796 sind Verfahren beschrieben, die den sukzessiven Aufbau von Oligonukleotiden und anderen Polymeren unter Einsatz spezieller strukturierter Substrate mit hydrophilen reaktiven Bereichen und hydrophoben nicht reaktiven Bereichen und unter Verwendung von Pipetten gestatten. Aus US 5,885,837, US 5,384,261, WO 93/09668, WO 97/33737und WO 98/36827 ist bekannt, daß mechanische Barrieren geeignet sein können, die Synthese von Polymeren an bestimmten Stellen einer Oberfläche zu ermöglichen. Das Stempeln von Monomeren bzw. Reagenzien ist in DE 197 06 570 beschrieben. Aus WO 90/15070, EP 0 386 229, US 5,436,327, US 5,667,667, WO98/56505 und WO95/21265 sind synthetisch aufgebaute Sonden-Arrays ebenfalls hinlänglich bekannt. Verfahren aus der Druckereitechnik werden in US 6,239,273 auf die Herstellung von Sonden-Arrays adaptiert.

Bevorzugt werden bei dem erfindungsgemäßen Herstellungsverfahren labile Bindungen, deren Synthese sich möglichst nahtlos in die nach der Phosphoramidit-Methode erfolgende in situ-Synthese der Arrays einfügt. Besonders bevorzugt handelt es sich bei der selektiv spaltbaren Bindung um eine modifizierte, zwei Nukleoside verbrückende Phophodiester-Bindung, z.B. um eine zwei Nukleoside verbrückende Phosphothioat-Bindung.

Ein für bestimmte Anwendungen des erfindungsgemäßen Sondenarrays erforderlicher definierter Markierungsgrad auf einem Array-Element kann beispielsweise dadurch erreicht werden, daß während der Synthese eine Mischung aus einem markierten Monomer, vorzugsweise einem Nukleotidmonomer, und einem unmarkierten Monomer, vorzugsweise einem Nukleotidmonomer, gleicher Reaktivität vorzugsweise in einem definierten Verhältnis zugegeben wird.

Eine weitere Aufgabe besteht darin, für die Sonden-Synthese insbesondere nach der Phosphoramidit-Methode geeignete Monomer-Bausteine zur Synthese der labilen Bindung bereitzustellen.

Diese Aufgabe wird erfindungsgemäß durch Bereitstellung eines Verfahrens zur Herstellung von für die Nukleinsäure-Synthese geeigneten Monomer-Bausteinen, die zur Erzeugung einer labilen Bindung in Sondenmolekülen dienen können, gelöst, das die folgenden Schritte umfaßt:
a) Veresterung der 5'-OH-Gruppe eines Nukleosids mit einer als Abgangsgruppe geeigneten Säure;
b) Umsetzung des Esters mit einem Thioester;
c) Verseifung des Thioesters zu einem Thiol;
d) Schutz der Thiol-Funktion mit für die Phosphotriester- oder Phosphoramidit-Methode geeigneten Schutzgruppen;
e) Aktivierung des geschützten Thiols an der 3'-Position mit der Phosphotriester- oder Phosphoramidit-Methode.

Bei einem weiteren erfindungsgemäßen Verfahren zur Herstellung von für die Nukleinsäure-Synthese geeigneten Monomer-Bausteinen wird der Schwefel über eine für die Phosphotriester- oder Phosphoramidit-Methode geeignete Schutzgruppe in das Nukleosid eingeführt. Ein derartiges erfindungsgemäßes Verfahren umfaßt vorzugsweise die folgenden Schritte:
a) Umsetzung einer als Schutzgruppe für die Phosphotriester- oder Phosphoramidit-Methode geeigneten Verbindung, vorzugsweise eines Alkohols wie z.B. Triphenylmethanol oder Dimethoxytriphenylmethanol, zu einem Thiol;
b) Veresterung der 5'-OH-Gruppe eines Nukleosids mit einer als Abgangsgruppe geeigneten Säure;
c) Umsetzung des Thiols aus Schritt a) mit dem Ester aus Schritt b);
d) Aktivierung des geschützten Thiols an der 3'-Position mit der Phosphotriester- oder Phosphoramidit-Methode.

Geeignete Reagenzien und Reaktionsbedingungen sind dem Fachmann insbesondere unter Berücksichtigung der in den Beispielen 1 und 14 beschriebenen Synthesen geläufig. Als Schutzgruppen sind insbesondere DMTr- (Dimethoxytrityl), MMTr-(Monomethoxytrityl), Tr- (Trityl), 9-Phenylxanthen-9-yl-, Pixyl- und Silyl-Gruppen geeignet. Als Abgangsgruppen sind insbesondere Tosylat, Mesylat und Chlorid geeignet.

Die Verbindung Trityl-5'-S-Thymidin wurde von M. Mag, S. Lücking und J.W. Engels in Nucleic Acids Research 1991 Vol.19, No. 7 1437-1441 beschrieben. Bei der Verwendung dieses Bausteins in der Oligonukleotidsynthese nach der Phosphordiester-Methode wird die Trityl-Gruppe während des Synthesezyklus üblicherweise mit einer wässrigen Silbernitrat-Lösung abgespalten, um in der Synthese weiter fortschreiten zu können. Bei Verwendung einer wässrigen Abspaltungslösung wird die Abspaltung üblicherweise nicht am Synthesizer-Gerät vorgenommen, da bei der Oligonukleotidsynthese unter wasserfreien Bedingungen gearbeitet werden muss. Bei der Abspaltung am Synthesizer-Gerät müßte der Abspaltung der Trityl-Gruppe ein spezielles Waschprogramm folgen. Die Verwendung einer DTT-Lösung zur Reduktion von gebildeten S-S-Bindungen, die ebenfalls Wasser als Lösungsmittel enthält, erniedrigt ebenfalls die Kupplungsausbeuten in der weiteren Syntheseabfolge. Somit wird anstelle einer Trityl-Schutzgruppe des modifizierten 5'-Thio-Amidites vorzugsweise eine 4,4'-Dimethoxytrityl-Schutzgruppe, deren Abspaltung mit TCA oder DCA im Standardzyklus abgespalten werden kann, eingesetzt.

Weitere Gegenstände der vorliegenden Erfindung sind die durch die vorstehenden erfindungsgemäßen Synthese hergestellten Monomer-Bausteine, wie beispielsweise 5'-S-(4,4'-Dimethoxytrityl)-mercapto-5'-deoxynucleosid-3'-O-(2-cyanoethyl, N,N'-diisopropyl-phosphit).

Ein weiterer erfindungsgemäßer Monomer-Baustein ist 5'-S-9-[4-methoxyphenyl)xanthen-9-yl]mercapto-2'-deoxynucleosid-3'-O-(2-cyanoethyl, N,N'-diisopropyl-phosphit), der in hohen Ausbeuten hergestellt werden kann.

Alternativ kann ein entsprechendes Dimer als Baustein für die Phosphoramidit-Synthese bereitgestellt werden. Da bei dem Einsatz eines Dimers die Abspaltung der 4,4'-Dimethoxytrityl-Gruppe direkt bei der Schwefelmodifikation überflüssig wird und daher auch keine Disulfid-Bindungen entstehen können, ist bei Verwendung eines Dimers eine Verbesserung der Ausbeute sowie eine Verwendung eines Standardzyklus mit verlängerter Kupplungszeit möglich. Die Synthese eines beispielhaften Dimers ist in Beispiel 12 beschrieben.

Weitere Gegenstände der vorliegenden Erfindung sind somit Nukleotid-Dimere mit der folgenden Formel III, die u.a. aus den vorstehend genannten Monomer-Bausteinen beispielsweise nach der Phosphoramidit-Methode hergestellt werden können. 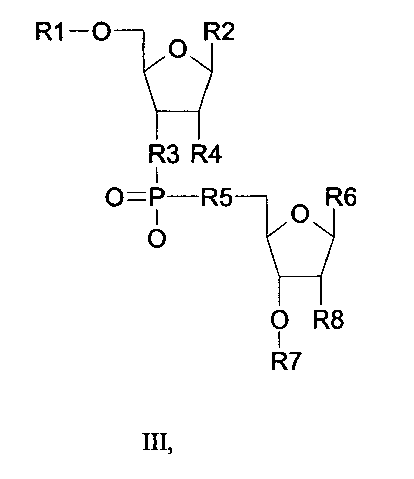 wobei R1 vorzugsweise ausgewählt ist aus der Gruppe bestehend aus DMTr-(Dimethoxytrityl), MMTr- (Monomethoxytrityl), Tr- (Trityl), 9-Phenylxanthen-9-yl-, Pixyl- und Silyl-Gruppen; R2 und R6 unabhängig voneinander vorzugsweise stehen für A, G, C, T und U; R3 vorzugsweise ausgewählt ist aus der Gruppe bestehend aus O, S und NH; R4 vorzugsweise ausgewählt ist aus der Gruppe bestehend aus H, OH und O-Alkyl; R5 vorzugsweise ausgewählt ist aus der Gruppe bestehend aus O, S und NH; R8 vorzugsweise ausgewählt ist aus der Gruppe bestehend aus H, OH und O-Alkyl; und R7 vorzugsweise aus einer der beiden folgenden Gruppen mit den Formeln IV und V ausgewählt ist:

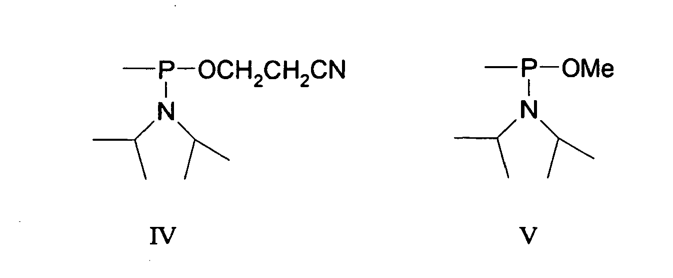

Selbstverständlich können die erfindungsgemäßen Dimere mit der Formel III auch als Nukleotid-Dimere S zum Aufbau der Sondenmoleküle, umfassend eine Nukleinsäure der vorstehend genannten Formel A₁-S-A₂, bei dem erfindungsgemäßen Herstellungsverfahren eingesetzt werden.

Der Aufbau der erfindungsgemäßen Sonden-Arrays bzw. der durch das erfindungsgemäße Verfahren hergestellten Arrays ermöglicht einen bislang nicht erreichten, verläßlichen und einfach zu überwachenden Standardisierungsgrad und damit ein hohes Qualitätsniveau. Da die Sonden auf dem Sonden-Array bei der Herstellung des Arrays mit einer Markierung versehen sind, kann die Qualität des erzeugten Arrays durch ein einfaches bildgebendes Verfahren überprüft werden. Die Intensität der jeweiligen Spots ist ein Maß für die Synthese- und Immobilisierungseffizienz der jeweiligen Sonde.

Ein weiterer Vorteil neben der Möglichkeit der Qualitätsprüfung der hergestellten Arrays liegt in der Möglichkeit der Standardisierung und damit Absicherung der unter Verwendung des erfindungsgemäßen Sonden-Arrays erhaltenen Meßergebnisse. So kann beispielsweise stichprobenartig ein funktioneller Test, ein sogenanntes Standard-Assay, durchgeführt werden. Dabei kann beispielsweise ein in Konzentration und Zusammensetzung definiertes Gemisch an Targets mit dem Sonden-Array bzw. Chip wechselwirken und anschließend die Detektionsreaktion durchgeführt werden. Das Resultat der Wechselwirkung der Sonden mit den Targets nach der Abspaltung der Sonden, die nicht selektiv mit Targets wechselgewirkt haben, wird mit einem bildgebenden Verfahren dokumentiert. Der Vergleich der Experimente vor und nach Zugabe der Targets erlaubt Aussagen zur Qualität der Immobilisierung bzw. Synthese der jeweiligen Sonden.

Des weiteren wird durch den speziellen Aufbau der erfindungsgemäßen Sonden-Arrays eine standardisierte bzw. normierte Auswertung des Assays ermöglicht. Dies beruht darauf, daß anhand des erfindungsgemäßen Sonden-Arrays Abbildungen von verschiedenen Zeitpunkten des Experiments vorliegen, nämlich solche, die vor Zugabe der Probe gewonnen werden, und solche, die nach der Wechselwirkung der Sonden mit den Targets gewonnen wurden. Durch geeignete mathematische Verfahren können unter Einbeziehung dieser Daten, sowie der Daten, die bei der Qualitätsprüfung der Arrays gefunden wurden, experimentelle Ergebnisse in einem für Array-Anwendungen bislang nicht erreichten Maß standardisiert und abgesichert werden. Die erfindungsgemäßen Sonden-Arrays gestatten somit ein neues Qualitätsniveau bei Arrayexperimenten und eröffnen neue Anwendungsfelder für die Arraytechnologie.

Die Verfahren der Qualitätsprüfung der hergestellten Sonden-Arrays sowie der Standardisierung und Normierung des Nachweises von Sonden-/Target-Wechselwirkungen bei Verwendung der erfindungsgemäßen Sonden-Arrays sind ebenfalls Gegenstand der vorliegenden Erfindung und werden nachstehend detailliert beschrieben.

Ein weiterer Aspekt der vorliegenden Erfindung betrifft somit ein Verfahren zur Überprüfung der Qualität der vorstehend beschriebenen Sonden-Arrays bzw. der nach dem vorstehend beschriebenen Verfahren hergestellten Sonden-Arrays, umfassend die folgenden Schritte:
a) Bereitstellung eines erfindungsgemäßen Sonden-Arrays;
b) Detektion der auf der Array-Oberfläche immobilisierten synthetisierten Sondenmoleküle.

Der Vorteil des erfindungsgemäßen Verfahrens zur Qualitätskontrolle besteht darin, daß sich die Qualität jedes Arrays nach dessen Herstellung ohne die Notwendigkeit weiterer Prozeßschritte ermitteln läßt. Dies wird dadurch gewährleistet, daß die Sonden auf dem Sonden-Array nach dessen Fertigstellung mit einer detektierbaren Einheit versehen sind.

In Verbindung mit dem Qualitätsmanagement ist eine direkt zu detektierende Markierung wie beispielsweise der Einsatz von Fluoreszenzmarkern und/oder radioaktiven Markern bevorzugt. In alternativen Ausführungsformen können jedoch auch Ankergruppen oder durch Sekundärreaktionen zu detektierende Einheiten Verwendung finden.

Üblicherweise wird von jedem Array nach dessen Fertigstellung die Belegungsdichte der einzelnen Array-Elemente anhand der Intensität der durch die Marker erzeugten Signale bestimmt. Dies erfolgt bevorzugt mit einem bildgebenden Verfahren, welches die Signalintensitäten in Graustufen abbildet, welche dann durch geeignete Software-Werkzeuge, wie z.B. Iconoclust (Clondiag, Jena, Deutschland), Quantarray (GSI Lumonics) quantitativ ausgewertet werden können. Direkte, nicht bildgebende Verfahren können alternativ ebenfalls Verwendung finden.

Bei serieller Einzelproduktion von Arrays kann jeder Chip einzeln abgebildet werden. Erfolgt die Herstellung der Arrays parallel, beispielsweise im Wafermaßstab, kann die Belegungsdichte alternativ für jeden Chip einzeln oder parallel mit einem hochauflösenden Verfahren über den gesamten Wafer durchgeführt werden.

Die Analyse der Belegungsdichte wird erfindungsgemäß dazu verwendet, Arrays zu identifizieren, die für die Durchführung von Experimenten nicht oder nur bedingt geeignet sind. Diese sind beispielsweise:
- Array-Elemente mit zu geringer Belegungsdichte;
- Array-Elemente mit einer zu hohen Abweichung der Belegungsdichte im Vergleich zur durchschnittlichen (zu erwartenden) Belegungsdichte dieses Array-Elements auf den erzeugten Arrays;
- Array-Elemente mit inhomogener Belegungsdichte auf dem Array;
- Array-Elemente ohne Signal.

Die Werte werden vorzugsweise verwendet, um Arrays zu verwerfen bzw. nicht verwendbare Array-Elemente zu markieren. Die Ergebnisse der Qualitätsüberprüfung können beispielsweise in einer Datenbank wie Partisan (Clondiag) gegebenenfalls gemeinsam mit anderen relevanten Daten zur Array-Herstellung und -Verwendung gespeichert werden. Verworfene Arrays können mit einem Flag versehen und zur Benutzung gesperrt werden.

Die Auswertung der Belegungsdichte erfolgt vorzugsweise computergestützt und/oder automatisiert. Schwellwerte zum Verwerfen von Arrays bzw. Markieren ungeeigneter Array-Elemente richten sich nach der jeweilig gewünschten Verwendung der Arrays.

Bei einem weiteren wesentlichen Aspekt der vorliegenden Erfindung wird ein Verfahren zum qualitativen und/oder quantitativen Nachweis von Targets aus einer Probe durch molekulare Wechselwirkungen zwischen Sonden und Targets auf Sonden-Arrays bereitgestellt, das die folgenden Schritte umfaßt:
a) Bereitstellung eines wie vorstehend beschriebenen erfindungsgemäßen Sonden-Arrays;
b) gegebenenfalls Detektion der auf der Array-Oberfläche immobilisierten Sondenmoleküle in Form von Signalintensitäten;
c) Inkubation des Sonden-Arrays mit der zu untersuchenden Probe;
d) gegebenenfalls Waschen unter Bedingungen, unter denen eine spezifische Wechselwirkung zwischen Target- und Sondenmolekül weitgehend stabil bleibt und unspezifisch gebundene Targets entfernt werden;
e) gegebenenfalls erneute Detektion in Form von Signalintensitäten;
f) selektive Spaltung der selektiv spaltbaren Bindung in den Sondenmolekülen;
g) gegebenenfalls Waschen, um nicht durch eine Wechselwirkung mit Targetmolekülen an der Array-Oberfläche zurückgehaltene markierte Sondenmolekül-Fragmente zu entfernen;
h) Detektion der durch eine Wechselwirkung mit Targetmolekülen auf der Array-Oberfläche verbliebenen markierten Sondenmolekül-Fragmente in Form von Signalintensitäten; und
i) gegebenenfalls Normierung der in Schritt h) detektierten Signalintensitäten.

Im Vergleich zu den bislang bekannten Verfahren zum Nachweis von Sonden-/Target-Wechselwirkung auf Sonden-Arrays bietet das erfindungsgemäße Verfahren zwei wesentliche Vorteile.

Zum einen entfällt die Notwendigkeit der Markierung der Targets. Somit werden alle vorstehend beschriebenen Fehler und Schwankungen, die im Prozeß der Markierung des Targets auftreten können, vollständig vermieden.

Zum anderen sind bereits die Array-Elemente des erfindungsgemäßen Arrays mit einer Markierung bzw. einer detektierbaren Einheit versehen. Dadurch kann die Qualität des Arrays wie vorstehend beschrieben vor dem Nachweis-Experiment auf Ebene der einzelnen Array-Elemente ermittelt werden. Die dabei für die jeweiligen Array-Element erhaltenen Signalintensitäten, die der Belegungsdichte für das jeweilige Array-Element entsprechen, können für eine Normalisierung der experimentellen Ergebnisse, d.h. der nach der Sonden-/Target-Wechselwirkung erhaltenen Signalintensitäten herangezogen werden.

Somit können mit dem erfindungsgemäßen Nachweisverfahren die wesentlichen Ursachen für Ungenauigkeiten bei Array-basierten Assays beseitigt werden.

Üblicherweise wird die Qualität des Arrays bereits nach der Herstellung überprüft, so daß die für die Normierung bzw. Standardisierung erforderlichen Belegungsdichten dem Anwender des erfindungsgemäßen Verfahrens bereits zur Verfügung stehen. In diesem Fall ist Schritt b) des erfindungsgemäßen Verfahrens nicht erforderlich. Falls gewünscht, kann die Qualität des bereitgestellten Arrays anhand der optional in Schritt b) detektierten Signalintensitäten zum Zeitpunkt der Verwendung des Arrays auch im Rahmen des erfindungsgemäßen Nachweisverfahrens erneut oder erstmals überprüft werden.

Im folgenden werden einige weitere Ausführungsformen beschrieben, mit denen eine Normierung bzw. Normalisierung bzw. Standardisierung der Ergebnisse gewährleistet wird. Als Normierung bzw. Normalisierung wird im Rahmen der vorliegenden Erfindung das Gewährleisten der Vergleichbarkeit der auf einem Sonden-Array detektierten Signalintensitäten verstanden, während als Standardisierung das Gewährleisten der Vergleichbarkeit von auf verschiedenen Arrays durchgeführten Experimenten verstanden wird.

Die Normalisierung der Array-Experimente basiert auf den vorstehend beschriebenen besonderen Eigenschaften des erfindungsgemäßen Arrays. Der Aufbau des erfindungsgemäßen Arrays bietet dabei verschiedene Möglichkeiten zur Auswertung von Array-Experimenten. Der Normierungs- und Standardisierungsgrad kann den Erfordernissen des konkreten Experimentes bzw. Nachweisverfahrens angepaßt werden und wird bei quantitativen Analysen höher sein als bei Analysen, mit denen Ja/Nein-Aussagen getroffen werden sollen.

Bei einer Ausführungsform werden bei der Qualitätskontrolle der Arrays für jedes Array-Element Signalintensitäten Sₒ ermittelt, die ein Maß für die Belegungsdichte des jeweiligen Array-Elements darstellen. Diese Signalintensitäten werden in Korrekturfaktoren kₐ umgerechnet, die zur Normalisierung der auf jedem einzelnen Array-Element nach Abschluß des Experimentes gemessenen Signalstärke eingesetzt werden.

Vorzugsweise wird kₐ bestimmt, indem die Signalstärken Sₒ aller Array-Elemente gemittelt und die durchschnittliche Signalstärke aller Array-Elemente durch die Signalstärke Sₒ jedes Array-Elementes geteilt wird. Alternativ wird kₐ durch eine andere mathematische Verknüpfung aus der Signalintensität Sₒ der Array-Elemente vor dem Experiment ermittelt.

Der Korrekturfaktor kₐ kann erfindungsgemäß dazu verwendet werden, um die durch die unterschiedliche Belegungsdichte der Array-Elemente bedingten Schwankungen in der Signalintensität S₁ nach erfolgter Wechselwirkung mit dem Target, dem Schneiden der labilen Bindung und dem optionalen Waschen zu korrigieren. Die korrigierte Signalintensität wird als S₂ bezeichnet.

Im einfachsten Fall ergibt sich S₂ aus S₁ durch mathematische Verknüpfung mit kₐ Vorzugsweise stellt die mathematische Verknüpfung eine Multiplikation dar. Besonders bevorzugt wird die Art der mathematischen Verknüpfung für den jeweiligen Arraytyp und den jeweiligen Sampletyp experimentell optimiert.

Bei einer Ausführungsform des erfindungsgemäßen Nachweisverfahrens erfolgt die Normierung in Schritt i) somit durch mathematische Verknüpfung der in Schritt h) erhaltenen Signalintensitäten mit einem Korrekturfaktor, der anhand der bei der Qualitätsprüfung in Schritt b) erhaltenen Signalintensitäten ermittelt werden kann.

In die Berechnung von S₂ können neben kₐ weitere Faktoren eingehen. Beispielsweise kann eine Standardisierung gegen experimentelle Schwankungen, die beginnend mit der Inkubation von Sample und Array auftreten können, mit Hilfe von über die Fläche des Arrays verteilten Array-Elementen vorgenommen werden, auf denen wie vorstehend beschriebene Kontrollsonden angeordnet ist. Derartige Array-Elemente werden im folgenden auch als Kontroll-Elemente bezeichnet. Im Fall von Oligonukleotidsonden als Sondenmolekülen wird beispielsweise nach Hybridisierung mit dem eine zur Kontroll-Oligonukleotidsonde komplementäre Sequenz aufweisenden Target, der Spaltung der labilen Bindung und gegebenenfalls nach Waschschritten, die Signalintensität an diesen Kontroll-Elementen ermittelt und gegebenenfalls durch mathematische Verknüpfung mit kₐ normalisiert.

Die gegebenenfalls durch mathematische Verknüpfung mit kₐ normalisierten Signalintensitäten sollten für alle Kontroll-Elemente gleich sein. Bei starken Abweichungen wird ein Kontrollfaktor kₑ für jedes Array-Element berechnet, der eine Normalisierung gegen experimentelle Schwankungen, die zu unterschiedlich hellen Regionen auf dem Array führen, erlaubt. Der Korrekturfaktor kₑ wird aus der Abweichung der gegebenenfalls durch mathematische Verknüpfung mit kₐ normalisierten Signalintensitäten der zu einem Array-Element benachbarten Kontroll-Elemente unter Berücksichtigung des Abstandes zwischen Array-Element und Kontroll-Element errechnet. Vorzugsweise wird der Korrekturfaktor nach dem in Selinger D.W., Cheung K.J., Mei R., Johansson E.M., Richmond C.S., Blattner F.R., Lockhart D.J., Church G.M., Nat. Biotechnol. 2000 Dec;18(12): auf Seite 1267 beschriebenen Algorithmus berechnet.

Vorzugsweise ergibt sich S₂ aus S₁ durch mathematische Verknüpfung mit kₐ und kₑ. Alternativ ergibt sich S₂ aus S₁ durch mathematische Verknüpfung mit kₑ.

Bei einer weiteren Ausführungsform des erfindungsgemäßen Nachweisverfahrens erfolgt die Normierung somit durch mathematische Verknüpfung der in Schritt h) erhaltenen Signalintensitäten mit einem anhand der Signalintensitäten bei der Qualitätsprüfung ermittelten Korrekturfaktor und/oder einem durch anhand der Signalintensitäten von Kontroll-Elementen ermittelten Korrekturfaktor.

Eine weitere Ausführungsform der standardisierten Auswertung stellt die Korrektur gegen das Hintergrundsignal dar. Dazu finden Array-Elemente Verwendung, auf denen Sonden angeordnet sind, die keine bzw. keine detektierbare Wechselwirkung mit Targets aus dem Sample eingehen. Diese Array-Elemente werden im folgenden auch als sog. Hintergrund-Elemente bezeichnet. Nach Hybridisierung, Spaltung der labilen Bindung und gegebenenfalls nach Waschschritten, wird die Signalintensität dieser Hintergrund-Elemente gemessen, gegebenenfalls durch mathematische Verknüpfung mit kₐ und/oder kₑ normalisiert und von den Signalintensitäten aller Array-Elemente subtrahiert.

Vorzugsweise wird die Signalintensität der Hintergrundelemente von S₁ subtrahiert. Es ergibt sich S₁', welches nach einer der vorstehend beschriebenen Ausführungsformen mit kₐ, kₑ oder kₐ) und kₑ korrigiert werden kann, so daß sich die korrigierte Signalintensität S₂' ergibt.

Ebenfalls bevorzugt ergibt sich die korrigierte Signalintensität S₂', indem die Signalintensität der Hintergrundelemente von S₂ subtrahiert wird.

Bei einer weiteren Ausführungsform des erfindungsgemäßen Nachweisverfahrens erfolgt die Normierung somit durch Subtraktion der in Schritt h) erhaltenen und gegebenenfalls wie vorstehend beschrieben korrigierten Signalintensitäten mit von Hintergrund-Elementen detektierten Signalintensitäten.

Insbesondere bei quantitativen Analysen ist eine Normalisierung der Ergebnisse in Bezug auf die Kennlinie des Assays, d.h. die Abhängigkeit der Signalintensität von der Menge der vorhandenen detektierbaren Einheiten vorteilhaft. Für diese Normalisierung werden Sonden-Arrays verwendet, bei denen auf mindestens einem, vorzugsweise mehreren Array-Elementen markierte, jedoch nicht mit einer selektiv spaltbaren Bindung versehene Sonden angeordnet sind, die vorzugsweise sich in charakteristischer Weise in ihrem Markierungsgrad unterscheiden, beispielsweise, indem sie mit einem definierten, in Form einer Verdünnungsreihe von Array-Element zu Array-Element variierenden Gemisch aus markierten und unmarkierten Sonden versehen wurden. Derartige Array-Elemente werden im folgenden als Detektionsstandard-Elemente bezeichnet.

Vorzugsweise erfolgt somit eine Normierung des Nachweises durch Vergleich der für ein Array-Element erhaltenen Signalintensität mit Signalintensitäten von Arrayelementen, auf denen nicht mit einer selektiv spaltbaren Bindung versehene Oligonukleotidsonden und/oder direkt mit der Array-Oberfläche gekoppelte detektierbare Einheiten angeordnet sind.

Nach Abschluß eines derartigen Experiments werden die Signalintensitäten der entsprechenden Detektionsstandard-Elemente ermittelt und gegebenenfalls durch Abzug des Hintergrundsignals und Korrektur mit den vorstehend beschriebenen Korrekturfaktoren normalisiert. Die gegebenenfalls normalisierten Werte der Detektionsstandard-Elemente werden gegen das Mischungsverhältnis von markierter und unmarkierter Substanz aufgetragen. Es entsteht eine Eichkurve, die den dynamischen Bereich und die Art der Abhängigkeit der Signalintensität von der Menge an detektierbaren Einheiten, die sog. Kennlinie des Arrays.

Die Kennlinie kann einerseits dazu verwendet werden, nicht quantifizierbare Werte, die außerhalb des dynamischen Bereiches liegen, zu identifizieren und gegebenenfalls von der Analyse auszuschließen. Andererseits kann allen anderen Signalintensitäten eine bestimmte Menge an detektierbaren Einheiten zugeordnet werden. Dadurch ist die Möglichkeit einer quantitativen Analyse sowie der Vergleich von Experimenten, die mit unterschiedlichen Arrays durchgeführt wurden, gegeben.

Von den vorstehend beschriebenen Methoden der Normierung und Standardisierung können je nach Bedarf Methoden ausgewählt werden und einzeln oder in beliebigen Kombinationen durchgeführt werden.

Somit handelt es sich bei dem erfindungsgemäßen Verfahren nicht nur um ein Verfahren zum Nachweis von Wechselwirkungen auf Sonden-Arrays, bei dem auf die Markierung von Targetmolekülen verzichtet werden kann, sondern vielmehr um ein Verfahren, bestehend aus Verfahrensschritten zur Herstellung und Qualitätsüberwachung von Sonden-Arrays, die für einen derartigen Nachweis geeignet sind, aus Verfahrensschritten zur Verwendung dieses Arrays in Assays, sowie aus Verfahrensschritten zur Auswertung und Normierung der Ergebnisse.

Bei einer bevorzugten Ausführungsform findet die Inkubation des Sonden-Array mit einem Sample bestehend aus unmarkierten Targets statt. Für spezielle Anwendungen, beispielsweise zum Zweck der Eichung von klassischen Detektionsmethoden gegen das erfindungsgemäße Verfahren, kann auch ein markiertes Targetgemisch Verwendung finden.

Gegebenenfalls werden die unmarkierten Targets vor der Inkubation mit dem Sonden-Array durch ein geeignetes enzymatisches, physikalisches und/oder chemisches Verfahren fragmentiert.

Bei einer bevorzugten Ausführungsform des erfindungsgemäßen Verfahrens ist die Wechselwirkung zwischen dem Target und der Sonde eine Hybridisierung zwischen zwei Nukleotidsequenzen. Die Hybridisierung der Targets mit den auf einem Sonden-Array angeordneten Sonden findet nach einem der bekannten Standardprotokolle statt (siehe u.a. Lottspeich und Zorbas, 1998). Beispielsweise erfolgt die Inkubation von Sample und Array in einem wässrigen oder Formamidhaltigen Hybridisierungspuffer. Vorzugsweise werden SSC-, SSPE- oder Phosphatpuffer-basierte wässrige Hybridisierungspuffer verwendet, die besonders bevorzugt Natriumchlorid bzw. Natriumnitrat enthalten.

Die entstandenen Hybride können durch kovalente Bindung, beispielsweise über Psoralen-Interkalation und nachfolgendes "Cross-Linking", oder wie in US 4,599,303 beschrieben, durch nichtkovalente Bindung, beispielsweise durch Bindung von Interkalatoren, stabilisiert werden.

Im Anschluß an die Hybridisierung der Targets mit den auf einem Sonden-Array angeordneten markierten Sonden erfolgt üblicherweise ein Waschschritt, mit dem unspezifisch und dadurch schwächer gebundene Komponenten entfernt werden. Da bei dem erfindungsgemäßen Verfahren die Targets keine Markierung aufweisen, kann alternativ auf einen Waschschritt verzichtet werden, da unspezifisch gebundene Targets den gespaltenen Sonden-/Target-Komplex nicht stabilisieren. Der gegebenenfalls notwendige Waschschritt nach der Wechselwirkung von Array und Target kann ebenfalls in einem dem Fachmann geläufigen SSC,- SSPE-, Phosphatbasierten oder anderen geeigneten Puffersystem unter Bedingungen erfolgen, die unspezifische Wechselwirkungen destabilisieren, während spezifische Wechselwirkungen relativ unbeeinflußt bleiben.

Alternativ ist die Wechselwirkung zwischen dem Target und der Sonde eine Reaktion zwischen einer Antigenstruktur und dem entsprechenden Antikörper oder einem hypervariablen Abschnitt davon oder eine Reaktion zwischen einem Rezeptor und einem entsprechenden Liganden. Falls das Sondenmolekül ein Polypeptid ist, bietet sich für die Bereitstellung einer selektiv spaltbaren Bindung die selektive Modifizierung einer Amidbindung an.

Die Wechselwirkung der Targets mit den Sonden bzw. die Bindung oder Erkennung der Targets durch spezifische Sonden ist üblicherweise ein spontane nicht-kovalente Reaktion unter optimalen Bedingungen. Davon umfaßt sind ebenfalls nicht-kovalente chemische Bindungen. Die Zusammensetzung des Mediums sowie weitere chemische und physikalische Faktoren beeinflussen die Geschwindigkeit und Stärke der Bindung. So erniedrigt beispielsweise bei der Nukleinsäure-Erkennung eine höhere Stringenz die Kinetik und Stärke der Bindung zwischen zwei nicht perfekt komplementären Strängen. Die Optimierung der Bindungsbedingungen ist für Antigen/Antikörper- oder Ligand/Rezeptor-Wechselwirkungen ebenfalls erforderlich, die Bindungsbedingungen sind aber üblicherweise weniger spezifisch.

Die Spaltung der labilen Bindung findet bei dem erfindungsgemäßen Verfahren unter Bedingungen statt, bei der sowohl das ungespaltene Hybrid, als auch das nach Spaltung vorliegende, aufgrund des Einzelstrangbruches weniger stabile Hybrid erhalten bleiben. Solche Bedingungen werden insbesondere durch eine hohe Ionenstärke und/oder eine niedrige Temperatur bereitgestellt.

Vorzugsweise wird die selektiv spaltbare Bindung durch chemische und/oder physikalische Methoden selektiv gespalten, besonders bevorzugt durch Zugabe von Ionen, beispielsweise Säureanionen, Basekationen, Fluorid- und/oder Schwermetallionen wie Quecksilber- und/oder Silberionen

Handelt es sich bei der zu spaltenden Bindung um eine zwei Nukleoside verbrückende Phosphothioat-Bindung, kann diese Bindung durch oxidativen Angriff mit Jod bzw. durch Schwermetallionen wie Silberionen bzw. Quecksilberionen gespalten werden. Bevorzugt erfolgt die Spaltung der Bindung mit Silberionen, besonders bevorzugt mit Silbernitrat. Die zur Spaltung eingesetzte Lösung weist vorzugsweise eine hohe Ionenkonzentration zur Stabilisierung der Hybride auf.

Die zur Stabilisierung der Hybride erforderliche Ionenstärke wird vorzugsweise durch Salze erreicht, die mit Silberionen keine schwerlöslichen Salze bilden. Besonders bevorzugt wird Natriumnitrat. Die Endkonzentration an Salz zur Erhöhung der Ionenstärke, insbesondere an Natriumnitrat, im Spaltungspuffer beträgt von einer gesättigten Lösung bis 10 mM, bevorzugt von 100 mM bis 2 M und besonders bevorzugt von 500 mM bis 1M.

Die Spaltungsreaktion findet bei vorzugsweise bei Temperaturen von -70°C bis 100°C, besonders bevorzugt von -20°C bis 50°C, and am meisten bevorzugt von 0°C bis 20°C statt.

Die Konzentration an Silbernitrat in der Spaltungslösung reicht insbesondere von einer gesättigten Lösung bis zu 1 µM. Vorzugsweise wird eine Silbernitrat-Lösung mit einer Konzentration zwischen 1 M und 5 mM, besonders bevorzugt zwischen 10 und 50 mM verwendet.

Handelt es sich bei der zu spaltenden Bindung um ein verbrücktes Phosphothioat und wird diese Bindung mit Silberionen gespalten, sind vorzugsweise vor der Spaltungsreaktion Ionen, die mit Silber ein schwerlösliches Produkt bilden, zu entfernen. Dies erfolgt beispielsweise durch Waschen mit einem Puffer, der solche Ionen nicht enthält, bevorzugt durch Waschen mit 5 M bis 10 mM Natriumnitrat, besonders bevorzugt durch Waschen mit 1 M Natriumnitrat.

Bei einer alternativen Ausführungsform des erfindungsgemäßen Nachweisverfahrens kann der Schritt g), d.h. der Waschschritt, um nicht durch eine Wechselwirkung mit Targetmolekülen an der Array-Oberfläche zurückgehaltene markierte Sondenmolekül-Fragmente zu entfernen, weggelassen werden. Voraussetzung für einen derartigen homogenen Assay ohne entsprechendes Waschen ist der Einsatz von geeigneten, dem Fachmann bekannten Meßmethoden, wie z.B. der Fluoreszenz-Polarisationsmessung, die eine klare Unterscheidung des Signals gebundener und ungebundener Marker gestatten. Eine weitere Alternative bei der Durchführung eines derartigen Assays ohne den Waschschritt g) ist die Verwendung konfokaler optischer Aufbauten, die ausschließlich das Signal auf der Oberfläche erfassen.

Das erfindungsgemäße am Beispiel von Sonden-Arrays beschriebene Nachweisverfahren kann selbstverständlich auch auf andere, nicht Array-basierte Verfahren angewendet werden, bei denen die vorstehend beschriebenen Sondenmoleküle, umfassend mindestens eine Markierung sowie mindestens eine selektiv spaltbare Bindung, zum Einsatz gelangen.

Im folgenden ist eine Anwendung des erfindungsgemäßen Nachweisprinzips auf Mikrotiterplattenassays und Assays in Reaktionsgefäßen, sog. Tube-Assays, beschrieben. Die Immobilisierung und Synthese der vorstehend beschriebenen Sondenmoleküle auf dem jeweiligen Trägersystem erfolgt analog dem erfindungsgemäßen Herstellungsverfahren der Sonden-Arrays. Eventuelle Unterschiede in der Vorgehensweise, die sich durch die Verwendung z.B. von Mikrotiterplatten oder Reaktionsgefäßen anstelle von Array-Substraten ergeben, sind dem Fachmann ohne weiteres geläufig.

Der Einsatz von auf der Mikrotiterplatte bzw. am Gefäßboden bzw. an der Gefäßwand immobilisierten Sonden mit selektiv spaltbaren Bindungen bzw. Einheiten in Mikrotiterplatten und Reaktionsgefäßen läßt sich in zwei Ausführungsformen unterteilen.

Zum einen kann der Nachweis der Wechselwirkung einer Sonde, die wie vorstehend beschrieben z.B. mit einem Farbstoff, einem Goldpartikel, einem Latexkügelchen und dergleichen markiert ist, mit einem Target analog der vorstehend am Beispiel für Sonden-Arrays beschriebenen Vorgehensweise durch Detektion der nach der Spaltungsreaktion verbliebenen Marker an der Oberfläche des Gefäßes erfolgen.

Bei dieser Ausführungsform kann beispielsweise der Nachweis nach erfolgter Wäsche durch Messung des Marker-spezifischen Signals, z.B. Fluoreszenz bei einem entsprechenden Farbstoff, erfolgen. Ein homogener Assay ohne entsprechendes Waschen ist ebenfalls möglich. Voraussetzung hierfür ist der Einsatz von geeigneten Meßmethoden, wie z.B. der Fluoreszenz-Polarisationsmessung, die eine klare Unterscheidung des Signals gebundener und ungebundener Marker gestatten. Eine weitere Alternative bei der Durchführung eines derartigen Assays ist die Verwendung konfokaler optischer Aufbauten, die ausschließlich das Signal auf der Oberfläche erfassen. Eine Reihe von markerspezifischen Verfahren ist im Stand der Technik bereits gewürdigt und könnte in Analogie zu den Array-basierten Assays auch Einsatz in Mikrotiterplatten- oder Gefäß-basierten Assays finden.

Zum anderen kann der Nachweis der Wechselwirkung einer Sonde mit einem Target durch Detektion der nach der Spaltungsreaktion in Lösung befindlichen Marker erfolgen. Bei dieser Ausführungsform liefert der Nachweis in Lösung ein targetspezifisches Signal, wenn im Gefäß lediglich ein Target untersucht werden soll bzw. die unterschiedlichen zu untersuchenden Targets mit jeweils unterschiedlich markierten Sonden nachgewiesen werden, zum Beispiel bei Verwendung von vier Farbstoffen für vier Sonden.

Der Nachweis in Lösung bietet den Vorteil, mit sehr einfachen Aufbauten eine empfindliche Messung gewährleisten zu können und ist vor allem dann sinnvoll, wenn davon ausgegangen werden kann, daß die Unterschiede in der Bindung von Targets gegen die Oberfläche nur minimal sind, so daß eine vergleichende Messung des immobilisierten Signals ein starkes positives Signal liefern würde und die minimalen Veränderungen des Signals nicht signifikant ins Gewicht fallen. Homogene Assays lassen sich auf diese Weise ebenfalls realisieren, wenn ein Detektionsverfahren gewählt wird, das die Diskriminierung zwischen gebundenem und ungebundenem Signal gestattet, bspw. wären dies konfokale Korrelationsspektroskopie oder Fluoreszenz-Polarisationsmessungen.

Der Verzicht auf die Markierung des Targets und die Möglichkeit der Durchführung homogener Assays sind wesentliche Vorteile der Methode und sprechen auch für deren Einsatz z.B. bei Assays auf Mikrotiterplatten und in Reaktionsgefäßen.

Ein weiterer Gegenstand der vorliegenden Erfindung ist ein Kit zum qualitativen und/oder quantitativen Nachweis von Targets aus einer Probe durch molekulare Wechselwirkungen zwischen Sonden und Targets auf Sonden-Arrays, umfassend die folgenden Bestandteile:
a) ein erfindungsgemäßes Sonden-Array;
b) Reagenzien für die selektive Spaltung der selektiv spaltbaren Bindung in den Sonden;
c) Hybridisierungspuffer; und
d) ggf. Waschpulver.

Vorzugsweise werden die Reagenzien ausgewählt aus der Gruppe bestehend aus Schwermetallionen, z.B. Quecksilber- und/oder Silberionen.

Bei bevorzugten Ausführungsformen des Kits umfaßt das erfindungsgemäße Sonden-Array zusätzlich eine Reaktionskammer und/oder eine Detektionsvorrichtung und/oder eine Temperatursteuerungseinheit und/oder eine Lichtquelle.

Die Detetektionsvorrichtung wird vorzugsweise ausgewählt aus der Gruppe bestehend aus einem Fluoreszenzmikroskop, einem Laserscanner für Arrays, einem Mikroskop und einem CCD-basierten Scanner und zeichnet üblicherweise den gesamten Bereich des Sonden-Arrays auf.

Eine Lichtquelle wird vorzugsweise ausgewählt aus der Gruppe bestehend aus einem Laser, Laserdioden und einer Weißlichtquelle mit entsprechendem Filter.

Bei einer besonders bevorzugten Ausführungsform liegen der Sonden-Array und eine Reaktionskammer und/oder eine Detektionsvorrichtung und/oder eine Temperatursteuerungseinheit und/oder eine Lichtquelle als hochintegrierte autonome Einheit vor.

Das erfindungsgemäße Sonden-Array bzw. das erfindungsgemäße NachweisVerfahren bzw. der erfindungsgemäße Kit kann zum qualitativen und/oder quantitativen Nachweis von Targets aus einer Probe durch molekulare Wechselwirkungen zwischen Sonden und Targets, insbesondere zur Untersuchung des genotypischen Zustands und/oder des physiologischen Zustands von Zellen verwendet werden.

Im Rahmen der vorliegenden Erfindung wird ein Sonden-Array bereitgestellt, bei dem Oligonukleotide ortsspezifisch immobilisiert bzw. synthetisiert werden, die entgegengesetzt zur Immobilisierungsposition eine Markierung tragen. Zwischen der Immobilisierungs- und der Markierungsposition befindet sich vorzugsweise etwa in der Mitte eine labile Bindung, z.B. eine verbrückte Phosphothioat-Bindung.

Das erfindungsgemäße Sonden-Array wird unter Bedingungen, die eine spezifische Wechselwirkung, z.B. eine Hybridisierung, erlauben, mit einem Sample inkubiert. Targets mit Affinität zu den Sonden des Sonden-Arrays werden an diese binden. Gegebenenfalls erfolgen Schritte zum Entfernen der unspezifisch gebundenen Targets. Vorzugsweise wird die Verteilung der Markierungen auf der Oberfläche zur Überprüfung der Qualität des hergestellten Sonden-Arrays mit einem bildgebenden Verfahren dokumentiert. Anschließend wird die labile Bindung, z.B. durch Zugabe von Silberionen, geschnitten. Dies erfolgt unter Bedingungen, bei denen die spezifische Wechselwirkung zwischen Target und Sonde hinreichend stabil ist, um zu gewährleisten, daß die Markierung auch nach der Spaltung durch die Wechselwirkung zwischen Target und Sonde erhalten bleibt. Sonden, an denen keine spezifische oder gar keine Wechselwirkung mit Targets erfolgte, werden durch die Spaltung ihre Markierung verlieren. Das Ergebnis der Umsetzung wird vorzugsweise durch ein bildgebendes Verfahren dokumentiert. Aus der Markierungsintensität der einzelnen Sonden nach der Bindungsspaltung kann die An- bzw. Abwesenheit von Targets in der Probe abgeleitet werden.

Dadurch daß eine Markierung der Targetmoleküle nicht mehr erforderlich ist, können mittels des erfindungsgemäßen Sonden-Arrays erhebliche Einsparungen von Zeit und Kosten ermöglicht werden. Ferner ist die Markierung nicht mehr von der Beschaffenheit der nicht bekannten Targetmoleküle abhängig, so daß die Nachweisergebnisse vergleichbar werden. Ein weiterer Vorteil ist, daß die Markierung der Sonden auf dem Sonden-Array gut standardisierbar ist, insbesondere auch automatisierbar ist. Die markierten Sonden stellen ferner gleichzeitig eine Qualitätskontrolle für die Synthese und Immobilisierung der Sonden auf dem Sonden-Array dar. Schließlich ist durch eine Markierung von Sonden anstelle von Targets auch eine Standardisierung der Bildauswertung gewährleistet.

Die folgenden Beispiele und Abbildungen dienen der Erläuterung der Erfindung und sollen in nicht einschränkender Weise ausgelegt werden.

### Beispiele

### Beispiel 1:

### Synthese von 5'-S-(Dimethoxytrityl)-mercapto-5'-deoxythymidin-3'-O-(2-cyanoethyl, N,N'-diisopropyl-phosphit)

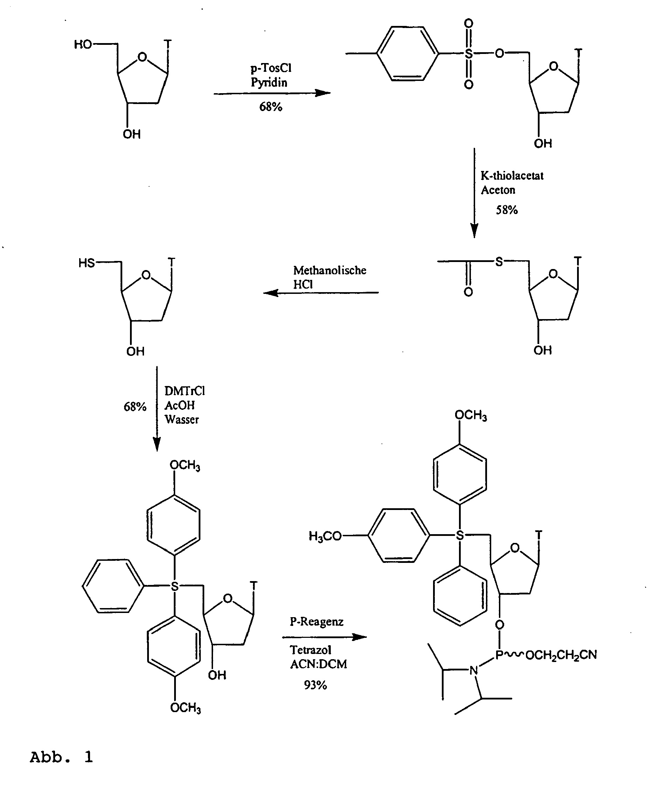

Die Synthese des Phosphoramidit-Bausteins gemäß Beispiel 1 erfolgt in fünf Schritten nach dem folgenden Syntheseschema (siehe auch Abbildung 1):

Thymidin wird in Pyridin suspendiert und auf 0°C gekühlt. Über einen Zeitraum von 30 min wird eine Lösung von p-Toluolsulfonsäurechlorid in Pyridin zugetropft und die Lösung über Nacht bei 4°C gerührt. Die Lösung wird in Eiswasser eingegossen und der entstandene Niederschlag wird abgesaugt, anschließend in Dichlormethan gelöst und 2 mal mit 5%iger Natriumhydrogencarbonat-Lösung und 1 mal mit gesättigter Natriumchlorid Lösung extrahiert. Die organische Phase wird über Natriumsulfat getrocknet und einrotiert. Die Ausbeute beträgt 68%.

5'-O-(p-Tolylsulfonyl)-thymidin und Kaliumthioacetat werden in Aceton suspendiert und für 3 h unter Argon-Atmosphäre auf 50°C erwärmt. Die Suspension rührt anschließend 16 h bei RT. Der Niederschlag wird abgesaugt und mit wenig Aceton nachgewaschen. Die Lösung wird am Rotationsverdampfer einrotiert und der Rückstand anschließend durch Säulenchromatographie gereinigt (Laufmittel Dichlormethan:Methanol 9:1). Die Ausbeute beträgt 58%.

5'-S-(Acetyl)-thymidin wird in Methanol gelöst und 5 molare methanolische Salzsäure zugeben, so daß die Endkonzentration an Säure 1 molar ist. Die Lösung wird unter Argon-Atmosphäre auf 45°C erwärmt und für 2 h gerührt. Die Lösung wird am Rotationsverdampfer auf etwa die Hälfte reduziert und zu einer Lösung aus DMTr-Cl in Essigsäure und Wasser gegeben. Die Lösung wird für 3 h bei Raumtemperatur gerührt und anschließend ebenfalls auf die Hälfte am Rotationsverdampfer reduziert. Die Lösung wird mit Wasser verdünnt und mit 2 molarer Natronlauge auf pH 10 eingestellt. Dichlormethan wird zugegeben und 2 mal mit 5%iger Natriumhydrogencarbonat Lösung und 1 mal mit gesättigter Natriumchlorid Lösung extrahiert. Die organische Phase wird über Natriumsulfat getrocknet und einrotiert, der Rückstand wird durch Säulenchromatographie gereinigt (Laufmittel Dichlormethan:Methanol 97:3). Die Ausbeute an 5'-S-(Dimethoxytrityl)-thymidin beträgt 68%.

Zu einer Lösung von 5'-S-(Dimethoxytrityl)-thymidin in Dichlormethan:Acetonitril wird unter Argon-Atmosphäre Tetrazol zugegeben und anschließend Phosphorigsäure-bis-(diisopropylamid)-2-cyanethylester langsam zugetropft. Nach 2 Stunden wird die Reaktion durch Zugabe von n-Butanol gequencht. Die Lösung wird mit Essigsäureethylester verdünnt und 2 mal mit 5%iger Natriumhydrogencarbonat Lösung und 1 × mit gesättigter Natriumchlorid Lösung extrahiert. Die organische Phase wird über Natriumsulfat getrocknet und einrotiert.

Der Rückstand wird in wenig Dichlormethan:Diethylether aufgenommen und in kaltes n-Pentan einpipettiert. Die Ausbeute an 5'-S-(Dimethoxytrityl)-mercapto-5'-deoxythymidin-3'-O-(2-cyanoethyl, N,N'-diisopropyl-phosphit) beträgt 93%.

Das hergestellte Amidit wird anschließend in ein Modelloligonukleotid (24 mer, siehe Beispiel 2) eingebaut.

### a) Charakterisierung der hergestellten Verbindungen

### 5'-O-(p-Tolylsulfonyl)-thymidin (C₁₇H₂₀N₂O₇S)

| | | | | |
|---|---|---|---|---|
| ESI(+)-MS | berechnete Masse: | | 396.42 g/mol | |
| | gefundene Masse: | | 397.1 g/mol | |
| Schmelzpunkt | | 168-169°C | | |
| Rf-Wert | | Dichlormethan:Methanol 9:1 | | 0.39 |
| ¹H-NMR | | DMSO | | |
| | | 1.75 (s, 3H, CH₃-T); 2.10 (m, 2H, 2',2"-H); 2.40 (s, 3H, CH₃-tosyl); 3.85 (m, 1H, 4'-H); 4.21 (m, 3H, 5',5"-H, 3'-H); 5.57 (d, 1H, 3'-OH); | | |
| | | 6.14 (t, 1H, 1'-H); 7.36 (d, 1H, 6-H); 7.44 (d, 2H, AA'BB'); 7.82 (d, 2H, AA'BB'); 11.31 (s, 1H, NH) | | |

### 5' -S-Acetyl-thymidin (C₁₂H₁₆N₂O₅S)

| | | | | |
|---|---|---|---|---|
| ESI(+)-MS | berechnete Masse: | | 300.33 g/mol | |
| | gefundene Masse: | | 301.2 g/mol | |
| Rf-Wert | | Dichlormethan:Methanol 9:1 | | 0.37 |
| ¹H-NMR | | DMSO | | |
| | | 1.81 (s, 3H, CH₃-T); 2.07 (m, 1H, 2'-H); 2.23 (m, 1H, 2"-H); 2.37 (s, 3H, O-Ac); 3.1 (m, 1H, 5'-H); 3.23 (m, 1H, 5"-H); 3.75 (m, 1H, 4'-H); 4.1 (m, 1H, 3'-H); 5.41 (d, 1H, 3'-OH);6.15 (t, 1H, 1'-H); 7.45 (d, 1H, 6-H); 11.03 (s, 1H, NH) | | |

### 5'-S-(Dimethoxytrityl)-thymidin (C₃₁H₃₂N₂O₆S)

| | | | | |
|---|---|---|---|---|
| ESI(-)-MS | berechnete Masse: | | 560.7 g/mol | |
| | gefundene Masse: | | 560.2 g/mol | |
| Rf-Wert | | Dichlormethan:Methanol 9:1 | | 0.51 |
| ¹H-NMR | | CDCl₃ | | |
| | | 1.86 (s, 3H, CH₃-T); 2.06 (m, 1H, 2'-H); 2.29 (m, 1H, 2"-H); 2.5 (m,, 1H, 5'-H); 2.54 (m, 1H, 5"-H); 3.78 (m, 7H, 4'-H, OCH₃); 4.1 (m, 1H, 3'-H); 6.16 (t, 1H, 1'-H); 6.83 (m, 5H, 6-H, aromatisch); 7.22-7.43 (m, 9H, aromatisch) | | |

### 5'-S-(Dimethoxytrityl)-mercapto-5'-deoxythymidin-3'-O-(2-cyanoethyl,N,N'-diisopropyl-phosphit) (C₄₀H₄₉NaO₇PS)

| | | | | |
|---|---|---|---|---|
| ESI(+)-MS | berechnete Masse: | | 760.86 g/mol | |
| | gefundene Masse: 760.86 g/mol | | 760.86 g/mol | |
| Rf-Wert | | Dichlormethan:Methanol 9:1 | | 0.65 |
| ³¹P-NMR | | CDCl₃ + 0.1% DIPEA | | |
| | | 149.55, 149.35 | | |

### Beispiel 2:

### Synthese eines Modelloligonukleotids 5'-AGC CCT TAC TTT GAC GGT ATA TCT-3'

Die Synthese des Oligonukleotides verläuft nach der Phosphodiester-Methode. Die Kupplungen der unmodifizierten Bausteine finden nach dem Standardprotokoll an einem DNA Synthesizer (Perseptive Biosystem bzw. Applied Biosystem, Weiterstadt, Deutschland) statt. Der modifizierte Baustein (unterstrichen) wird an einem DNA-Synthesizer (Applied Biosystem) nach einem modifizierten Syntheseprotokoll gekoppelt. Die weitere Synthese findet ebenfalls an einem DNA Synthesizer (Perseptive Biosystem) statt.

Die Kupplung des modifizierten Bausteins erfolgt hier durch die zweimalige Zugabe des Amidites und Tetrazol zur Säule (Double-Couple-Verfahren) und der Verlängerung der Kupplungszeit auf 300 s. Das anschließende Capping und die Oxidation erfolgen unter Standardbedingungen. Die Abspaltungszeit für die Detritylierung muß auf die fünffache Zeit verlängert werden und an die Detritylierung schließt sich direkt die Spülung der Säule mit einer DTT-Lösung an (220 mM DTT (1,4-Dithiothreitol)) in einer Lösung aus THF/Pyridin/Wasser 7/1/2). Die Spülung mit DTT-Lösung erfolgt nach folgendem Protokoll:
a. 30 s DTT-Lösung zur Säule gegeben
b. 30 s Wait-Schritt
c. 30 s DTT-Lösung zur Säule gegeben
d. 150 Wait-Schritt
e. 30 DTT-Lösung zur Säule gegeben
f. 150 Wait-Schritt
g. 30 s DTT-Lösung zur Säule gegeben
h. 150 s Wait-Schritt
i. 30 s DTT-Lösung zur Säule gegeben
j. 150 s Wait-Schritt
k. 30 s DTT-Lösung zur Säule gegeben

Die DTT-Lösung wird mit einem Waschschritt von der Säule gespült, der dem Standardprotokoll nach der Jod-Oxidation entspricht. Allerdings wurden hier die Wasch- und Spülschritte verdoppelt. Die weitere Synthese nach dem Einbau des modifizierten Bausteins erfolgt unter Standardbedingungen. Der Synthesemaßstab beträgt 1 µmol.

Das Oligonukleotid wird mit Ammoniak über Nacht behandelt. Was zur Abspaltung des Oligonukleotides von der festen Phase und der Entschützung der Basenschutzgruppen führt. Für die anschließende Reinigung wird die Ammoniak Lösung direkt auf eine R3-HPLC-Säule (Perseptive Biosystem) eingespritzt (Gradient 0-25% Puffer B in 10 min, Puffer A 0.1 molar TEAA-Lösung; Puffer B ACN). Die Produktfraktionen werden aufgefangen und das Lösungsmittel abgezogen und das Oligonukleotid wird anschließend als Natrium-Salz durch eine Ethanol-Fällung ausgefällt. Es schließt sich eine O.D.-Bestimmung des getrockneten Präzipitates an. Als Analytik dienen die HPL-Chromatographie, Gelelektrophorese und eine MALDI-MS Untersuchung.

Um die später durchzuführende Spaltung nachweisen zu können, werden als weitere Oligonukleotide die entstehenden Spaltungsbruchstücke und eine Kontrolle (unmodifiziertes Modellsequenz) synthetisiert. Die Synthese der Oligonukleotide erfolgt an dem Perseptive Biosystem-Synthesizer nach dem Standardprotokoll für eine 1 µmol-Synthese. Es erfolgt die Abspaltung und Entschützung mit Ammoniak über Nacht und die anschließende Reinigung über HPL-Chromatographie. Die Oligonukleotide werden als Na-Salz gefällt und ebenfalls analytisch durch HPL-Chromatographie, Gelektrophorese und MALDI-MS untersucht. Sie dienen als Kontrollen für die folgenden Spaltungsexperimente.

### Beispiel 3:

### Spaltung des Modelloligonukleotides

Die Spaltung des Modelloligonukleotides erfolgt durch die Zugabe von Silbernitrat. Das Experiment gestaltet sich wie folgt:

1 O.D. des Modelloligonukleotides wird mit 15 µl einer 50 mM Silbernitrat-Lösung versetzt und die Lösung steht für 1 h bei Raumtemperatur. Die Reaktion wird durch die Zugabe von 4 µl einer 220 mM DTT Lösung gequencht. Nach 1 h wird die Probe zentrifugiert und die Lösung abgenommen. Als Analytik schließt sich eine HPL-Chromatographie und eine Gelelektrophorese (15% TBE/Urea-Gel, 1,0 mm x 15 well, 250 V, 90 min) an. Die bei der Spaltung entstehenden Bruchstücke
5'-AGC CCT TAC T-3' (10 mer)
5'-HO-TT GAC GGT ATA TCT-3' (14 mer)
sowie das unmodifizierte Oligonukleotid
5'-AGC CCT TAC TTT GAC GGT ATA TCT-3'
dienen als Kontrollen.

Die HPL-Chromatogramme an einer Beckmann HPLC-Anlage (Gold-System) aufgenommen.

Folgende Puffer wurden verwendet:

| | | |
|---|---|---|
| Puffer A | Acetonitril | 400 ml |
| | Wasser | 1600 ml |
| | NaH₂PO₄×2H₂O | 3.12 g |
| | | |
| Puffer B | Acetonitril | 400 ml |
| | Wasser | 1600 ml |
| | NaH₂PO₄×2H₂O | 3.12 g |
| | NaCl | 175.32 g |

Folgender Gradient auf der Ionenaustauscher-Säule (Waters) wurde verwendet:
0 min. 5% Puffer B
40 min 60 % Puffer B

Die Retentionszeiten der Oligonukleotide sind in der folgenden Tabelle zusammengefaßt:

| | |
|---|---|
| 5'-TTG ACG GTA TAT CT-3' | 24.26 min |
| 5'- AGC CCT TAC T-3' | 23.22 min |
| 5'-AGC CCT TAC TTT GAC GGT ATA TCT-3' | 28.42 min |
| | |
| Durchgeführte Spaltungsreaktion | 23.49 min; 24.65 min |

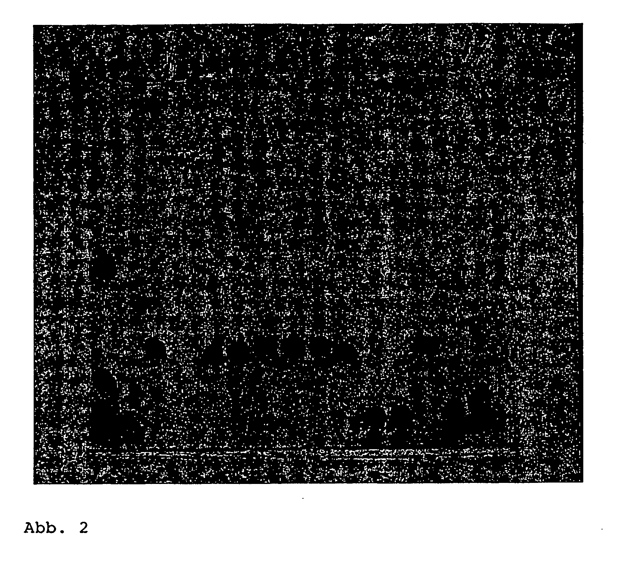

Das HPL-Chromatogramm und das Gelbild (siehe Abbildung 2) zeigen, daß die Spaltung des modifizierten Oligonukleotides quantitativ verläuft. Nach der Spaltungsreaktion können nur noch das 10- mer und das 14-mer detektiert werden. Es kann kein modifiziertes Oligonukleotid detektiert werden, während daß unmodifizierte Oligonukleotid nicht geschnitten wird und detektiert werden kann. Weitere Experimente zeigen, daß die Spaltung mit einer 10 mM Silbernitrat-Lösung innerhalb von 5 min. quantitativ verläuft.

Als weitere analytische Methode wurde eine Messung an einem Biacore-Gerät (Uppsala, Schweden) durchgeführt, um aufzuzeigen, daß die Spaltung auch an einer festen Phase möglich ist. Für diese Messungen wurde das folgende Oligonukleotid synthetisiert:
5'-Biotin-AGC CCT TAC TTT GAC GGT ATA TCT-3'

Das 5'-Ende des Oligonukleotides wurde mit Biotin (Firma Glen Research, Sterling, Virginia, USA) modifiziert. Die Synthese des Oligonukleotides erfolgt wie in Beispiel 2 beschrieben. Die weitere Modifikation am 5'-Ende wurde an einem Applied Biosytem 394-Synthesizer durchgeführt. Für die Synthese wurde ein Standardzyklus verwendet, dessen Kupplungszeit auf 300 s verlängert wurde. Die Aufreinigung und Aufarbeitung erfolgt ebenfalls wie in Beispiel 2 beschrieben. Es wurden für die Messungen weiterhin drei Oligonukleotide hergestellt, die unterschiedlich komplementäre Bereiche mit dem modifizierten Modelloligonukleotid aufweisen. Dabei handelt es sich um die folgenden drei Verbindungen, die nach Standardbedingungen synthetisiert und aufgereinigt wurden.
1. 5'-GCA GCT AGA TAT ACC GTC AA-3'
2. 5'-GCT AGA TAT ACC GTC AAA GT-3'
3. 5'-GAT ATA CCG TCA AAG TAA GG-3'
5'-AGC CCT TAC TTT GAC GGT ATA TCT-3'
3'-AA CTG CCA TAT AGA TCG ACG-5' (1.)
3'-TG AAA CTG CCA TAT AGA TCG-5' (2.)
3'-GGA ATG AAA CTG CCA TAT AG-3' (3.)

Für die Messungen am Biacore Gerät mußte zuerst ein Streptavidin-Chip hergestellt werden. Dafür wurde ein CM 5-Chip der Firma Biacore verwendet, der entsprechend modifiziert wurde. Der CM 5-Chip enthält auf der Oberfläche als funktionelle Gruppe die Carboxyl-Gruppe, die mit EDC/NHS aktiviert wird und anschließend mit einem Streptavidin-Derivat, das eine Amino-Gruppe aufweist, umgesetzt wird. Das biotinylierte Oligonukleotid wird durch die Zugabe von 25 µl einer 50 µmolaren Lösung an den Chip gebunden. Nach Anbindung des biotinylierten Modelloligonukleotides, wird das entsprechend komplementäre Oligonukleotid (1. bis 3.) gebunden, indem eine 500 mM Lösung für 5 min. zugeben wird (25µl Lösung). Die anschließende Spaltung mit einer 10 mM Silbernitrat-Lösung erfolgt innerhalb von 6 min. durch die Zugabe von 30 µl Lösung. Es folgt eine Spülung mit einer 0,5 molaren EDTA-Lösung an. Die anschließende Detektion zeigt eine vollständige Spaltung, auf dem Chip kann nur noch das entsprechende nicht abspaltbare 10mer detektiert werden.

### Beispiel 4:

### Synthese von Oligonukleotidsonden für die Verwendung auf einem Sonden-Array

Für die Anbindung an einen Chip wurden die folgenden Oligonukleotide synthetisiert:
5'-Amino-AGC CCT TAC TTT GAC GGT ATA TCT-3'
5'-Amino-AGC CCT TAC TTT GAC GGT ATA TCT-3' (Kontrollsequenz)

Die 5'-Enden der Oligonukleotide wurden mit einem Amino-Link modifiziert (Firma Glen Research). Die Synthese der Oligonukleotide erfolgt wie in Beispiel 2 beschrieben. Die weitere Modifikation am 5'-Ende wurde am Applied Biosytem 394 Synthesizer durchgeführt. Für die Synthese wurde ein Standardzyklus verwendet, dessen Kupplungszeit auf 300 s verlängert wurde. Die Aufreinigung und Aufarbeitung erfolgte ebenfalls wie in Beispiel 2 beschrieben.

### Beispiel 5:

### Vergleich der Hybridisierungseigenschaften eines Oligonukleotids mit einer verbrückten Phosphothioat-Bindung mit einem unmodifizierten Oligonukleotid

Auf einer epoxidierten Pyrex-Glasoberfläche wurden zwei Oligonukleotide mit gleicher Sequenz von jeweils 24 Basen Länge immobilisiert. Synthese und Struktur der Oligonukleotide wurden in Beispiel 4 beschrieben. Beide Oligonukleotide verfügten über eine Aminomodifikation am 5'Ende. Bei einem Oligonukleotid handelte es sich um unmodifizierte DNA, während das andere Oligonukleotid etwa in der Mitte des Moleküls eine Rückgratmodifizierung aufwies.

Die Rückgratmodifikation wurde durch Austausch einer Phosphodiesterbindung des Oligonukleotids gegen eine verbrückte Phosphothioat-Bindung erzeugt. Die dadurch entstandene Bindung unterscheidet sich von allen anderen Bindungen des jeweiligen Oligonukleotids. Sie kann daher selektiv angegriffen und gespalten werden, z.B. durch Schwermetallionen wie Quecksilberionen oder Silberionen.

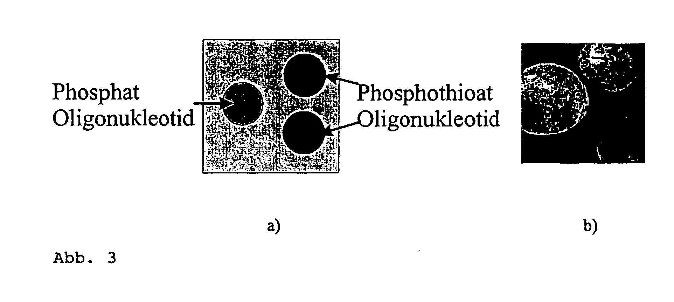

Das Ablegen der Sonden erfolgte mit einer Eppendorf-Pippette (Einstellung 0,1µl) aus einer jeweils 10 µM-Lösung der Oligonukleotide in 0,5 M Phosphatpuffer pH 8,0. Es wurden zwei Tropfen des Phosphothiat-Oligonukleotides und ein Tropfen des Phosphat-Oligonukleotides pro Chip abgelegt. Die Anordnung der Sonden ist in Abbildung 3a wiedergegeben.

Kovalente Verknüpfung des Aminolinkers der Oligonukleotide mit der Epoxidoberfläche der Arrays wurde erreicht, indem die abgelegten Tropfen bei Raumtemperatur eingetrocknet und anschließend für 30 min bei 60 °C inkubiert wurden. Anschließend erfolgte ein Waschen der Chips nach folgendem Protokoll:
5 min in 100 ml H₂O bidest + 100 µl Triton x 100
2 x 2 min in 100 ml H₂O bidest
30 min in 100ml 100 mM KCl-Lösung
1 min in 100ml H₂O bidest spülen
trocknen

Anschließend wurde eine Hybridisierung mit einem vollständig komplementären, am 5'-Ende mit einem Cy3-Farbstoff markierten Oligonukleotid von 24 Basen Länge (MWG Biotech, Ebersberg) durchgeführt. Zu diesem Zweck wurden 50 µl einer 100 nM Lösung des komplementären Oligonukleotides in Hybridisierungspuffer (0,25M NaPO₄, 4,5% SDS, 1mM EDTA in 1xSSC) in ein 1,5 ml Reaktionsgefäß (Eppendorf, Hamburg, Deutschland) gegeben. Nach Zugabe des Chips erfolgte ein Denaturierungsschritt für 5 min bei 95°C. Die Hybridisierung erfolgte anschließend für 1 h bei 60°C. Die Chips wurden unter Schütteln in einem Thermoschüttler (Eppendorf, Hamburg, Deutschland) für je 10 min bei 30°C in 2xSSC+0,2%SDS und 2xSSC und anschließend für 10 min bei 20°C in 0,2xSSC (Maniatis et al., 1989) gewaschen. Das Volumen betrug jeweils 500 µl. Der Chip wurde für 5 min in einem Vakuum-Konzentrator (Eppendorf, Hamburg, Deutschland) getrocknet. Die Detektion der Hybridisierungssignale erfolgte unter einem Zeiss-Fluoreszenzmikroskop (Zeiss, Jena, Deutschland). Die Anregung erfolgte im Auflicht mit einer Weißlichtquelle und einem für Cy 3 geeigneten Filtersatz. Die Signale wurden mit einer CCD-Kamera (PCO-Sensicam, Kehlheim, Deutschland) aufgezeichnet. Die Belichtungszeit betrug 1000 ms.

An beiden Sondenmolekülen wurde ein Hybridisierungssignal mit gleicher Intensität detektiert (Abbildung 3b). Folglich zeigen Phosphothioat- und Phosphat-Oligonukleotide weitgehend vergleichbare Hybridisierungseigenschaften.

### Beispiel 6:

### Spezifische und effektive Spaltung der verbrückten Phosphothioat-Bindung in immobilisiertem Oligonukleotiden mit Silberionen

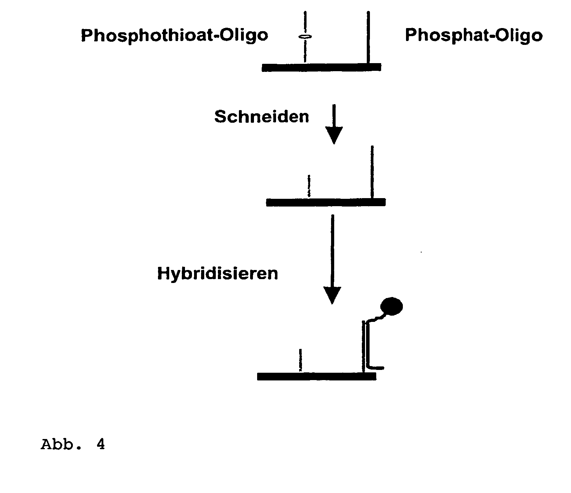

Das Experiment aus Beispiel 5 wurde wiederholt, allerdings wurde zuvor die Array-Oberfläche mit Silberionen behandelt. Dadurch wurden die Phosphothioat-Bindungen gespalten, während die Phosphatdieester-Oligonukleotidbindungen ungeschnitten blieben. Nach der Hybridisierung wurde an den nicht modifizierten Oligonukleotidsonden ein starkes Hybridisierungssignal detektiert, während das Signal an den Phosphothioat-modifizierten Sonden weitgehend verschwunden war. Das Prinzip des Experiments ist in Abbildung 4 dargestellt.

Auf einer epoxidierten Pyrex-Glasoberfläche wurden zwei Oligonukleotide mit gleicher Sequenz von jeweils 24 Basen Länge immobilisiert Synthese und Struktur der Oligonukleotide wurden in Beispiel 4 beschrieben. Beide Oligonukleotide verfügten über eine Aminomodifikation am 5'-Ende. Bei einem Oligonukleotid handelte es sich um unmodifizierte DNA, während das andere Oligonukleotid etwa in der Mitte des Moleküls eine Rückgratmodifizierung aufwies.

Die Rückgratmodifikation wurde durch Austausch einer Phosphodiesterbindung des Oligonukleotids gegen eine verbrückte Phosphothioat-Bindung erzeugt. Die dadurch entstandene Bindung unterscheidet sich von allen anderen Bindungen des jeweiligen Oligonukleotids. Sie kann daher selektiv angegriffen und gespalten werden, bspw. durch Schwermetallionen wie Quecksilberionen oder Silberionen.

Das Ablegen der Sonden erfolgte mit einer Eppendorf-Pippette (Einstellung 0,1 µl) aus einer jeweils 10 µM-Lösung der Oligonukleotide in 0,5 M Phosphatpuffer pH 8,0. Es wurden zwei Tropfen des Phosphothiat-Oligonukleotides und ein Tropfen des Phosphat-Oligonukleotides pro Chip abgelegt. Die Anordnung der Sonden ist in Abbildung 3 wiedergegeben.

Kovalente Verknüpfung des Aminolinkers der Oligonukleotide mit der Epoxidoberfläche der Arrays wurde erreicht, indem die abgelegten Tropfen bei Raumtemperatur eingetrocknet und anschließend für 30 min bei 60 °C inkubiert wurden. Anschließend erfolgte ein Waschen der Chips nach folgendem Protokoll:
5 min in 100 ml H₂O bidest + 100 µl Triton x 100
2 x 2 min in 100 ml H₂O bidest
30 min in 100ml 100 mM KCl-Lösung
1 min in 100ml H₂O bidest spülen
trocknen

Zur selektiven Spaltung der Phosphothioat-Bindung wurden die Chips für 20 min bei 30°C in 100 µl Silbemitratlösung inkubiert. Die Konzentrationen betrugen 1 M, 200 mM, 50 mM und 10 mM. Im Anschluß an die Silbernitratspaltung wurden die Chips 2x 5min in entionisiertem Wasser gewaschen.

Anschließend erfolgte Hybridisierung mit einem vollständig komplementären, am 5'-Ende mit einem Cy3-Farbstoff markierten Oligonukleotid von 24 Basen Länge (MWG Biotech, Ebersberg). Zu diesem Zweck wurden 50 µl einer 100 nM Lösung des komplementären Oligonukleotides in Hybridisierungspuffer (0,25 M NaPO₄, 4,5% SDS, 1 mM EDTA in 1xSSC) in ein 1,5 ml Reaktionsgefäß (Eppendorf, Hamburg, Deutschland) gegeben. Nach Zugabe des Chips erfolgte ein Denaturierungsschritt für 5 min bei 95°C. Die Hybridisierung erfolgte anschließend für 1 h bei 60°C. Die Chips wurden unter Schütteln in einem Thermoschüttler (Eppendorf, Hamburg, Deutschland) für je 10 min bei 30°C in 2xSSC+0,2%SDS und 2xSSC und anschließend für 10 min bei 20°C in 0,2xSSC (Maniatis et al., 1989) gewaschen. Das Volumen betrug jeweils 500 µl. Der Chip wurde für 5 min in einem Vakuum-Konzentrator (Eppendorf, Hamburg, Deutschland) getrocknet. Die Detektion der Hybridisierungssignale erfolgte unter einem Zeiss-Fluoreszenzmikroskop (Zeiss, Jena, Deutschland). Die Anregung erfolgte im Auflicht mit einer Weißlichtquelle und einem für Cy3 geeigneten Filtersatz. Die Signale wurden mit einer CCD-Kamera (PCO-Sensicam, Kehlheim, Deutschland) aufgezeichnet. Die Belichtungszeit betrug 1000 ms.

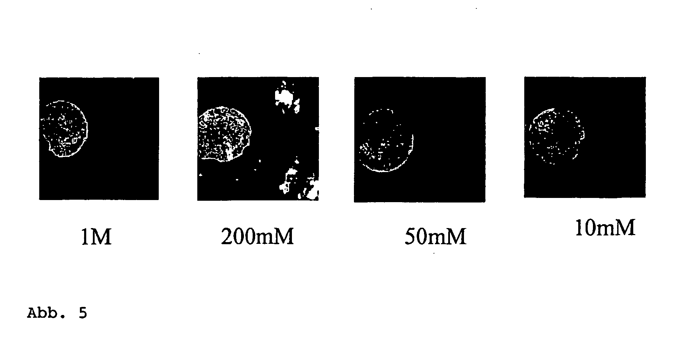

Im Vergleich zur Hybridisierung ohne Silbernitratbehandlung des Chips (Beispiel 5) war die Signalintensität an den Spots, auf denen das Phosphothioat-Oligo immobilisiert wurde, deutlich minimiert und liegt an der Detektionsgrenze, während die Signalintensität an dem mit dem Phosphat-Oligo belegten Spot unverändert blieb (siehe Abbildung 5). Folglich kann die Phosphothioatbindung selektiv und effizient geschnitten werden.

### Beispiel 7:

### Bindungsspaltung im hybridisierten Zustand und Untersuchung der Stabilität des gespaltenen Hybrids

In diesem Beispiel wurde dasselbe Sonden-Array wie in Beispiel 5 verwendet. Allerdings erfolgte zunächst Hybridisierung mit einem komplementären-markierten Oligonukleotid und erst anschließend eine Behandlung mit 50 mM AgNO₃ für eine Dauer von 30 Min. bei 0°C. Obwohl eine Bindungsspaltung des Phosphothioat-Oligonukleotids stattfand, konnte unter geeigneten Bedingungen, z.B. einer Erhöhung der Ionenstärke durch Zugabe von 1M NaNO₃, die Hybridisierung sowohl am Phosphothioat-modifizierten Oligonukleotid als auch am nicht modifizierten Phosphat-Oligonukleotid nachgewiesen werden. Nach Abschmelzen der Hybride und erneuter Hybridisierung mit dem komplemetären 24mer unter stringenten Bedingungen ist nur noch am ungespaltenen Phosphat-Oligonukleotid ein starkes Hybridisierungssignal detektierbar. Dies zeigt, daß auch im hybridisierten Zustand eine effiziente Spaltung der Phosphothioat-Bindung erfolgt, das Hybrid unter geeigneten Bedingungen aber hinreichend stabilisiert werden kann, um eine Dissoziation nach Bindungsspaltung zu unterbinden.

Auf einer epoxidierten Pyrex-Glasoberfläche wurden zwei Oligonukleotide mit gleicher Sequenz von jeweils 24 Basen Länge immobilisiert Synthese und Struktur der Oligonukleotide wurden in Beispiel 4 beschrieben. Beide Oligonukleotide verfügten über eine Aminomodifikation am 5'Ende. Bei einem Oligonukleotid handelte es sich um unmodifizierte DNA, während das andere Oligonukleotid etwa in der Mitte des Moleküls eine Rückgratmodifizierung aufwies.

Die Rückgratmodifikation wurde durch Austausch einer Phosphodiesterbindung des Oligonukleotids gegen ein verbrücktes Phosphothioat erzeugt. Die dadurch entstandene Bindung unterscheidet sich von allen anderen Bindungen des jeweiligen Oligonukleotids. Sie kann daher selektiv angegriffen und gespalten werden, bspw. durch Schwermetallionen wie Quecksilberionen oder Silberionen.

Das Ablegen der Sonden erfolgte mit einer Eppendorf-Pippette (Einstellung 0,1 µl) aus einer jeweils 10 µM-Lösung der Oligonukleotide in 0,5 M Phosphatpuffer pH 8;0. Es wurden zwei Tropfen des Phosphothiat-Oligonukleotides und ein Tropfen des Phosphat-Oligonukleotides pro Chip abgelegt. Die Anordnung der Sonden ist in Abbildung 3a wiedergegeben.

Kovalente Verknüpfung des Aminolinkers der Oligonukleotide mit der Epoxidoberfläche der Arrays wurde erreicht, indem die abgelegten Tropfen bei Raumtemperatur eingetrocknet und anschließend für 30 min bei 60 °C inkubiert wurden. Anschließend erfolgte ein Waschen der Chips nach folgendem Protokoll:
5 min in 100 ml H₂O bidest + 100 µl Triton x 100
2 x 2 min in 100 ml H₂O bidest
30 min in 100 ml 100 mM KCl-Lösung
1 min in 100 ml H₂O bidest spülen
trocknen

Anschließend erfolgte Hybridisierung mit einem vollständig komplementären, am 5'-Ende mit einem Cy3-Farbstoff markierten Oligonukleotid von 24 Basen Länge (MWG Biotech, Ebersberg). Zu diesem Zweck wurden 50 µl einer 100 nM Lösung des komplementären Oligonukleotides in Hybridisierungspuffer (0,25 M NaPO₄, 4,5% SDS, 1 mM EDTA in 1xSSC) in ein 1,5 ml Reaktionsgefäß (Eppendorf, Hamburg, Deutschland) gegeben. Nach Zugabe des Chips erfolgte ein Denaturierungsschritt für 5 min bei 95°C. Die Hybridisierung erfolgte anschließend für 1 h bei 60°C. Die Chips wurden unter Schütteln in einem Thermoschüttler (Eppendorf, Hamburg, Deutschland) für je 10 min bei 30°C in 2xSSC+0,2%SDS und 2xSSC und anschließend für 10 min bei 20°C in 0,2xSSC (Maniatis et al., 1989) gewaschen und 5 min in einem Vakuum-Konzentrator (Eppendorf, Hamburg, Deutschland). Die Hybridisierungssignale wurden unter einem Zeiss - Fluoreszenzmikroskop (Zeiss, Jena, Deutschland) detektiert. Die Anregung erfolgte im Auflicht mit einer Weißlichtquelle und einem für Cy 3 geeigneten Filtersatz. Die Signale wurden mit einer CCD-Kamera (PCO-Sensicam, Kehlheim, Deutschland) aufgezeichnet. Die Belichtungszeit betrug 1000 ms.

Zur selektiven Spaltung der Phosphothioat-Bindung wurden Chip für 20 min bei 0°C in 100 µl 50 mM AgNO₃ ,1M NaNO₃ inkubiert. Im Anschluß an die Silbernitratspaltung wurden die Chips 2 x 5min in 500 µl 1 M NaNO₃ auf Eis gewaschen.

Der Chip wurde für 5 min in einem Vakuum Konzentrator (Eppendorf, Hamburg, Deutschland) getrocknet. Die Detektion der Hybridisierungssignale erfolgte wie oben beschrieben.

Anschließend wurde der Chip 3x für 10 min bei 95°C in 500 µl entionisiertem Wasser gewaschen. Dadurch wurden die Hybride aufgeschmolzen. Es folgte eine zweite Hybridisierung. 50 µl einer 100 nM Lösung des vollständig komplementären, am 5'-Ende mit einem Cy3-Farbstoff markierten Oligonukleotid von 24 Basen Länge (MWG Biotech, Ebersberg) in Hybridisierungspuffer (0,25 M NaPO₄, 4,5% SDS, 1 mM EDTA in 1xSSC) wurde in ein 1,5 ml Reaktionsgefäß (Eppendorf, Hamburg, Deutschland) gegeben. Nach Zugabe des Chips erfolgte ein Denaturierungsschritt für 5 min bei 95°C. Die Hybridisierung erfolgte anschließend für 1 h bei 60°C. Die Chips wurden unter Schütteln in einem Thermoschüttler (Eppendorf, Hamburg, Deutschland) für je 10 min bei 30°C in 2xSSC+0,2%SDS und 2xSSC und anschließend für 10 min bei 20°C in 0,2xSSC (Maniatis et al., 1989) gewaschen. Das Volumen betrug jeweils 500 µl. Anschließend wurden die Hybridisierungssignale wie oben beschrieben detektiert.

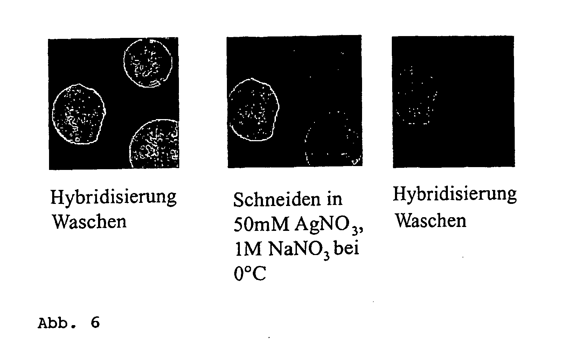

Abbildung 6 zeigt von links nach rechts Aufnahmen des selben Arrays nach verschiedenen Schritten des Experimentes: nach der Hybridisierung des Targets, nach Bindungsspaltung, sowie nach Abschmelzen der Hybride und erneuter Hybridisierung unter stringenten Bedingungen. Es zeigte sich einerseits, daß die Bindungsspaltung auch im hybridisierten Zustand effektiv verläuft: Nach Abschmelzen der Hybride und erneuter Hybridisierung ist nur am nicht spaltbaren Phosphat-Oligonukleotid ein starkes Hybridisierungsignal zu beobachten. An den Phosphothioat-Oligonukleotiden wird lediglich ein geringes Hybridisierungsignal an der Detektionsgrenze beobachtet, da die nach Bindungsspaltung an der Oberfläche verbleibenden 10mere unter den stringenten Hybridisierungsbedingungen keine stabilen Hybride bilden.

### Beispiel 8:

### Herstellung und Qualitätsüberprüfung eines Sonden-Arrays sowie Nachweis unter Verwendung des Sonden-Arrays

Es wird ein Array hergestellt, das insgesamt 52 gegen 8 in vitro RNAs gerichtete Sonden enthält. Die Sonden sind durch eine spaltbare Bindung und eine Markierung gekennzeichnet. Nach der Herstellung des Arrays wird die Qualität der Spots überprüft. Anschließend erfolgt Hybridisierung mit einem definierten Gemisch der 8 unmarkierten *in vitro* RNAs. Die labile Bindung wird geschnitten. Nach Waschen werden die am Array verbleibenden Signale detektiert. Die Signalintensitäten an den Spots entsprechen denen von Vergleichsexperimenten mit markierter RNA und unmarkierten, nicht spaltbaren Sonden.

Dies dokumentiert die Eignung des Verfahrens zum Nachweis von molekularen Wechselwirkungen auf Sonden-Arrays. In einer Versuchsreihe von je zehn Experimenten, nach dem klassischen und dem erfindungsgemäßen Detektionsverfahren zeigt sich, daß die Streuung der nach dem erfindungsgemäßen Verfahren ermittelten Werte deutlich geringer ist als die der nach dem klassischen Verfahren gewonnen.

### a) Design und Herstellung der Sonden

Das Design der Sonden richtet sich nach der Sequenz der nachzuweisenden *in vitro* RNAs. Der Designprozeß berücksichtigt die Zugänglichkeit der Target-Region für eine potentielle Sonde, die möglichen Wechselwirkungen mit Teilen des gleichen Moleküls oder aber auch mögliche Wechselwirkungen zwischen Targetmolekülen in Lösung bzw. unerwünschten, die Spezifität negativ beeinflussenden Wechselwirkungen mit unterschiedlichen Sonden. Es wird berücksichtigt, daß eine Spaltstelle eingefügt sein sollte. Diese Spaltstelle ist jeweils das T, welches am nächsten zur Mitte der Sonde angeordnet ist. Es weist eine 5'-Phosphothioat-Bindung auf. Neben den 52 Target-spezifischen Sonden (1-52) werden 3 Kontrollsonden (Sonde 53-55) hergestellt. Sonde 53 und 54 besitzen keine spaltbare Bindung. Sonde 53 trägt eine Markierung, während Sonde 54 unmarkiert ist. Sonde 55 hybridisiert nicht mit den Targetsequenzen und dient zur Definition des experimentellen Hintergrundsignals.

Nach Festlegung der Sondensequenz werden diese synthetisch erzeugt wie z.B. in Beispiel 2 dargestellt. Die Sequenzen der Sonden sind in der folgenden Tabelle angegeben:

| | | | | |
|---|---|---|---|---|
| 1 | TCTAAAACCTGGCCAGCAATCATTC | 3'Cy3 | 5'NH2 | Phosphothiotat |
| 2 | GCCCGGGCATTTCTCTCATTAACAT | 3'Cy3 | 5'NH2 | Phosphothiotat |
| 3 | TTCGAAAAGATTGCCTCCACATCAG | 3'Cy3 | 5'NH2 | Phosphothiotat |
| 4 | GTCTCATCTTTCTTCACGGAGCTGC | 3'Cy3 | 5'NH2 | Phosphothiotat |
| 5 | TGCTTGTTTGCTCTGTTCCTTTTCA | 3'Cy3 | 5'NH2 | Phosphothiotat |
| 6 | TCCAGGTTTTCCAGGAGAGAATCCA | 3'Cy3 | 5'NH2 | Phosphothiotat |
| 7 | TCTGGGTCAGCTCCTTCTTAATGGC | 3'Cy3 | 5'NH2 | Phosphothiotat |
| 8 | TCTAGAGGATGCATTTGACATGCCA | 3'Cy3 | 5'NH2 | Phosphothiotat |
| 9 | TGTTACATTTGTGTTGAACTGCCCC | 3'Cy3 | 5'NH2 | Phosphothiotat |
| 10 | AATGAGATTGCCTTTGCAGTTAGGG | 3'Cy3 | 5'NH2 | Phosphothiotat |
| 11 | TTCTTTTGCCCTAGCTCCAAGTTCA | 3'Cy3 | 5'NH2 | Phosphothiotat |
| 12 | TCGTCCAACAAATACTTTGCGATCA | 3'Cy3 | 5'NH2 | Phosphothiotat |
| 13 | AATAGCTCTTTCAGCTGCTTCCTGC | 3'Cy3 | 5'NH2 | Phosphothiotat |
| 14 | TACAAATCCATAGCCCTTGGAACCA | 3'Cy3 | 5'NH2 | Phosphothiotat |
| 15 | TATGTTGCCTACTCCACTTTTGCGA | 3'Cy3 | 5'NH2 | Phosphothiotat |
| 16 | TGTTCAAATTTGCGCTTAAGTTCCG | 3'Cy3 | 5'NH2 | Phosphothiotat |
| 17 | TTTGTTTTCCATTGAGCTCCTTTCC | 3'Cy3 | 5'NH2 | Phosphothiotat |
| 18 | TTACTTTCACACTTAAGGCAGGCCC | 3'Cy3 | 5'NH2 | Phosphothiotat |
| 19 | GACATGACTCGTGGAACCTGTGAAG | 3'Cy3 | 5'NH2 | Phosphothiotat |
| 20 | TAAATGGTGGTCTAGGAGCAGCTGG | 3'Cy3 | 5'NH2 | Phosphothiotat |
| 21 | TTGGCTAGGAGGATAGTATGCAGCA | 3'Cy3 | 5'NH2 | Phosphothiotat |
| 22 | AACACAGCGTGTTGCTAACACATCA | 3'Cy3 | 5'NH2 | Phosphothiotat |
| 23 | CTGTCCGCACCGTTCCACAGTATAA | 3'Cy3 | 5'NH2 | Phosphothiotat |
| 24 | CAGCAACATCTTAATGCACAGCCAC | 3'Cy3 | 5'NH2 | Phosphothiotat |
| 25 | AAGTTACAATGCAACAGCCTGCTGT | 3'Cy3 | 5'NH2 | Phosphothiotat |
| 26 | TCTAAAACCTGGCCAGCAATCATTCTGCCA | 3'Cy3 | 5'NH2 | Phosphothiotat |
| 27 | CTCTCCTGCTACAGCAGCCCGGGCATTTCT | 3'Cy3 | 5'NH2 | Phosphothiotat |
| 28 | CGAAGGCAAAGCCCTTATGAACAGAGCAGC | 3'Cy3 | 5'NH2 | Phosphothiotat |
| 29 | TCCCAATGAATACACGGGAGTTCATGGAGC | 3'Cy3 | 5'NH2 | Phosphothiotat |
| 30 | GGATCTGTCTTGTTGGTAACGTTGCTGGCC | 3'Cy3 | 5'NH2 | Phosphothiotat |
| 31 | TCATCTTTCTTCACGGAGCTGCTGCTCTGC | 3'Cy3 | 5'NH2 | Phosphothiotat |
| 32 | TGGGTCAGCTCCTTCTTAATGGCCTGAAGG | 3'Cy3 | 5'NH2 | Phosphothiotat |
| 33 | AGAATTGAAGCCACTTTTGCCCCTTCGTGA | 3'Cy3 | 5'NH2 | Phosphothiotat |
| 34 | TACATTTGTGTTGAACTGCCCCACACAGCA | 3'Cy3 | 5'NH2 | Phosphothiotat |
| 35 | TCAAAGGAAGTGAAAATGGGACTAGGCGCG | 3'Cy3 | 5'NH2 | Phosphothiotat |
| 36 | ATGTGCTTAAGAGTCATCCTCGCCATTGGC | 3'Cy3 | 5'NH2 | Phosphothiotat |
| 37 | AGCTCTTTCAGCTGCTTCCTGCGTCTCAAA | 3'Cy3 | 5'NH2 | Phosphothiotat |
| 38 | ACTCCACTTTTGCGAAGTGATGGATCACGC | 3'Cy3 | 5'NH2 | Phosphothiotat |
| 39 | GAGACCACATGATGCGTACTGGCTTGCCCT | 3'Cy3 | 5'NH2 | Phosphothiotat |
| 40 | TCAAAATTCATGGTGTCCAAAGCACGCTCC | 3'Cy3 | 5'NH2 | Phosphothiotat |
| 41 | GCCGGCTGCTGGAAGTTCACATACGCGTAG | 3'Cy3 | 5'NH2 | Phosphothiotat |
| 42 | TTCAAATTTGCGCTTAAGTTCCGTCTGCCG | 3'Cy3 | 5'NH2 | Phosphothiotat |
| 43 | TTGAGCTCCTTTCCGTTCATCTCATCCACA | 3'Cy3 | 5'NH2 | Phosphothiotat |
| 44 | AAGGCGCTCATCATCCATGTCTTCTCCAAA | 3'Cy3 | 5'NH2 | Phosphothiotat |
| 45 | CATGACTCGTGGAACCTGTGAAGAAGCTGG | 3'Cy3 | 5'NH2 | Phosphothiotat |
| 46 | ACTAAATGGTGGTCTAGGAGCAGCTGGGCG | 3'Cy3 | 5'NH2 | Phosphothiotat |
| 47 | AGCACCGGGCATATTTTGGAATGGATGAGG | 3'Cy3 | 5'NH2 | Phosphothiotat |
| 48 | ACCCTGAGCAGTCCAGCGAGGACTTGGTCT | 3'Cy3 | 5'NH2 | Phosphothiotat |
| 49 | CTACTCCTGCTGTCCGCACCGTTCCACAGT | 3'Cy3 | 5'NH2 | Phosphothiotat |
| 50 | TGCAGGAGTTCGCAATCCTCAGCAACATCT | 3'Cy3 | 5'NH2 | Phosphothiotat |
| 51 | TGCACAGCCACAAGTTACAATGCAACAGCC | 3'Cy3 | 5'NH2 | Phosphothiotat |
| 52 | TCAGGAACCTTTGACTGCTTCCATGTTGGC | 3'Cy3 | 5'NH2 | Phosphothiotat |
| 53 | CCTCTGCAGACTACTATTAC | 3'Cy3 | 5'NH2 | |
| 54 | CCTCTGCAGACTACTATTAC | | 5'NH2 | |
| 55 | CCTCTGCAGACTACTATTAC | 3'Cy3 | 5'NH2 | Phosphothiotat |

### b) Herstellung des Arrays

Arrays werden durch Spotten von spezifischen Sonden auf vorgefertigte Arrayingsubstrate erzeugt. Als Substrate werden epoxidierte Glasträger benutzt. Die oben aufgeführten targetspezifischen Sonden weisen neben der Phosphothioatmodifikation eine Cy3-Markierung am 3'-Ende der Sequenz und einen Aminolink am 5'-Terminus auf. Zusätzlich zu den Target-spezifischen Sonden werden Sonde 55 als Hintergrundkontrolle und verschiedene Mischungsverhältnisse von Sonde 53 und 54 im Bereich von 1 bis 1: 10.000 als Eichreihe zur Kalibrierung der Ergebnisse immobilisiert. Die Sonden liegen in Mikrotiterplatten in einer Konzentration von 10 µM in 0,5 M Phosphatpuffer vor. Das Spotten der Sonden erfolgt mit einem Spottingsystem der Fa. Biorobotics (Microgrid II). Nach der Deposition der Sonden auf der Oberfläche werden die Arrays 30 min bei 60°C gebacken und gemäß dem nachfolgendem Protokoll gewaschen:
5 min in 600 ml H₂O bidest + 600 µl Triton x 100
2 x 2 min in 600 ml H₂O bidest
30 min in 600ml 100 mM KCl-Lösung
1 min in 600ml H₂O bidest spülen
trocknen

Die Sonden werden in 3 Subarrays jeweils in 3-facher Redundanz angeordnet.

### c) Qualitätskontrolle

Die Qualität der immobilisierten Sonden wird durch Detektion des Fluoreszenzsignals auf dem Array durchgeführt. Die Signalintensitäten S₀ werden mit einem Laser Scanner vom Typ Scan array 4000 (GSI-Lumonics, USA) gemessen. Die Intensitäten werden auf einen Wert normiert, indem Einzelintensitäten mit einem Korrekturfaktor (kₐ) versehen werden. Aus diesem läßt sich in direktem Zusammenhang die Anzahl der Moleküle pro Spot in Relation zu anderen Spots ableiten. Die Faktoren werden abgespeichert und dienen der Festlegung, ob das Array insgesamt bei vorgesehenen Analysen Verwendung finden kann. Die gemessenen Intensitäten/Spot werden in jedem Spot auf den Wert 1 normiert (S_{0.}/k_{a n}=1).

### d) Hybridisierungstargets

Acht *in vitro-*RNAs mit den nachfolgenden Sequenzabschnitten werden verwendet:

### e) Hybridisierung der RNA

Die in vitro erzeugten RNAs werden über ein 5%iges denaturierendes PAA-Gel gereinigt (Maniatis et al., 1989), gefällt in entionisiertem Wasser aufgenommen, spektrophotometrisch vermessen und auf eine einheitliche Konzentration von 2 µM eingestellt. Die RNAs werden äquimolar in 100 µl Hybridisierungspuffer (0,25 M NaPO₄, 4,5% SDS, 1 mM EDTA in 1 x SSC) aufgenommen. Die Endkonzentration beträgt 40 nM. Die Hybridisierungslösung wird für 5 Minuten bei 80°C denaturiert. Die mit DNA belegte Fläche des Slides wird mit einer Hybridisierungskammer (Hybriwell, Sigma, Deisenhofen, Deutschland) gedeckelt. Das Slide wird auf einem Thermoschüttler mit Mikrotiterplattenaufsatz (Eppendorf, Hamburg, Deutschland) auf 50°C vortemperiert. Anschließend wird die denaturierte Hybridisierungslösung eingefüllt und die Hybridisierungskammer nach Herstellerangaben verschlossen. Die Inkubation wird für 60 min bei 50°C fortgesetzt. Anschließend wird die Hybridisierungslösung abgenommen, die Hybridisierungskammer entfernt und die Slides unter Schütteln 10 min bei 30°C in 2 x SSC + 0,2% SDS und jeweils 10 Minuten bei 20°C in 2 x SSC und 0,2 x SSC gewaschen und mit Druckluft getrocknet.

### f) Selektive Spaltung der Phosphothioat-Bindung

Zur selektiven Spaltung der Phosphothioat-Bindung werden die Arrays für 20 min bei 0°C unter Schütteln in einem Plastikgefäß in 2 ml 50 mM AgNO₃, 1 M NaNO₃, inkubiert, so daß die Arrays vollständig bedeckt sind. Im Anschluß an die Silbernitratspaltung werden die Chips 2 x 5 min in 50 ml 1 M NaNO₃ auf Eis gewaschen. und anschließend unter Druckluft oder Argon getrocknet. Dabei ist darauf zu achten, daß die Lösung vollständig entfernt wird, da sonst Trocknungsränder entstehen. Die Hybridisierungssignale S₁ werden mit einem Laser Scanner vom Typ Scan array 4000 (GSI-Lumonics, USA) detektiert. Das Bild wird unter den identischen Detektor-Einstellungen erzeugt, die auch bei der Qualitätskontrolle Verwendung fanden. Abschließend wird unter Verwendung der in der Qualitätskontrolle gewonnenen Faktoren das Array auf die Sonden-spezifischen Intensitäten bezogen korrigiert. Es wird für jeden Spot die Gleichung (S_{1 n}*k_{a n} =S_{2 n}.) angewandt.

Anschließend wird von allen Werten der Hintergrund abgezogen. Dieser stellt das Mittel der Signalintensitäten S_{2 n} von allen Spots dar, die mit Oligonukleotid 55 belegt sind.

Es ergibt sich S_{2 n'} =S_{2 n}-S_{2 Oligo55}.

Die korrigierten Werte geben ein weitaus realistischeres Bild der Intensitäts- und damit der Konzentrationsverteilung der Targets in Lösung. Dies ist insbesondere bei quanitativen Messungen der differentiellen Genexpression von Bedeutung, ebenfalls aber bei der Abschätzung der Validität von Signalen. Das normierte, auf den Spots verbleibende Signal ist direkt proportional zur Menge der in Lösung vorliegenden Targets.

Beim Vergleich der Intensitäten verschiedener Arrays wird eine weitere Skalierung vorgenommen. Es wird ein Faktor errechnet, der die Unterschiede der Signalintensitäten der Eichspots, in denen Oligo 53 und 54 in unterschiedlichen molaren Verhältnissen gemischt wurde wiedergibt. Bei der Bestimmung des Skalierungsfaktors werden nur die Eichspots berücksichtigt, die im dynamischen Bereich der Detektion liegen.

Die auf jedem Array bestimmnten Werte S_{2 n}' werden mit dem Skalierungsfaktor multipliziert.

### g) Auswertung der Ergebnisse

Die Auswertung der Ergebnisse wird unter Zuhilfenahme des Softwarepakets Iconoclust (Clondiag) durchgeführt, das unter Anwendung von Programmscripten sowohl die Bestimmung der oben genannten Faktoren gestattet als auch deren Einrechnung bei der Anwendung der genannten Arrays. Grundsätzlich ist dies auch mit einem Tabellenkalkulationsprogramm möglich.

### Beispiel 9:

### Synthese von Oligonukleotiden mit verbrückter Phosphothioat-Bindung auf Array-Oberflächen.

Auf einer Array-Oberfläche wurden u.a. zwei Oligonukleotide mit gleicher Sequenz von jeweils 24 Basen Länge synthetisiert. Bei dem einen Oligonukleotid handelte es sich um ein unmodifiziertes Oligonukleotid, welches durch Synthese mit Standard-Phosphoramiditen erzeugt wurde. In das andere sequenzgleiche Oligonukleotid wurde durch Kopplung eines Phosphothioatamidites eine Phosphor-Schwefel-Bindung eingeführt. Diese unterscheidet sich von allen anderen Bindungen des jeweiligen Oligonukleotids. Sie kann daher selektiv angegriffen und gespalten werden, bspw. durch Schwermetallionen wie Quecksilberionen oder Silberionen. Dieses Beispiel zeigt die Möglichkeit, Oligonukleotide mit verbrückter Phosphothioat-Bindung auf Array-Oberflächen zu synthetisieren.

### Array-Herstellung

Auf einem mit Hydroxylgruppen modifizierten 4 Zoll-Borofloatwafer (PEG-Oberfläche) wurde an einem OligoPilotII (Pharmacia) mit der Standard-Phosphoramiditmethode die Sequenz (3'→5') TCT-ATA-TGG-CAG unter Erhalt der letzten DMT-Schutzgruppe synthetisiert. Diese wurde dann durch Entschützung mittels einer 128 µm-Maske (4 Kanäle pro Chip) an definierten Positionen entfernt. Anschließend wurde an den nun für die Synthese zugänglichen Stellen ein dT-Amidit (DMT-ON) gekoppelt. Im Anschluß daran wurde nochmals durch die gleiche 128 µm-Maske entschützt, jedoch wurde deren Position bezogen auf die erste Maskenentschützung um 256 µm verschoben.

Vor der Weiterverwendung wurde der Wafer in Chips der Abmaße 3,4 x 3,4mm zersägt. Die folgenden Syntheseschritte wurden an einem Expedite (Applied Biosystems) durchgeführt:

Zur Kopplung des spaltbaren 5'-(S-Dimethoxytrityl)-mereapto-5'-deoxythyrnidin-3'-phosphoramidits (0,1 M Lösung) wurden die Standardkopplungsprotokolle des 1 µmol scales modifiziert: 900 s Kopplungszeit, 250 s Deblocking, 600 s Spülen mit einer 220 mM DTT-Lösung in THF/Pyridin/Wasser (7/1/2). Anschließend wurde ein dT-Amidit gekoppelt, dann die restliche Sequenz (3'→5') CAT-TCC-CGA (Deblocking, Capping und Oxidation entsprechend dem Standard-Protokoll 0,2 µmol scale). Für den Oxidationsschritt wurde eine Lösung mit geringerer Jodkonzentration verwendet (0,02 M Jod, Fa. Roth). Zur Entfernung der Basenschutzguppen wurden die Arrays abschließend in 30-33% Ammoniak (Fa. Roth) 35 min bei 55°C behandelt.

### Hybridisierung

Anschließend wurde eine Hybridisierung mit einem vollständig komplementären, am 5'-Ende mit einem Cy3-Farbstoff markierten Oligonukleotid von 24 Basen Länge (MWG Biotech, Ebersberg) durchgeführt. Zu diesem Zweck wurden 50 µl einer 10 nM Lösung des komplementären Oligonukleotides in Hybridisierungspuffer (6x SSPE, 0,1% SDS) in ein 1,5 ml Reaktionsgefäß (Eppendorf, Hamburg, Deutschland) gegeben. Nach Zugabe des Chips erfolgte ein Denaturierungsschritt für 5 min bei 95°C. Die Hybridisierung erfolgte anschließend für 1 h bei 50°C. Die Chips wurden unter Schütteln in einem Thermoschüttler (Eppendorf, Hamburg, Deutschland) für je 10 min bei 30°C in 2xSSC+0,2%SDS und 2xSSC und anschließend für 10 min bei 20°C in 0,2xSSC (Maniatis et al., 1989) gewaschen. Das Volumen betrug jeweils 500 µl. Der Chip wurde für 5 min in einem Vakuum-Konzentrator (Eppendorf, Hamburg, Deutschland) getrocknet. Die Detektion der Hybridisierungssignale erfolgte unter einem Zeiss-Fluoreszenzmikroskop (Zeiss, Jena, Deutschland). Die Anregung erfolgte im Auflicht mit einer Weißlichtquelle und einem für Cy 3 geeigneten Filtersatz. Die Signale wurden mit einer CCD-Kamera (PCO-Sensicam, Kehlheim, Deutschland) aufgezeichnet. Die Belichtungszeit betrug 1000 ms.

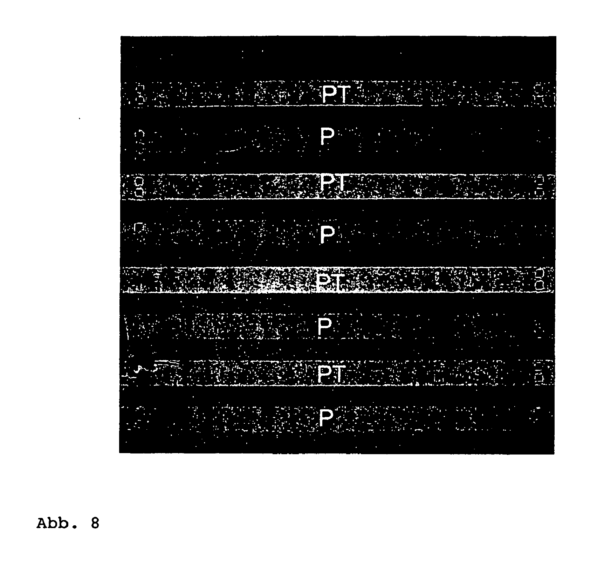

Die Aufnahme des Arrays nach der Hybridisierung ist in Abbildung 8 gezeigt. Die Bahnen, die das unmodifizierte Oligonukleotid (Match-Sonde) enthalten, sind mit P bezeichnet. Die mit PT gekennzeichneten Bahnen enthalten das sequenzgleiche Oligonukleotid (Match-Sonde) mit der Phosphothiat-Modifikation. Die dazwischen liegenden Bahnen enthalten ein Oligonukleotid, das sich von den beiden anderen durch eine T-Deletion etwa in der Mitte des Moleküls unterscheidet (Mismatch-Sonde). Die starken Hybridisierungssignale im Bereich des Phosphothioat-modifizierten Oligonukleotides zeigen, daß der Einbau des 5'-(S-dimethoxytrityl)-mercapto-5'-deoxythymidine-3'-phosphoramidits auf Array-Oberflächen möglich ist und dabei Sonden mit guten Hybridisierungseigenschaften entstehen.

### Beispiel 10:

### Synthese von Oligonukleotiden mit verbrückter Phosphothioat-Bindung auf Array-Oberflächen und Nachweis der Spaltbarkeit der Bindung durch anschließende Hybridisierung

In diesem Experiment wurde ein Array wie in Beispiel 9 hergestellt und anschließend Bedingungen unterworfen, die eine Spaltung der Phosphothioat-Bindung bewirken. Die Spaltung der Bindung wurde durch anschließende Hybridisierung mit einem komplementären Oligonukleotid nachgewiesen.

### Spaltung der Phosphothioat-Bindung mit Silberionen

Die Arrays wurden in einem Reaktionsgefäß (Eppendorf) mit einer 50 mM Silberntratlösung 15 min bei 30°C behandelt. Anschließend wurde in folgender Reihenfolge gespült: 1x Aqua dest. 50°C 10min, 2x Aqua dest. 22°C je 10min. Die Arrays wurden in einem Vakuum-Konzentrator (Eppendorf) getrocknet.

### Hybridisierung

Anschließend wurde eine Hybridisierung mit einem vollständig komplementären, am 5'-Ende mit einem Cyanine 3-Farbstoff markierten Oligonukleotid von 24 Basen Länge (MWG Biotech, Ebersberg) durchgeführt. Zu diesem Zweck wurden 50 µl einer 10 nM Lösung des komplementären Oligonukleotides in 6x SSPE, 0,1% SDS, (Maniatis et al., 1989) in ein 1,5 ml Reaktionsgefäß (Eppendorf) gegeben. Nach Zugabe des Chips erfolgte ein Denaturierungsschritt für 5 min bei 95°C. Die Hybridisierung erfolgte anschließend für 1 h bei 50°C. Die Chips wurden unter Schütteln in einem Thermoschüttler (Eppendorf) für je 10 min bei 30°C in 2xSSC+0,2%SDS und 2xSSC und anschließend für 10 min bei 20°C in 0,2xSSC (Maniatis et al., 1989) gewaschen. Das Volumen betrug jeweils 500 µl. Der Chip wurde für 5 min in einem Vakuum-Konzentrator (Eppendorf) getrocknet. Die Detektion der Hybridisierungssignale erfolgte unter einem Zeiss-Fluoreszenzmikroskop (Zeiss). Die Anregung erfolgte im Auflicht mit einer Weißlichtquelle und einem für Cyanine 3 geeigneten Filtersatz. Die Signale wurden mit einer CCD-Kamera (PCO-Sensicam, Kehlheim, Deutschland) aufgezeichnet. Die Belichtungszeit betrug 1000 ms.

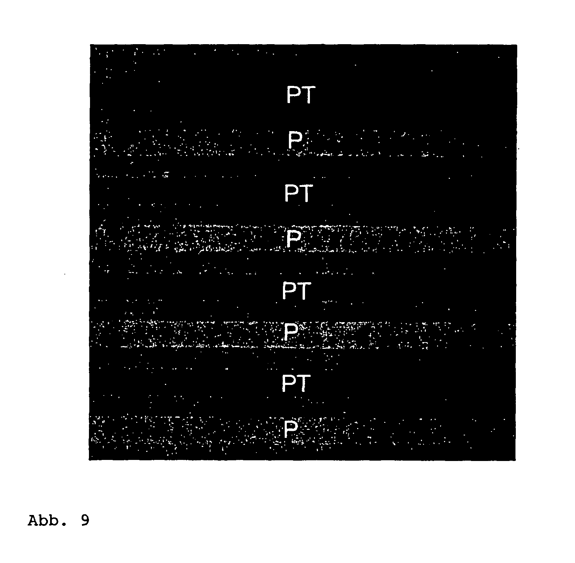

Die Aufnahme des Arrays nach Spaltung der Phosphothiotat-Bindung und anschließender Hybridisierung ist in Abbildung 9 gezeigt. Die Bahnen, die das unmodifizierte Oligonukleotid (Match-Sonde) enthalten, sind mit P bezeichnet. Die mit PT gekennzeichneten Bahnen enthalten das sequenzgleiche Oligonukleotid (Match-Sonde) mit der Phosphothioat-Modifikation. Die dazwischen liegenden Bahnen enthalten ein Oligonukleotid, das sich von den beiden anderen durch eine T-Deletion etwa in der Mitte des Moleküls unterscheidet (Mismatch-Sonde).

Die gegenüber den am unmodifizierten Oligonukleotid (P) deutlich reduzierten Hybridisierungssignale im Bereich des Phosphothioat-modifizierten Oligonukleotides (PT) zeigen, daß die auf Array-Oberflächen erzeugten Oligonukleotide mit Phosphothioat-Bindung effizient durch Silberionen geschnitten werden können.

### Beispiel 11:

### Synthese von markierten Oligonukleotiden mit verbrückter Phosphothioat-Bindung auf Array-Oberflächen, Hybridisierung mit einem komplementären unmarkierten Oligonukleotid und Nachweis der Hybridisierung durch Spaltung der Phosphothioat-Bindung

Auf einer Array-Oberfläche wurden u.a. zwei Oligonukleotide mit gleicher Sequenz von jeweils 24 Basen Länge synthetisiert. Bei dem einen Oligonukleotid handelte es sich um ein unmodifiziertes Oligonukleotid, welches durch Synthese mit Standard-Phosphoramiditen erzeugt wurde. In das andere sequenzgleiche Oligonukleotid wurde durch Kopplung eines Phosphothioatamidites eine Phosphor-Schwefel-Bindung eingeführt. Diese unterscheidet sich von allen anderen Bindungen des jeweiligen Oligonukleotids. Sie kann daher selektiv angegriffen und gespalten werden, bspw. durch Schwermetallionen wie Quecksilberionen oder Silberionen. Die auf dem Array synthetisierten Sonden wurden an deren 5'-Ende mit einem Cy3-Farbstoff markiert.

Dann wurde auf zwei identischen Arrays die Phosphothioat-Bindung von Oligonukleotidsonden geschnitten. Einer der Arrays wurde zuvor mit einem zur Sonde komplementären, unmarkierten Oligonukleotid hybridisiert. Die Hybridisierung konnte nachgewiesen werden, indem durch die Hybridisierung die Markierung der Sonde am Array zurückgehalten wird, während diese beim nicht hybridisierten Array verloren geht.

### Array-Herstellung

Die Herstellung der Arrays folgte zunächst dem in den beiden vorangegangenen Ausführungsbeispielen 9 und 10 verwendeten Protokoll. Im Anschluß erfolgte die Kopplung des Farbstoffes Cyanine 3 (Amersham Pharmacia) auf DMT-off ohne Capping per Hand nach folgendem Protokoll:
Die Kopplung eines Gemisches aus Cy3-Amidit und dA-Amidit (jeweils 0,1M Stammlösungen gemischt im Verhältnis 1:9) erfolgte unter Argonatmosphäre. Zuerst wurden die Chips in kleinen Säulen plaziert und mit wasserfreiem Acetonitril gespült. Anschließend wurden innerhalb von 5 min 2 ml eines Gemisches aus 1 ml Cy3-Amidit/dA-Amidit-Gemisch und 1 ml DCI-Aktivator über die Säule gegeben. Danach wurde mit 10 ml Acetonitril gespült, mit 1 ml Oxidizer oxidiert und zum Schluß nochmals mit 10 ml Acetonitril gespült.

### Hybridisierung

Einer der beiden Arrays wurde wie in Beispiel 9 und 10 beschrieben mit dem komplementären Oligonukleotid hybridisiert.

### Selektive Spaltung der Phosphothioat-Bindung

Zur selektiven Spaltung der Phosphothioat-Bindung wurden sowohl der hybridisierte als auch der nicht hybridisierte Array für 20 min bei 0°C unter Schütteln in jeweils einem Reaktionsgefäß (Eppendorf) in 100 µl 50 mM AgNO₃, 1 M NaNO₃ inkubiert, so daß die Arrays vollständig bedeckt waren. Im Anschluß an die Silbernitratspaltung wurden die Chips 2 x 5min in 50 ml 1M NaNO₃ auf Eis gewaschen und anschließend in einem Vakuum Konzentrator (Eppendorf, Hamburg, Deutschland) getrocknet.

Die Hybridisierungssignale wurden mit einem Laser Scanner vom Typ Scan array 4000 (GSI-Lumonics, USA) detektiert.

### Ergebnisse

Im Falle des nicht hybridisierten Arrays erfolgte nach Silberspaltung eine deutliche Schwächung des Signales in den die Phosphothioat-Sonde enthaltenden Bahnen, während das Signal in allen anderen Bahnen unverändert blieb.

Im Gegensatz dazu blieb bei dem erst nach Hybridisierung mit Silberionen behandelten Array das Signal in den Phosphothioat-Bahnen größtenteils erhalten. Dieses Ergebnis zeigt, daß in situ synthetisierte Oligonukleotid-Sonden mit einer verbrückten Phosphothioat-Bindung zur Detektion von Hybriden mit unmarkierten Targets verwendet werden können.

### Beispiel 12:

### Darstellung von 5'-O-(4,4'-Dimethoxytrityl)-thymidylyl-(3'→5')-3'-O-[(2-cyanoethyl)-N,N-diisopropylamidophosphoramidit]-2'-desoxythymidin

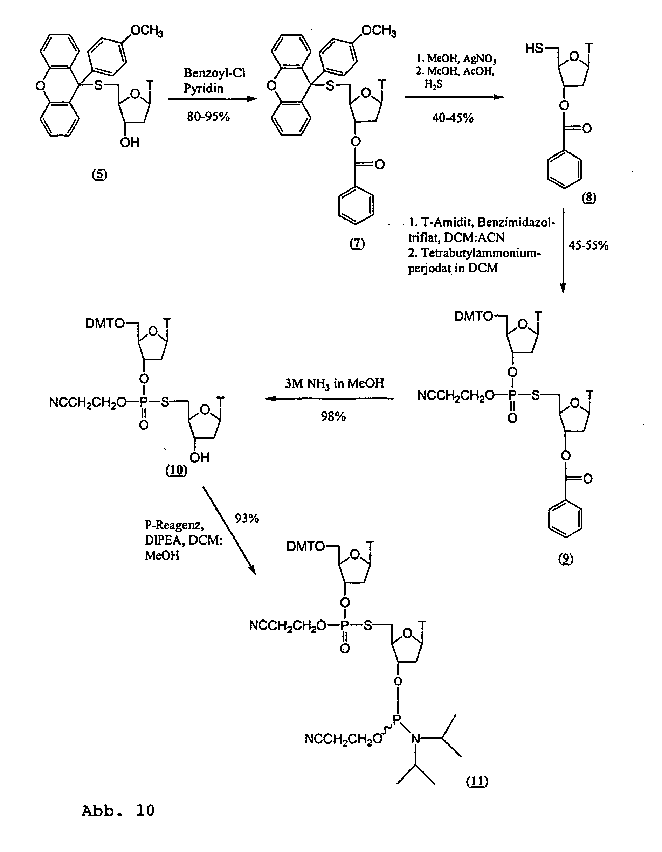

Die Synthese von 5'-O-(4,4'-Dimethoxytrityl)-thymidylyl-(3'→5')-3'-O-[(2-cyanoethyl)-N,N-diisopropylamidophosphoramidit]-2'-desoxythymidin erfolgt gemäß Beispiel 12 nach dem in Abbildung 10 gezeigten Syntheseschema.

### 5'-S-[9-(4-Methoxyphenyl)xanthen-9-thio]-3'-O-benzoyl-2'-desoxythymidin (7)

### Ansatzgröße:

1.47 g 5'-S-[9-(4-Methoxyphenyl)xanthen-9-thio]-2'-desoxythymidin (**5**) (2,7mmol)
0,568 g Benzoylchlorid (4,04 mmol) (Darstellung siehe Beispiel 13)
20 ml Pyridin

### Durchführung:

5'-S-[9-(4-Methoxyphenyl)xanthen-9-thio]-2'-deoxythymidin (**5**) wird in Pyridin unter Schutzgasatmosphäre gelöst und bei Eiskühlung wird langsam Benzoylchlorid zugetropft. Nach 3 h kann per DC (Laufmittel DCM:MeOH 9:1) kein Edukt mehr detektiert werden. Der Ansatz wird in 400 ml Eiswasser eingegossen und der entstandene Niederschlag wird abgesaugt. Da der Niederschlag auf der Fritte ausölt, wird der ölige Feststoff in Dichlormethan gelöst und die organische Phase mit gesättigter Natriumchlorid Lösung extrahiert. Die organische Phase wird über Magnesiumsulfat getrocknet und einrotiert.
R=1.66 g

### Analytik:

| | | | |
|---|---|---|---|
| Ausbeute | 93% | | |
| Rf-Wert: | Laufmittel | Dichlormethan:Methanol 95:5 | 0.52 |
| | | Dichlormethan :Methanol 9:1 | 0.77 |

| ESI(-)MS | C₃₇H₃₂N₂O₇S |
|---|---|
| Berechnet | 648.65 |
| Gefunden | 671.3 (Na-Salz) |

### NMR:

¹H-NMR (250 MHz, CDCl₃): δ=8.87 (br. s, 1H, N-H), 8.58-8.55 (m, 1H, H-6), 7.90-7.87 (m, 2H, ortho-H Benzoyl), 7.52-7.35 (m, 15 H, aromatisch), 6.18-6.12 (dd, 1H, H-1'), 5.21-4.95 (m, 1H, H-3'), 3.95-3.94 (m, 1H, H-4'), 3.72 (s, 3H, OCH₃), 2.59-2.54 (m, 2 H, H-5', H-5'), 2.39-2.3 (m, 1 H, H-2'), 2.11-2.05 (m, 1H, H-2"), 1.88 (d 3H, CH₃-T)

### 5'-Thiol-3'-O-benzoyl-2'-desoxythymidin (8)

### Ansatzgröße:

| | |
|---|---|
| 1.5 g | 5'-S-[9-(4-Methoxyphenyl)xanthen-9-thio]-3'-OBzl-2'-desoxythymidin (7) (2.31 mmol) |
| 600 mg | Silbernitrat (3.53 mmol) |
| 300 µl | Pyridin |
| 80 ml | Methanol |
| 0.5 ml | Essigsäure |
| 40 ml | Methanol |

### Durchführung:

5'-S-[9-(4-Methoxyphenyl)xanthen-9-thio]-3'-OBzl-2'-desoxythymidin (7) wird in Methanol unter Schutzgasatmosphäre aufgelöst. Es erfolgt die Zugabe von Pyridin und Silbernitrat. Das Reaktionsgemisch rührt über Nacht. Der entstandene Niederschlag wird abgesaugt und mit wenig kaltem Methanol nachgewaschen. Der Niederschlag wird in Methanol aufgenommen und mit Essigsäure versetzt. In die Suspension wird Schwefelwasserstoff-Gas eingeleitet. Nach 30 min H₂S Einleitung wird mit Argon gespült und das entstandene Silbersulfid abfiltriert. Die Lösung wird vorsichtig, nicht bis zur Trockene, einrotiert. Zur Aufreinigung schließt sich eine Säulenchromatographie mit dem Laufmittel DCM:MeOH 98:2 an.
R = 0.4 g

### Analytik

| | | | |
|---|---|---|---|
| Ausbeute | 47.6% | | |
| Rf-Wert: Laufmittel | | Dichlormethan:Methanol 95:5 | 0.53 |
| | | Dichlormethan :Methanol 9:1 | 0.67 |

| ESI(-)MS | C₁₇H₁₇N₂O₅S |
|---|---|
| Berechnet | 361.39 |
| Gefunden | 360.9 |

### NMR:

¹H-NMR (250 MHz, DMSO-d6): δ=11.38 (br. s, 1H, N-H), 8.04-8.02 (m, 2H, ortho-H Benzoyl), 7.7-7.53 (m, 3 H, meta- und para-H Benzoyl), 6.3-6.24 (dd, 1H, H-1'), 5.46 (m, 1H, H-3'), 4.21 (m, 1H, H-4'), 3.32 (s, 3H, OCH₃), 2.95-2.90 (m, 1 H, H-5'), 2.66-2.60 (m, 1H, H-5"), 2.51 (m, 2 H, H-2' und H-2"), 1.83 (d 3H, CH₃-T)

### 5'-O-(4,4'-Dimethoxytrityl)-thymidylyl-(3'→5')-3'-O-benzoyl-2'desoxy-thymidin

### Ansatzgröße:

0.361 g 5'-Thiol-3'-O-Benzoyl-2'-desoxythymidin (**8**) (1 mmol)
0.745 g T-Amidit (1 mmol)
0.38 g Benzimidazol-Triflat (1.4 mmol)
5 ml DCM
5 ml ACN
Oxidation
0.876 g Tertbutylammoniumperjodat (2 mmol)

### Durchführung:

5'-Thiol-3'-O-Benzoyl-2'-desoxythymidin (**8**), T-Amidit, Benzimidazol-Triflat werden im Pumpenvakuum getrocknet (1 Tag). Die Reaktion wird durch die Zugabe von Acetonitril:Dichlormethan gestartet. Die Lösung rührt für 1 h bei RT und laut DC (LM DCM:MeOH 9:1) kann kein Edukt mehr detektiert werden. Es erfolgt die Zugabe desOxidationsmittels in 8 ml DCM. Die Reaktionslösung rührt 8 min und wird dann mit der vierfachen Menge an DCM verdünnt. Die Aufarbeitung erfolgt durch die Extraktion mit 5% iger Natriumsulfit und 5% iger Natriumhydrogencarbonat-Lösung. Die organische Phase wird über Magnesiumsulfat getrocknet und einrotiert. Zur Aufreinigung schließt sich eine Säulenchromatographie mit dem Laufmittel 0.5 L 1% MeOH in DCM, 0.5 L 2% MeOH in DCM und 0.5 L 3% MeOH in DCM an.
R = 0.719 g

### Analytik:

| | | | |
|---|---|---|---|
| Ausbeute | 70.5% | | |
| | | | |
| Rf-Wert: Laufmittel | | Dichlormethan:Methanol 95:5 | 0.096 |
| | | Dichlormethan:Methanol 9:1 | 0.32 |

| ESI(-)MS | C₅₁H₅₂N₅O₁₄PS |
|---|---|
| Berechnet | 1022.03 |
| Gefunden | 1020.8 |

### NMR

³¹P-NMR (CDCl₃): 17.26, 17.22 ppm

### 5'-S-(4,4'-Dimethoxytrityl)-thymidylyl-(3'→5')-2'-desoxythymidin (10)

### Ansatzgröße:

0.586g 5'-O-(4,4'-Dimethoxytrityl)-thymidylyl-(3'→5')-3'-OBzl-2'-desoxythymidin (9) (0.573 mmol)
2 ml 7 M Ammoniak in Methanol
3 ml Methanol

### Durchführung:

5'-O-(4,4'-Dimethoxytrityl)-thymidylyl-(3'→5')-3'-O-Benzoyl.2'-desoxythymidin (**9**) wird in ammonikalischem Methanol gelöst und steht über Nacht bei 55°C im Wasserbad. Die vollständige Abspaltung der Benzoyl-PG wird per Massenspektrometrie kontrolliert. Die Lösung wird einrotiert und mehrmals mit Methanol koevaporiert.
R = 0.485 g

### Analytik:

| | |
|---|---|
| Rf-Wert: Laufmittel Dichlormethan :Methanol 9:1 | Startfleck |

| ESI(-)MS | C₄₁H₄₄N₄O₁₃PS |
|---|---|
| Berechnet | 863.86 |
| Gefunden | 863.6 |

### 5'-O-(4,4'-Dimethoxytrityl)-thymidylyl-(3'→5')-3'-O-[(2-cyanoethyl)-N,N-diisopropylamidophosphoramidit]-thymidin (11)

### Ansatzgröße:

| | |
|---|---|
| 0.485 g | 5'-S-(4,4'-Dimethoxytrityl)-thymidylyl-(3'-→5')-2'-desoxythymidin (10) (0.561 mmol) |
| 0.16 g | Phosphorigsäure-mono-(2-cyanethylester)-diisopropylamid-chlorid (0.674 mmol) |
| 0.384 ml | N-Ethyldüsopropylamin (2.244 mmol) |

### Durchführung:

5'-S-(4,4'-Dimethoxytrityl)-thymidylyl-(3'→5')-2'-desoxythymidin (**10**) wird über Nacht im Pumpenvakuum getrocknet. Unter Schutzgasatmosphäre wird DCM:ACN und DIPEA zugegeben. Das Phosphitilierungsreagenz wird langsam bei Eiskühlung zugetropft. Per DC (Laufmittel 95:5) kann nach 1 h kein Edukt mehr detektiert werden. Die Reaktion wird durch die Zugabe von 0.5 ml Butanol gequencht. Die Reaktionslösung wird einrotiert und in 7.5 ml DCM:Diethylether aufgenommen und in 150 ml kaltes Pentan einpipettiert. Der entstandene Niederschlag wird abgesaugt und getrocknet.
R = 0.556 g (Ausbeute 93%)

### Analytik:

| | | | |
|---|---|---|---|
| Ausbeute | 93% | | |
| Rf-Wert: Laufmittel | | Dichlormethan:Methanol 9:1 | 0.12 |

| ESI(-)-MS | C₅₀H₆₁N₆O₁₄P₂S |
|---|---|
| Berechnet | 1064.08 |
| Gefunden | 1063.8 |

### NMR :

¹H-NMR (CDCl₃): δ= 140.82, 140.75; 15.99, 15.85

### Beispiel 13:

### Darstellung von 5'-S-9-[4-methoxyphenyl)xanthen-9-yl]-mercapto-2'-desoxythymidin-3'-O-(2-cyanoethyl, N,N'-diisopropyl-phosphit)

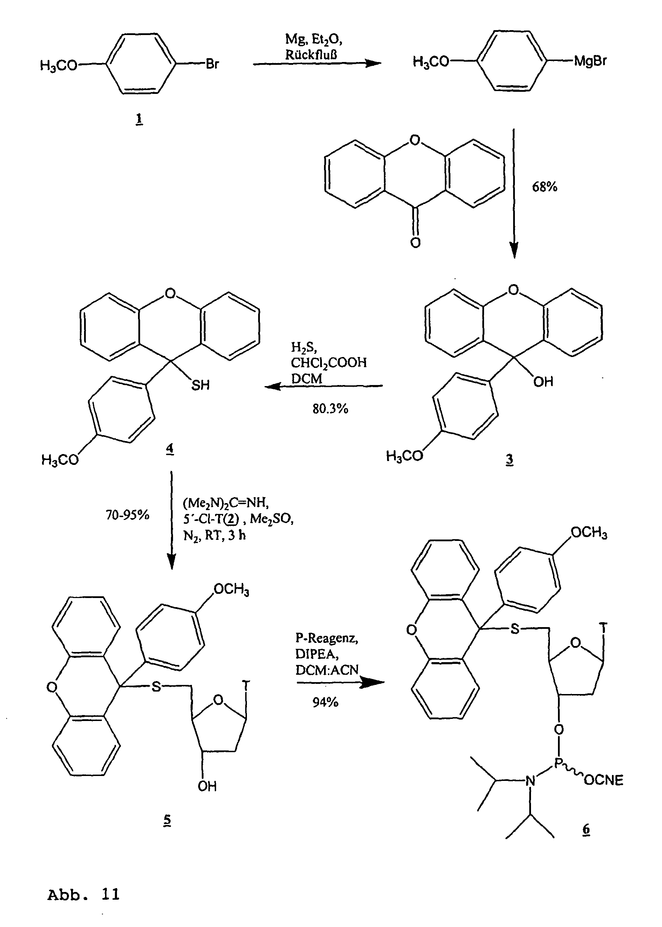

Die Darstellung von 5'-S-9-[4-methoxyphenyl)xanthen-9-yl]-mercapto-2'-desoxythymidin-3'-O-(2-cyanoethyl, N,N'-düsopropyl-phosphit) erfolgt gemäß Beispiel 13 nach dem in Abbildung 11 gezeigten Syntheseschema.

### Darstellung von 9-(4-Methoxyphenyl)xanthen-9-ol (3):

### Ansatzgröße:

| | | |
|---|---|---|
| 14.7 g | Magnesium-Späne | (0.6 mol) |
| 75 ml | 4-Bromanisol (1) | (0.6 mol) |
| 53.5 g | Xanthen-9-on | (0.27 mol) |
| 300 ml | Diethylether | |

### Durchführung:

Magnesium-Späne werden in 100 ml Diethylether suspendiert und eine Lösung aus Bromanisol (1) in 100 ml Diethylether langsam zugetropft. Sobald die Grignard-Reaktion einsetzt, wird die Reaktionslösung auf 15°C abgekühlt. Die verbleibende etherische Bromanisol-Lösung wird nun innerhalb von 20 min zugetropft, so daß die Reaktionslösung leicht siedet. Nach erfolgter Zugabe wird für eine weitere Stunde unter Rückfluß gesiedet und anschließend auf Raumtemperatur abgekühlt. In kleinen Portionen wird nun Xanthen-9-on innerhalb von 10 min. zugegeben und das Reaktionsgemisch mit weiteren 100 ml Diethylether versetzt und anschließend zum Sieden erhitzt. Die Lösung siedet für weitere 2 h. Nach dem Abkühlen wird das Reaktionsgemisch entgegen der Vorschrift aus Carbohydrate Research, 216 (1991) 257-69; Synthesis of 2'-thioadenosin; J.H. Mariott, M. Mottahedeh, C.B. Reese, mit Diethylether verdünnt, um den entstandenen Niederschlag absaugen zu können. Der abgesaugte Niederschlag wird mit Diethylether gewaschen und getrocknet. Der fein verriebene Feststoff wird in 300 ml conc. HCl (Eisbadkühlung) eingebracht. Die resultierende schwarz-rote Lösung wird in 2 L Eiswasser eingetropft. Die wäßrige Lösung wird dreimal mit 650 ml Dichlormethan extrahiert. Die organischen Phasen werden vereinigt und dreimal mit 1.5 L gesättigter Natriumhydrogencarbonat Lösung und zweimal mit 1 L Wasser extrahiert. Die organische Phase wird über Magnesiumsulfat getrocknet und einrotiert. Es erfolgt eine Umkristallisation aus Cyclohexan.
R = 56.43g

### Analytik:

| | | | |
|---|---|---|---|
| Ausbeute | 68% | | |
| Rf-Wert: Laufmittel | | Hexan:Essigsäureethylester 3:1 | 0.49 |

| ESI(+)MS | C₂₀H₁₆O₃ |
|---|---|
| Berechnet | 304.33 |
| Gefunden | 286.9 (Abspaltung der Hydroxyl-Gruppe) |

### NMR:

¹³C-NMR (CDCl₃): 55.15, 70.15, 113.23, 116.33, 123.47,127.36, 128.87, 128.91, 140.40, 149.66, 158.21

### Darstellung von 9-(4-Methoxyphenyl)xanthen-9-thiol (AXT) (4)

### Ansatzgröße:

| | | |
|---|---|---|
| 20.8 g | Dichloressigsäure | (0.25 mol) |
| 38.6 g | 9-(4-Methoxyphenyl)xanthen-9-ol (3) | (0.127 mol) |
| 1100 ml | Dichlormethan | |

### Durchführung:

In eine Lösung aus Dichloressigsäure in 500 ml Dichlormethan wird bei Eiskühlung für 15 min. H₂S eingeleitet. Eine Lösung aus 9-(4-Methoxyphenyl)xanthen-9-ol (3) in 600 ml Dichlormethan wird unter weiterer H₂S-Einleitung innerhalb 1 h zugetropft. Nach erfolgter Zugabe wird für weitere 15 min H₂S eingeleitet. Durch die anschließende Einleitung von Argon, soll überschüssiges H₂S verdrängt werden. Die Reaktionslösung wird anschließend dreimal mit 700 ml gesättigter Natriumhydrogencarbonat Lösung und zweimal mit 600 ml Wasser extrahiert. Die organische Phase wird über Magnesiumsulfat getrocknet und einrotiert. Es erfolgt eine Umkristallisation aus Cyclohexan.
R = 17.02 g

### Analytik:

| | | | |
|---|---|---|---|
| Ausbeute | 80.3% | | |
| | | | |
| Rf-Wert: Laufmittel | | Hexan:Essigsäureethylester 3:1 | 0.72 |

| ESI(+)MS | C₂₀H₁₆O₂S |
|---|---|
| Berechnet | 320.33 |
| Gefunden | 321.0 |

### NMR

¹³C-NMR (CDCl₃): 51.35, 55.25, 113.20, 116.40, 123.42, 128.32, 129.10, 129.43, 130.24, 138.23, 149.62, 159.49

### Darstellung von 5'-Chlor-2'desoxythymidin (2)

### Ansatzgröße:

| | | |
|---|---|---|
| 9.6 g | 2'-Desoxythymidin | (40 mmol) |
| 14 g | Triphenylphosphin | (54 mmol) |
| 20 ml | Tetrachlorkohlenstoff | (200 mmol) |
| 200 ml | DMF | |

### Durchführung:

Thymidin und Triphenylphosphin werden über Nacht gemeinsam im Pumpenvakuum getrocknet. Unter Schutzgasatmosphäre werden Tetrachlorkohlenstoff und DMF zugegeben. Es ist eine leichte Erwärmung zu beobachten. Die Reaktionslösung rührt 24 h bei RT. Durch die Zugabe von Methanol wird die Reaktion gequencht. Das Lösungsmittel wird abgezogen und der ölige Rückstand wird aus Methanol umkristallisiert. In der Mutterlauge befindet sich noch Produkt, welches jedoch nicht isoliert werden kann.
R = 7.56 g

### Analytik:

| | | | |
|---|---|---|---|
| Ausbeute | 72.6% | | |
| | | | |
| Rf-Wert: Laufmittel | | Dichlormethan:Methanol 9:1 | 0.38 |

| ESI(+,-)-MS | (C)₇H₂₀N₂O₇S) |
|---|---|
| Berechnet | 260.68 |
| Gefunden | (+)261.9 |
| | (-) 294.9 |

### NMR:

¹H-NMR (250 MHz, DMSO-d6): 11.38 (br. s, 1H, N-H), 7.55 (d, 1H, H-6), 6.22 (t, 1H, H-1'), 4.25 (m, 1H, 3-H'), 4.24 (m, 3H, H-4'+H-5'+H-5"), 3.34 (d, 1H, 3'-OH), 2.32-2.21 (m, 1H, H-2'), 2.14-2.06 (m, 1H, H-2"), 1.8 (s, 3H, CH3-T)

### Darstellung von 5'-S-[9-(4-Methoxyphenyl)xanthen-9-yl]-2'-desoxthymidin (5)

### Ansatzgröße:

| | | |
|---|---|---|
| 4.4 g | 5'-Chlor-2'-desoxythymidin (2) | (17.0 mmol) |
| 8.17 g | 9-(4-Methoxyphenyl)xanthen-9-thiol (4) | (25.5 mmol) |
| 2.42 ml | 1,1,3,3-Tetramethyl-guanidin | (18.92 mmol) |
| 150 ml | DMSO | |

### Durchführung:

5'-Chlor-2'-desoxythymidin und 9-(4-Methoxyphenyl)xanthen-9-thiol (4) werden gemeinsam im Pumpenvakuum über Nacht getrocknet. Unter Schutzgasatmosphäre wird DMSO zugegeben und 1,1,3,3-Tetramethyl-guanidin langsam in die Lösung eingetropft. Nach drei Stunden kann per DC (Laufmittel DCM:MeOH 95:5) kein Edukt mehr detektiert werden. Die Reaktionslösung wird in 1 L gekühltes Dichlormethan eingegossen und die organische Lösung mit 800 ml gesättigter Natriumhydrogencarbonat-Lösung extrahiert (Achtung Druck). Die wäßrige Phase wird mit 200 ml Dichlormethan reextrahiert. Die organischen Phasen werden vereinigt und viermal mit 400 ml Wasser extrahiert und über Magnesiumsulfat getrocknet.

Zur Reinigung der Verbindung schließt sich eine Säulenchromatographie mit dem Laufmittel DCM:MeOH 97:3 an.
R = 7.1 g

### Analytik:

| | | | |
|---|---|---|---|
| Ausbeute | 95% | | |
| | | | |
| Rf-Wert: Laufmittel | | Dichlormethan:Methanol 95:5 | 0.183 |
| | | Dichlormethan:Methanol 9:1 | 0.46 |

| ESI(-)MS | C₃₀H₂₈N₂O₆S |
|---|---|
| Berechnet | 544.55 |
| Gefunden | 543.3 |

### NMR

¹H-NMR (250 MHz, CDCl₃): δ=8.82 (br. s, 1H, N-H), 7.38-7.35 (m, 2H, aromatisch), 7.2-7.02 (m, 7 H, aromatisch), 6.9-6.93 (m, 2H, aromatisch), 6.81-6.78 (m, 2H, aromatisch), 6.06-6.01 (dd, 1H, H-1'), 3.86-3.82 (m, 1H, H-4'), 3.73 (s, 3H, O-CH3), 3.6-3.52 (m, 1H, H-3'), 2.21-2.11 (m, 2 H, H-5', H-5"), 1.9-1.79 (m, 2 H, H-2',H-2'), 1.84 (d, 3H, CH3-T)

### 5'-S-[9-(4-methoxyphenyl)xanthen-9-yl]-mercapto-2'-desoxythymidin-3'-O-(2-cyanoethyl, N,N'-diisopropyl-phosphit) (6)

### Ansatzgröße:

| | |
|---|---|
| 0.75 g | 5'-S-(9-(4-methoxyphenyl)xanthen-9-yl)-2'-deoxythymidin (5) (1.38 mmol) |
| 0.392 ml | Phosphorigsäure-mono-(2-cyanethylester)-diisopropylamid-chlorid (1.65 mmol) |
| 0.706 ml | N-Ethyldiisopropylamin (4.13 mmol) |
| 5 ml | DCM |
| 5 ml | ACN |

### Durchführung:

5'-S-[9-(4-methoxyphenyl)xanthen-9-yl]-2'-deoxythymidin (5) wird über Nacht im Pumpenvakuum getrocknet. Unter Schutzgasatmosphäre wird DCM:ACN und DIPEA zugegeben. Das Phosphitilierungsreagenz wird langsam bei Eiskühlung zugetropft. Per DC (Laufmittel DCM:MeOH 95:5) kann nach 1 h kein Edukt mehr detektiert werden. Die Reaktion wird durch die Zugabe von 0.5 ml Butanol gequencht. Die Reaktionslösung wird einrotiert und in 10 ml DCM:Diethylether aufgenommen und in 200 ml kaltes Pentan einpipettiert. Der entstandene Niederschlag wird abgesaugt und getrocknet.
R = 0.96 g

### Analytik:

| | | | |
|---|---|---|---|
| Ausbeute | 94% | | |
| | | | |
| Rf-Wert: Laufmittel | | Dichlormethan:Methanol 9:1 | 0.77 |
| | | Dichlormethan:Methanol 95:5 | 0.51 und 0.44 |

| ESI(-)MS | C₃₉H₄₅N₄O₇S |
|---|---|
| Berechnet | 744.77 |
| Gefunden | 743.8 |

### NMR

³¹P-NMR (400 MHz, CDCl₃): 150.21, 149.94 ppm

### Beispiel 14:

### Synthese von 5'-S-Dimcthoxytrityl-geschützten Amiditen

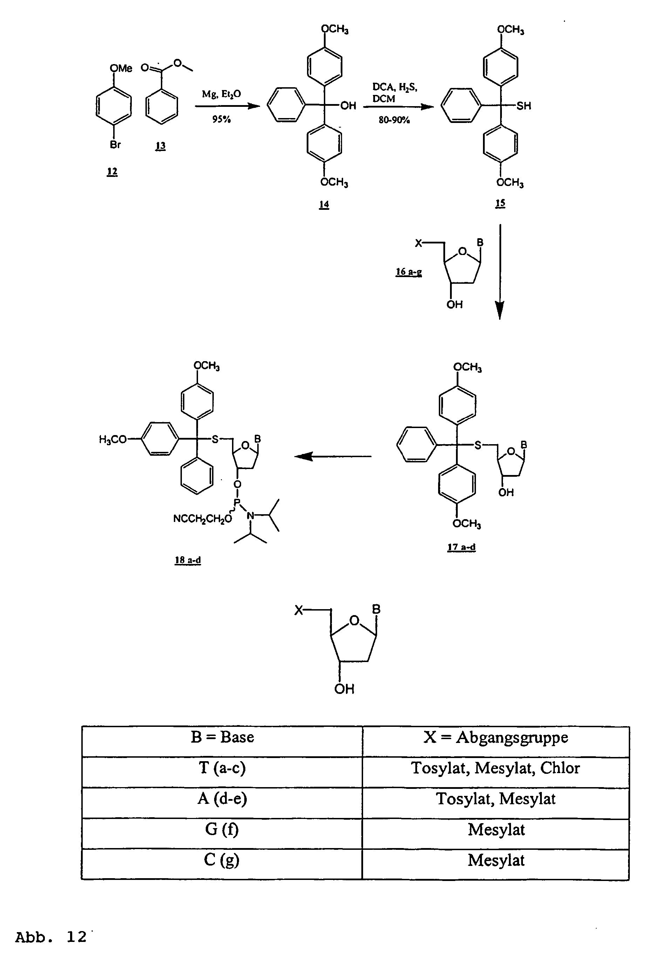

Die Darstellung von 5'-S-Dimethoxytrityl-geschützten Amiditen erfolgt gemäß Beispiel 14 nach dem in Abbildung 12 gezeigten Syntheseschema.

### 4,4'-Dimethoxytriphenylmethanol (14)

### Ansatzgröße:

| | | |
|---|---|---|
| 8.26 g | Magnesiumspäne. | (0.34 mol) |
| 43.25 ml | p-Bromanisol (12) | (0.35 mol) |
| 20 ml | Benzoesäuremethylester (13) | (0.16 mol) |
| 30 ml | THF | |

### Durchführung:

Magnesiumspäne werden unter Schutzgasatmosphäre mit 30 ml THF bedeckt. Anschließend wird p-Bromanisol (12) langsam zugetropft, bis die Lösung selbstständig zu Sieden beginnt. Nach erfolgter Zugabe refluxiert die Lösung 1 h. Nach Zutropfen von Benzoesäure-methylester (13) in 30 ml THF bei RT wird die Reaktionslösung 90 min refluxiert. Nach der Hydrolyse mit gesättigter Ammoniumchlorid-Lösung werden die Phasen getrennt. Die organische Phase wird mit Wasser gewaschen und anschließend wird die wäßrige Phase mit Toluol reextrahiert. Die organischen Phasen werden vereinigt und über Magnesiumsulfat getrocknet. Nach dem Einrotieren wird das Rohprodukt in wenig Dichlormethan aufgenommen und eine Säulenchromatographie durchgeführt (Laufmittel Dichlormethan).
R = 48.7 g

### Analytik:

| | | |
|---|---|---|
| Ausbeute | 95% | |
| | | |
| Rf-Wert: Laufmittel Hexan:Essigsäureethylester 3:1 | | 0.43 |

| ESI(+)MS | C₂₁H₂₀O₃ |
|---|---|
| Berechnet | 320.39 |
| Gefunden | 304.2 (-OH-Gruppe) |

### NMR

¹H-NMR (250 MHz, CDCl₃): 7.27-7.06 (m, 9H, aromatisch), 6.78-6.72 (m, 4 H, aromatisch), 3,77 (s, 6H, 2×OCH₃)

### 4,4'-Dimethoxytriphenylmethanthiol (15)

### Ansatzgröße:

| | | |
|---|---|---|
| 30.95 g | Dichloressigsäure | (0.24 mol) |
| | | |
| 38.44 g | 4,4'-Dimethoxytriphenylmethanol (14) | (0.12 mol) |
| 800 ml | Dichlormethan | |

### Durchführung:

In eine Lösung aus Dichloressigsäure in 400 ml Dichlormethan wird bei Eiskühlung für 15 min Schwefelwasserstoff eingeleitet. Eine Lösung aus 4,4'-Dimethoxytriphenylmethanol (14) in 400 ml Dichlormethan wird unter anhaltender Schwefelwasserstoff-Einleitung innerhalb 1 h zugetropft. Nach erfolgter Zugabe wird für weitere 15 min Schwefelwasserstoff eingeleitet. Durch die anschließende Einleitung von Argon soll überschüssiger Schwefelwasserstoff verdrängt werden. Die Reaktionslösung wird anschließend dreimal mit 700 ml gesättigter Natriumhydrogencarbonat-Lösung (Vorsicht Druck) und zweimal mit 600 ml Wasser extrahiert. Die organische Phase wird über Magnesiumsulfat getrocknet und einrotiert. Das Rohprodukt wird in wenig Dichlormethan gelöst und mit Hexan versetzt, dabei ist eine Niederschlagsbildung zu beobachten. Die Lösung steht für 4 h bei Eiskühlung, der Feststoff wird abgesaugt und getrocknet.
R = 34.31 g (Ausbeute 85%)

### Analytik:

| | | |
|---|---|---|
| Rf-Wert: Laufmittel | Hexan:Essigsäureethylester 3:1 | 0.66 |

| MALDI-MS | C₂₁H₂₀O₂S |
|---|---|
| Berechnet | 336.45 |
| Gefunden | 336.45 |

### NMR

¹H-NMR (250 MHz, CDCl₃): 7.24-7.0.6 (m, 9H, aromatisch), 6.75-6.69 (m, 4 H, aromatisch), 3,72 (s, 6H, 2×OCH₃)

### Einführung der entsprechenden Basenschutzgruppen:

### N⁶-Benzoyl-2'-desoxyadenosin

### Ansatzgröße:

| | | |
|---|---|---|
| 12.89 g | 2'-Desoxyadenosin | (51.3 mmol) |
| 32.4 ml | Trimethylchlorsilan | (256 mmol) |
| 27.8 ml | Benzoylchlorid | (256 mmol) |
| 400 ml | Pyridin | |
| wässrige Ammoniaklösung | | |
| Essigsäureethylester | | |
| Wasser | | |

### Durchführung:

2'-Desoxyadenosin wird über Nacht im Pumpenvakuum über Phosphorpentoxid getrocknet. Der Feststoff wird in Pyridin suspendiert und das Reaktionsgemisch auf 0°C gekühlt. Trimethylchlorsilan wird zugetropft und nach 30 min Rühren wird Benzoylchlorid zugetropft und für weitere 2 h bei RT gerührt. Das Reaktionsgemisch wird auf 0°C gekühlt und mit 100 ml Wasser und 100 ml Ammoniaklösung versetzt, nach 30 min wird am Rotationsverdampfer eingeengt. Der verbleibende Rückstand wird in 350 ml heißem Wasser gelöst und zweimal mit 150 ml Essigsäureethylester extrahiert. Die Essigesterphasen werden vereinigt und mit 100 ml heißem Wasser extrahiert. Die wäßrige Lösung steht über Nacht im Kühlschrank, dabei bildet sich ein Niederschlag aus, dieser wird abgesaugt und im Exsikkator über Phosphorpentoxid getrocknet.
R = 11.4 g

### Analytik:

| | | | |
|---|---|---|---|
| Ausbeute | 63% | | |
| Rf-Wert: Laufmittel | | Dichlormethan:Methanol 9:1 | 0.33 |

| | |
|---|---|
| ESI(-)MS | C₁₇H₁₇N₅O₄ |
| Berechnet | 355.35 |
| Gefunden | 354.1 |

### NMR

¹H-NMR (250 MHz, DMSO-d6): δ= 8.76-8.72 (2s, je 1H, H-8 und H-2), 8.06-8.02 (m, 2H, ortho-H Benzoyl), 7.64-7.51 (m, 3H, meta- und para-H Benzoyl) 6.53-6.47 (m, 1H, H-1'), 4.50-4.46 (m, 1H, H-3'), 3.95-3.90 (m, 1H, H-4'), 3.68-3.52 (m, 2H, H-5'+H-5"), 2.85-2.75 (m, 1H, H-2'), 2.43 2.34 (m, 1H, H-2")

### N⁴-Benzoyl-2'desoxycytidin

### Ansatzgröße:

| | | |
|---|---|---|
| 7.91g | 2'-Desoxycytidin×HCl | (30 mmol) |
| 19 ml | Trimethylchlorsilan | (150 mmol) |
| 17.4 ml | Benzoylchlorid | (150 mmol) |
| 300 ml Pyridin | | |
| wässrige Ammoniaklösung | | |
| Essigsäureethylester | | |
| Wasser | | |

### Durchführung:

2'-Desoxycytidin wird über Nacht im Pumpenvakuum über Phosphorpentoxid getrocknet. Der Feststoff wird in Pyridin gelöst und das Reaktionsgemisch auf 0°C gekühlt. Trimethylchlorsilan wird zugetropft und nach 30 min. Rühren wird Benzoylchlorid zugetropft und für weitere 2 h bei RT gerührt. Das Reaktionsgemisch wird auf 0°C gekühlt und mit 60 ml Wasser und 60 ml Ammoniaklösung versetzt, nach 30 min. wird am Rotationsverdampfer eingeengt. Der verbleibende Rückstand wird in 300 ml heißem Wasser gelöst und zweimal mit 100 ml Essigsäureethylester extrahiert. Die Essigesterphasen werden vereinigt und mit 100 ml heißem Wasser extrahiert. Die wäßrige Lösung steht über Nacht im Kühlschrank, dabei bildet sich ein Niederschlag, dieser wird abgesaugt und im Exsikkator über Phosphorpentoxid getrocknet.
R = 7.3 g

### Analytik:

| | | | |
|---|---|---|---|
| Ausbeute | 73.2% | | |
| | | | |
| Rf-Wert: Laufmittel | | Dichlormethan:Methanol 9:1 | 0.27 |

| ESI(-)MS | C₁₆H₁₇N₃O₅ |
|---|---|
| Berechnet | 331.33 |
| Gefunden | 330.0 |

### NMR

¹H-NMR (250 MHz, DMSO-d6): δ= 11.23 (b, 1H, N-H), 8.41-8.39 (d, 1H, H-6), 8.03-8.00 (m, 2H, ortho-H Benzoyl), 7.67-7.49 (m, 3H, meta- und para-H Benzoyl) 7.36-7.33 (d, 1H, H-5), 6.18-6.13 (m, 1H, H-1'), 5.28-5.26 (d, 1H, 3'-OH), 5.09-5.05 (m, 1H, 5'-OH), 4.29-4.22 (m, 1H, H-3'), 3.92-3.87 (m, 1H, H-4'), 3.71-3.57 (m, 2H, H-5'+H-5"), 2.38-2.29 (m, 1H, H-2'), 2.13-2.02 (m, 1H, H-2")

### N²-Isobutyryl-2'desoxyguanosin

### Ansatzgröße:

| | | |
|---|---|---|
| 13.36 g | 2'-Desoxyguanosin | (50 mmol) |
| 31.6 ml | Trimethylchlorsilan | (250 mmol) |
| 41.6 ml | Isobuttersäureanhydrid | (250 ml) |
| 400 ml | Pyridin | |

### Durchführung:

2'-Desoxyguanosin wird über Nacht im Pumpenvakuum über Phosphorpentoxid getrocknet. Der Feststoff wird in Pyridin suspendiert und das Reaktionsgemisch auf 0°C gekühlt. Trimethylchlorsilan wird zugetropft, dabei geht der Feststoff in Lösung. Nach 30 min. Rühren wird Isobuttersäureanhydrid zugegeben und für weitere 2 h bei RT gerührt. Das Reaktionsgemisch wird auf 0°C gekühlt und mit 100 ml Wasser und 100 ml Ammoniaklösung versetzt, nach 30 min. wird am Rotationsverdampfer eingeengt. Der verbleibende Rückstand wird in 300 ml heißem Wasser gelöst und zweimal mit 200 ml Essigsäureethylester extrahiert. Die Essigesterphasen werden vereinigt und mit 50 ml heißem Wasser extrahiert. Die wäßrige Lösung steht über Nacht im Kühlschrank, dabei bildet sich ein Niederschlag, dieser wird abgesaugt und im Exsikkator über Phosphorpentoxid getrocknet.
R = 12.4 g

### Analytik:

| | | |
|---|---|---|
| Ausbeute | 73.3% | |
| | | |
| Rf-Wert: Laufinittel | Dichlormethan:Methanol 9:1 | 0.37 |

| ESI(-)MS | C₁₄H₁₉N₅O₅ |
|---|---|
| Berechnet | 337.34 |
| Gefunden | 336.0 |

### NMR

¹H-NMR (250 MHz, DMSO-d6) δ= 8.16 (s, 1H, H-8) 6.25-6.19 (m, 1H, H-1'), 5.33 (d, 1H, 3'-OH), 5.33-5.31 (d, 1H, 5'-OH), 4.39-4.38 (m, 1H, H-3'), 3.87-3.83 (m, 1H, H-4'), 3.61-3.34 (m, 2H, H-5'+H-5"), 2.84-2.73 (m, 1H, CH-Isobutyryl), 2.62-2.54 (m, 1H, H-2'), 2.33-2.24 (m, 1H, H-2"), 1.14-1.07 (dd, 6 H, CH₃-Isobutyryl)

### Allgemeine Arbeitsvorschrift für die 5'-O-Mesylierung und 5'-O-Tosylierung von 2'-Desoxynukleotiden (16 a-g)

### 5'-O-Mesylierung

### Ansatzgröße:

| | | |
|---|---|---|
| 2'-Desoxynukleotid | (4 mmol) | |
| Methansulfonsäurechlorid | (4 mmol) | 0.372 ml |
| 40 ml Pyridin | | |

### Durchführung:

Das entsprechende 2'-Desoxynukleotid wird in Pyridin suspendiert (Thymidin ergibt eine klare Lösung) und das Reaktionsgemisch auf-20°C abgekühlt. Über eine Zeit von 30 min. wird Methansulfonsäurechlorid zugetropft. Der Reaktionsansatz steht über Nacht bei -20°C. Der Reaktionsfortschritt wird per DC (Laufmittel Dichlormethan:Methanol 9: 1) kontrolliert. Bei vollständiger Reaktion, wird mit Methanol gequencht und am Rotationsverdampfer eingeengt. Zur Reinigung schließt sich eine Säulenchromatographie mit entsprechenden Dichlormethan:Methanol-Gemischen an. Dabei ist zu beobachten, daß die Verbindungen in reinem Dichlormethan schwer löslich sind.

### 5'-O-Tosylierung

### Ansatzgröße:

| | |
|---|---|
| 2'-Desoxynukleotid | (4 mmol) |
| p-Toluolsulfonsäurechlorid | (4.8 mmol) |
| 40 ml Pyridin | |

### Durchführung:

Das entsprechende 2'-Deoxynukleotid wird in Pyridin suspendiert (Thymidin ergibt eine klare Lösung) und das Reaktionsgemisch auf 0°C abgekühlt. Über eine Zeit von 15 min. wird p-Toluolsulfonsäurechlorid portionsweise zugegeben. Der Reaktionsansatz rührt bei Eiskühlung. Der Reaktionsfortschritt wird per DC (Laufmittel Dichlormethan:Methanol 9:1) kontrolliert. Bei vollständiger Reaktion, wird mit Methanol gequencht und am Rotationsverdampfer eingeengt. Zur Reinigung schließt sich eine Säulenchromatographie mit Dichlormethan:Methanol-Gemischen an.

### T-Nukleoside (16 a-c)

### Analytik 5'-O-Tosyl-2'desoxythymidin (16a)

| | | | |
|---|---|---|---|
| Ausbeute | 68% | | |
| | | | |
| Rf-Wert: Laufmittel | | Dichlormethan:Methanol 9:1 | 0.29 |

| ESI(+)-MS | (C₁₇H₂₀N₂O₇S) |
|---|---|
| Berechnet | 396.42 g/mol |
| Gefunden | 397.1 g/mol |
| Schmelzpunkt | 168-169°C |

### NMR

¹H-NMR (250MHz, CDCl₃): 11.31 (br. s, 1H, N-H), 7.82 (d, 2H, aromatisch, AA'BB'), 7.44 (d, 2H, aromatisch, AA'BB'), 7.36 (d, 1H, H-6), 6.14 (t, 1H, H-1'), 5.57 (d, 1H, 3'-OH), 4.21 (m, 3H, H-5'+H-5"+H-3'), 3.85 (m, 1H, H-4'), 2.40 (s, 3H, CH₃-Tosyl), 2.10 (m, 2H, H-2'+H-2"), 1.75 (s, 3H, CH₃-T)

### Analytik 5'-O-Mesyl-2'-desoxythymidin (16b)

| | | | |
|---|---|---|---|
| Ausbeute | 64% | | |
| | | | |
| Rf-Wert: Laufmittel | | Dichlormethan:Methanol 9:1 | 0.32 |

| ESI(+)-MS | (C₁₁H₁₆N₂O₅S) |
|---|---|
| Berechnet | 320.32 |
| Gefunden | 321.0 |
| | 343.0 (+Na-Salz) |

### NMR

¹H-NMR (250MHz, DMSO-d6):11.32 (br. s, 1H, N-H), 7.49 (d, 1H, H-6), 6.26-6.20 (t, 1H, H-1'), 5.49 (d, 1H, 3'-OH), 4.21-4.35 (m, 2H, H-5'+H-5"), 4.29-4.27 (m, 1H, 3-H'), 4.01-3.96 (m, 1H, H-4'), 3.26 (s, 3H, CH₃-Mesyl), 2.53-2.50 (m, 1H, H-2'), 2.27-2.07 (m, 1H, H-2'), 1.79 (s, 3H, CH₃-T)

### 5'-Chlor-2'desoxythymidin (16c)

Die Reaktionsführung erfolgt wie bei der Darstellung von 5'-S-9-[4-methoxyphenyl)xanthen-9-yl]-mercapto-2'-deoxythymidin-3'-O-(2-cyanoethyl, N,N'-diisopropyl-phosphit) beschrieben.

### Analytik:

| | | | |
|---|---|---|---|
| Ausbeute | 72.6% | | |
| | | | |
| Rf-Wert: Laufmittel | | Dichlormethan:Methanol 9:1 | 0.38 |

| ESI(+,-)-MS | (C₁₇H₂₀N₂O₇S) |
|---|---|
| Berechnet | 260.68 |
| Gefunden | (+)261.9 |
| | (-) 294.9 |

### NMR

¹H-NMR (250MHz, DMSO-d6): 11.38 (br. s, 1H, N-H), 7.55 (d, 1H, H-6), 6.22 (t, 1H, H-1'), 4.25 (m, 1H, 3-H'), 4.24 (m, 3H, H-4'+H-5'+H-5"), 3.34 (d, 1H, 3'-OH), 2.32-2.21 (m, 1H, H-2'), 2.14-2.06 (m, 1H, H-2"), 1.8 (s, 3H, CH₃-T)

### A-Nukleoside (16 d-e)

### Analytik 5'-O-Tosyl-N⁶-benzoyl-2'-desoxyadenosin (16d)

| | | | |
|---|---|---|---|
| Ausbeute | 39% | | |
| | | | |
| Rf-Wert: Laufmittel | | Dichlormethan:Methanol 9:1 | 0.42 |

| MALDI-MS | C₂₄H₂₃N₅O₆S |
|---|---|
| Berechnet | 509.43 |
| Gefunden | 509.69 |

### NMR

¹H-NMR (250 MHz, CDCl₃): δ= 8.68-8.56 (m, 2H, H-8 und H-2), 7.97-7.91 (m, 2H, ortho-H Benzoyl), 7.58-7.27 (m, 7H, meta- und para-H Benzoyl, H-Tosyl), 6.42-6.37 (m, 1H, H-1'), 4.79-4.69 (m, 1H, H-3'), 4.55-4.51 (m, 1H, H-4'), 2.93-2.76 (m, 2H, H-5'+H-5 "), 2.59-2.47 (m, 2H, H-2'+H-2 "), 2.30 (s, 3H, CH₃-Tosyl)

### Analytik 5'-O-Mesyl-N⁶-benzoyl-2'-desoxyadenosin (16e)

| | | | |
|---|---|---|---|
| Ausbeute | 79% | | |
| | | | |
| Rf-Wert: Laufmittel | | Dichlormethan:Methanol 9:1 | 0.33 |

| ESI(-)MS | C₁₈H₁₉N₅O₆S |
|---|---|
| Berechnet | 433.4 |
| Gefunden | 432.3 |

### NMR

¹H-NMR (250 MHz, DMSO-d6): δ= 11.2 (s br. N-H), 8.78-8.66 (m, 2H, H-8 und H-2), 8.08-8.04 (m, 2H, ortho-H Benzoyl), 7.69-7.48 (m, 3H, meta- und para-H Benzoyl), 6.59-6.53 (m, 1H, H-1'), 4.56-4.37 (m, 2H, O-H und H-3'), 4.18-4.14 (m, 1H, H-4'), 3.37-3.27 (m, 2H, H-5'+H-5"), 3.21-3.17 (d, 3H, H-Mesyl), 2.99-2.88 (m, 1H, H-2'), 2.47-2.41 (m, 1H, H-2")

### G-Nukleosid (16 f)

### Analytik 5'-O-Mesyl-N²-Isobutyryl-2'desoxyguanosin (16f)

| | | | |
|---|---|---|---|
| Ausbeute | 93% | | |
| | | | |
| Rf-Wert: Laufmittel | | Dichlormethan:Methanol 9:1 | 0.28 |

| ESI(-)MS | C₁₅H₂₁N₅O₇S |
|---|---|
| Berechnet | 415.43 |
| Gefunden | 414.0 |

### NMR:

¹H-NMR (250 MHz, DMSO-d6) δ= 11.62 (s br., 1H, N-H), 8.22-8.17 (s, 1H, H-8), 6.31-6.25 (m, 1H, H-1'), 5.57-5.55 (d, 1H, 3'-OH), 4.46-4.31 (m, 3H, H-3'+H-5'+H-5"), 4.11-4.06 (m, 1H, H-4'), 3.17 (s, 1H, CH₃-Mesyl), 2.83-2.66 (m, 2H, H-2' und CH-Isobutyryl), 2.41-2.31 (m, 1H, H-2"), 1.15-1.07 (dd, 6 H, CH₃-Isobutyryl)

### C-Nukleosid (16 g)

### Analytik 5'-O-Mesyl-N⁴-benzoyl-2'desoxycytidin (16g)

| | | | |
|---|---|---|---|
| Ausbeute | 48% | | |
| | | | |
| Rf-Wert: Laufmittel | | Dichlormethan:Methanol 9:1 | 0.28 |

| ESI(-)MS | C₁₇H₁₉N₃O₇S |
|---|---|
| Berechnet | 409.42 |
| Gefunden | 408.1 |

### NMR:

¹H-NMR (250 MHz, DMSO): δ= 11.27 (b, 1H, N-H), 8.33 (d, 1H, H-6), 8.14-8.03 (m, 2H, ortho-H Benzoyl), 7.67-7.49 (m, 3H, meta- und para-H Benzoyl), 7.39-7.36 (d, 1H, H-5), 6.24-6.19 (m, 1H, H-1'), 5.56-5.54 (d, 1H, 3'-OH), 4.49-4.39 (m, 2H, H-5' und H-5 "), 4.31-4.25 (m, 1H, H-3'), 4.13-4.08 (m, 1H, H-4'), 3.26 (s, 3H, CH₃-Mesyl), 2.42-2.32 (m, 1H, H-2), 2.25-2.08 (m, 1H, H-2")

### Allgemeine Arbeitsvorschrift für 5'-S-(4,4'-Dimethoxytriphenyl)-mercapto-2'-deoxynukleotide (17 a-d)

### Ansatzgröße:

| | |
|---|---|
| 5'-X-Nukleosid (16 a-g) | (1 mmol) |
| 4,4'-Dimethoxytriphenylmethanthiol | (1.5 mmol) |
| 1,1,3,3-Tetramethyl-guanidin | (1.11 mmol) |
| 10 ml DMSO | |

### Durchführung:

5'-X-Nukleosid (16 a-g) und 4,4'-Dimethoxytriphenylmethanthiol (15) werden gemeinsam im Pumpenvakuum über Nacht getrocknet. Unter Schutzgasatmosphäre wird DMSO zugegeben und 1,1,3,3-Tetramethyl-guanidin langsam in die Lösung eingetropft. Nach drei Stunden wird per DC (Laufmittel DCM:MeOH 95:5) der Reaktionsfortschritt verfolgt. Sollte zu diesem Zeitpunkt die Reaktion als beendet angesehen werden, wird die Reaktionslösung in 300 ml gekühltes Dichlormethan eingegossen und die organische Lösung mit 150 ml gesättigter Natriumhydrogencarbonat-Lösung extrahiert (Achtung Druck). Die wäßrige Phase wird mit 100 ml Dichlormethan reextrahiert. Die organischen Phasen werden vereinigt und viermal mit 100 ml Wasser extrahiert und über Magnesiumsulfat getrocknet. Zur Reinigung schließt sich eine Säulenchromatographie mit Laufmittelgemischen aus Dichlormethan und Methanol an.

### Analytik 5'-S-(4,4'-Dimethoxytriphenyl)-2'-deoxythymidin (17a)

Ausbeute bei Verwendung von

| | | |
|---|---|---|
| a. | 5'-Cl-2'-deoxythymidin (16c) | 63.6% |
| b. | 5'-O-Tosyl-2'-deoxythymidin (16a) | 94% |
| c. | 5'-O-Mesyl-2'-deoxythymidin (16b) | 97.5% |
| | | |
| Rf-Wert: Laufmittel Dichlormethan:Methanol 9:1 | | 0.51 |

| ESI(-)MS | C₃₁H₃₂N₂O₆S |
|---|---|
| Berechnet | 559.66 |
| Gefunden | 559.5 |

### NMR

¹H-NMR (250MHz, CDCl₃): 8.81 (br. S, 1H, N-H), 7.64-7.56 (m, 1H, H-6), 7.35-7.14 (m, 9 H, aromatisch), 6.77-6.71 (m, 4H, aromatisch), 6.14-6.09 (dd, 1H, H-1'), 4.05-4.03 (m, 1H, H-4'), 3.76-3.74 (m, 1H, H-3'), 3,7 (s, 6H, 2×OCH₃), 2.6-2.53 (m, 1H, H-5'), 2.45-2.38 (m, 1H, H-5"), 2.25-2.18 (m, 2H, H-2'+ H-2"), 1.78 (d, 3H, CH₃-T)

### Analytik 5'-S-(4,4'-Dimethoxytriphenyl)-N⁶-benzoyl-2'-deoxyadenosin (17b)

Ausbeute bei Verwendung von

| | | |
|---|---|---|
| a. | 5'-O-Tosyl-N⁶-benzoyl-2'-deoxyadenosin (16d) | 94% |
| b. | 5'-O-Mesyl-N⁶-benzoyl-2'-deoxyadenosin (16e) | 41 % |
| | | |
| Rf-Wert: Laufmittel Dichlormethan:Methanol 9:1 | | 0.45 |

| ESI(-)MS | C₃₈H₃₅N₅O₅S |
|---|---|
| Berechnet | 673.77 |
| Gefunden | 672.6 |

### NMR

¹H-NMR (250 MHz, CDCl₃): δ= 9.08 (s, 1H, N-H), 8.65, 8.22 (s, 2H, H-2 und H-8), 7.93-7.92 (m, 2H, ortho-H-Benzoyl), 7.51-7.11 (m, 12H, aromatisch), 6.74-6.68 (m, 4H, aromatisch), 6.27-6.22 (m, 1H, H-1'), 4.33-4.29 (m, 1H, H-3'), 3.77-3.74 (m, 1H, H-4'), 3.69 (s, 6H, 2×OCH₃), 2.74-2.36 (m, 4H, H-5'+H-5"+H-2'+H-2")

### Analytik 5'-S-(4,4'-Dimethoxytriphenyl)-N²-isobutyryl-2'-desoxyguanosin (17 c)

Ausbeute bei Verwendung von

| | | |
|---|---|---|
| a. | 5'-O-Mesyl-N²-Isobutyryl-2'desoxyguanosin (16f) | 45% |
| | | |
| Rf-Wert: Laufmittel Dichlormethan:Methanol 9:1 | | 0.43 |

| ESI(-)MS | C₃₅H₃₇N₅O₆S |
|---|---|
| Berechnet | 655.76 |
| Gefunden | 656.1 |

### NMR:

¹H-NMR (250 MHz, CDC13) δ= 10.24 (s br., 1H, N-H), 7.66 (s, 1H, H-8), 7.29-7.02 (m, 9H, aromatisch), 6.75-6.62 (m, 4H, aromatisch), 5.98-5.93 (t, 1H, H-1'), 4.98 (s br., 1H, 3'-OH), 4.63 (m, 1H, H-3'), 4.09-4.01 (m, 1H, H-4'), 3.64 (s, 6H, 2×OCH₃), 2.89-2.84 (m, 1H, CH-Isobutyryl), 2.53-2.45 (m, 2H, H-5' und H-5"), 2.31 (m, 2H, H-2' und H-2"), 1.21-1.16 (dd, 6 H, CH₃-Isobutyryl)

### Analytik 5'-S-(4,4'-Dimethoxytriphenyl)-N⁴-benzoyl-2'-desoxycytidin (17 d)

Ausbeute bei Verwendung von

| | | |
|---|---|---|
| b. | 5'-O-Mesyl-N⁴-benzoyl-2'desoxycytidin (16g) | 82% |
| | | |
| Rf-Wert: Laufmittel Dichlormethan:Methanol 9:1 | | 0.44 |

| ESI(-)MS | C₃₅H₃₇N₅O₆S |
|---|---|
| Berechnet | 649.77 |
| Gefunden | 634.4 (Abspaltung CH₃-Gruppe) |

### NMR

¹H-NMR (250 MHz, CDCl₃): δ= 8.17-8.15 (m, 1H, H-6), 7.86-7.04 (m, 16H, ortho-H Benzoyl, H-Trityl), 7.81-6.77 (m, 2H, aromatisch), 6.06-6.01 (d, 1H, H-1'), 3.90-3.83 (m, 2H, H-3' und H-4'), 3.73 (s, 6H, 2×OCH₃), 2.57-2.29 (m, 4H, H-5'+H-5" +H-2'+H-2")

### Allgemeine Arbeitsvorschrift für 5'-S-(4,4'-Dimethoxytriphenyl)-mercapto-2'-deoxynucleotide-3'-O-(2-cyanoethyl, N,N'-diisopropyl-phosphite) (18 a-d)

### Ansatzgröße:

| | | |
|---|---|---|
| 5'-S-(4,4'-Dimethoxytriphenyl)-Nukleoside (17 a-d) | | (1 mmol) |
| Phosphorigsäure-mono-(2-cyanethylester)-diisopropylamid-chlorid | | (1.2 mmol) |
| N-Ethyldiisopropylamin. | | (3 mmol) |
| 4 ml | DCM | |
| 4 ml | ACN | |

### Durchführung:

5'-S-(4,4'-Dimethoxytriphenyl)-nukleosid (17 a-d) wird über Nacht im Pumpenvakuum getrocknet. Unter Schutzgasatmosphäre wird DCM:ACN und DIPEA zugegeben. Das Phosphitilierungsreagenz wird langsam bei Eiskühlung zugetropft. Per DC (Laufmittel 95:5) wird die Reaktion verfolgt (ca. 1 h). Die Reaktion wird durch die Zugabe von 0.5 ml Butanol gequencht. Die Reaktionslösung wird einrotiert und in 6 ml DCM:Diethylether aufgenommen und in 120 ml kaltes Pentan einpipettiert. Der entstandene Niederschlag wird abgesaugt und getrocknet. Je nach Reinheitsgrad schließt sich eine Säulenchromatographie an.

Analytik 5'-S-(4,4'-Dimethoxytriphenyl)-mercapto-2'-deoxythymidin-3'-O-(2-cyanoethyl, N,N'-düsopropyl-phosphit) (18a)

| | | | |
|---|---|---|---|
| Ausbeute | 73% | | |
| | | | |
| Rf-Wert: Laufmittel | | Dichlormethan:Methanol 9:1 | 0.65 |

| ESI(+)MS | C₄₀H₄₉N₄O₇PS |
|---|---|
| Berechnet | 760.86 |
| Gefunden | 761.2 |

| | |
|---|---|
| NMR | |
| ³¹P-NMR | CDCl₃ + 0.1 % DIPEA |
| | 149.55, 149.35 ppm |

### Analytik 5'-S-(4,4'-Dimethoxytriphenyl)-mereapto-N⁶-benzoyl-2'-deoxyadenosin-3'-O-(2-cyanoethyl, N,N'-diisopropyl-phosphit) (18b)

| | | | |
|---|---|---|---|
| Ausbeute | 68% | | |
| | | | |
| Rf-Wert: Laufmittel | | Dichlormethan:Methanol 9:1 | 0.90 |
| | | Dichlormethan:Methanol 95:5 | 0.81 und 0.77 |

| ESI(+)MS | C₄₇H₅₂N₇O₆PS |
|---|---|
| Berechnet | 873.99 |
| Gefunden | 858.6 (Abspaltung CH₃-Gruppe) |

| | |
|---|---|
| NMR | |
| ³¹P-NMR | CDCl₃ + 0.1 % DIPEA |
| | 149.99, 149.74 ppm |

Analytik 5'-S-(4,4'-Dimethoxytriphenyl)-mercapto-N⁶-isobutyryl-2'-desoxyguanosin-3' -O-(2-cyanoethyl, N,N' -diisopropyl-phosphit) (18c)

| | | | |
|---|---|---|---|
| Ausbeute | 72% | | |
| | | | |
| Rf-Wert: Laufmittel | | Dichlormethan:Methanol 9:1 | 0.71 |
| | | Dichlormethan:Methanol 95:5 | 0.37 |

| ESI(+)MS | C₄₄H₅₄N₇O₇PS |
|---|---|
| Berechnet | 856.01 |
| Gefunden | 856.6 |

| | |
|---|---|
| NMR | |
| ³¹P-NMR | CDCl₃ + 0.1 % DIPEA |
| | 150.13, 148.93 ppm |

### Analytik 5'-S-(4,4'-Dimethoxytriphenyl)-mercapto-N⁴-benzoyl-2'-desoxycytidin-3'-O-(2-cyanoethyl, N,N'-diisopropyl-phosphit) (18d)

| | | | |
|---|---|---|---|
| Ausbeute | 76.4% | | |
| | | | |
| Rf-Wert: Laufmittel | | Dichlormethan:Methanol 9:1 | 0.76 und 0.67 |

| ESI(+)MS | C₄₆H₅₂N₅O₇PS |
|---|---|
| Berechnet | 849.99 |
| Gefunden | 832.5 (Abspaltung CH₃-Gruppe) |

| | |
|---|---|
| NMR | |
| ³¹P-NMR | CDCl₃ + 0.1 % DIPEA |
| | 150.43, 149.99 ppm |

### Beispiel 15:

### Synthese des photolabilen Amidits 1-{5'-O-(4,4'-Dimethoxytrityl)-2'-O-{[(2-nitrobenzyl)oxy]methyl}-β-L-robofuranosyl}uracil 3'-[(2-Cyanoethyl)-diispropylphosphorsamidit] (1-5)

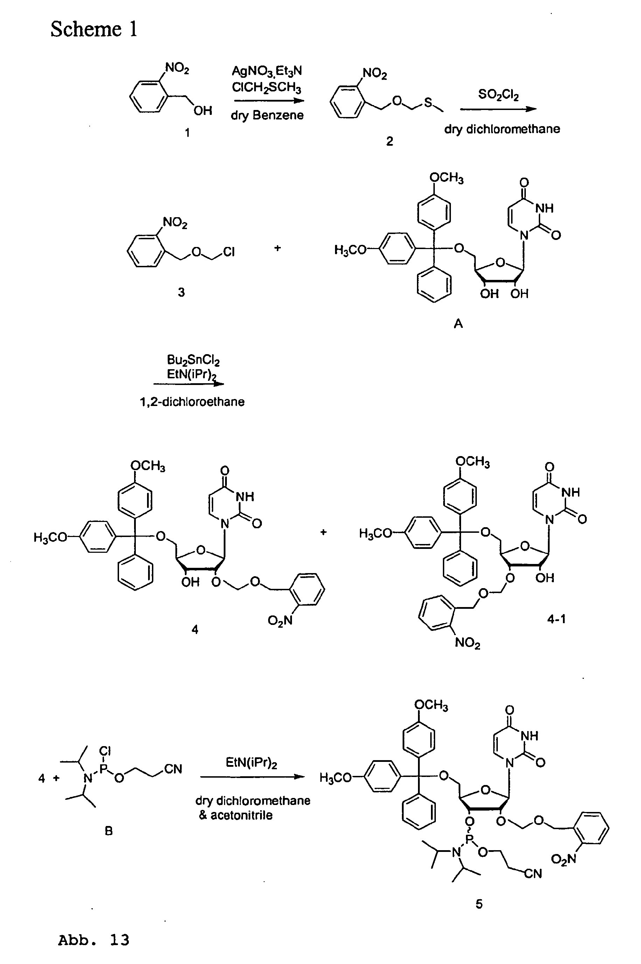

Die Synthese von 1-{5'-O-(4,4'-Dimethoxytrityl)-2'-O-{[(2-nitrobenzyl)oxy]methyl}-β-L-robofuranosyl}uracil 3'-[(2-Cyanoethyl)-diispropylphosphorsamidit] (5) erfolgt gemäß diesem Beispiel nach dem in Abbildung 13 gezeigten Syntheseschema.

### 1) o-Nitrobenzylmethylthiomethylether (1-2) (C₉H₁₁NO₃S, Mw 213.26 )

Eine Lösung von o-Nitrobenylalkohol (2.655 g, 17.34 mmol) und Chlormethylmethylsulfid (2.008 g, 20.08 mmol) in 12 ml trockenem Benzol wurde innerhalb von fünf Minuten zu einer Lösung von Silbernitrat (3.24 g, 19.07 mmol) und Triethylamin (2.105 g, 20.8 mmol) in 20 ml trockenem Benzol tropfenweise zugegeben. Die Lösung wurde bei 60°C für eine Dauer von 24 Stunden erwärmt und anschließend durch eine trockene Celite-Säule filtriert. Die Lösung wurde mit Dichlormethan extrahiert und mit 3% wässriger Phosphorsäure, gesättigtem wässrigem Natriumhydrogencarbonat und Wasser gewaschen und anschließend getrocknet. Der Rückstand wird durch Säulenchromatographie auf Silicagel gereinigt (Dichlormethan: n-Hexan = 2:3).
Produkt: 1.25g (34%)
TLC (MC : Hex = 1 : 2) : Rf = 0.15. ¹H-NMR (400MHz,CDCl₃), δ in ppm: 2.19(s,3H,-S-CH₃); 4.77(s,2H,-O-CH₂-S); 4.98(s,2H,Ar-CH₂-O); 7.42-8.07(m,4H,Ar-H)

### 2) o-Nitrobenzylchloromethylether (1-3) (C₈H₈ClNO₃, Mw 201.61)

Frisch destilliertes Schwefelchlorid (1.57 g, 11.35 mmol) in 10 ml trockenem Dichlormethan wurden bei Raumtemperatur innerhalb von 10 Minuten tropfenweise zu einer Lösung von reinem und trockenem o-Nitrobenzylchlormethylether (2.42 g, 11.35 mmol) in 20 ml trockenem Dichlormethan zugegeben und anschließend für 1 Stunde gerührt. Die Lösung wurde mittels eines Rotationsverdampfers verdampft. Der Rückstand wurde mittels eines Kugelrohrofens bei 100 bis 110°C und 0.05 torr destilliert. Das Produkt kann ohne Destillation nicht lange gelagert werden.
Produkt: 2.09g (91 %)
TLC (MC) : Rf = 0.07. ¹H-NMR (250MHz,CDCl₃), δ in ppm:5.15(s,2H,Ar-CH₂-O-CH₂-); 5.63(s,2H-O-CH₂-Cl); 7.45-8.12(m,4H,Ar-H). MS(ESI) = 217.5[M+NH₃]⁺

### 3) 1-{5'-O-(4,4'-Dimethoxytrityl)-2'-O-{[(2-nitrobenzyl)oxy]methyl}-β-L-robofuranosyl}uracil(1-4) und 1-{5'-O-(4,4'-Dimethoxytrityl)-3'-O-{[(2-nitrobenzyl)oxy]methyl}-β-L-robofuranosyl}uracil(1-4-1) (C₃₈H₃₇N₃O₁₁, Mw 711.72)

Ethyldiisopropylamin (2.10 g, 16.25 mmol) und Bu₂SnCl₂ (1.18 g, 3.90 mmol) wurden zu Substanz A (siehe Abbildung 13) (1.773 g, 3.25 mmol) in 12 ml 1,2-Dichlorethan zugegeben. Die Lösung wurde bei Raumtemperatur für 90 Minuten unter Argon gerührt und anschließend bei 70°C erwärmt.

Zu der Lösung wurde o-Nitrobenzylmethylchlormethylether bei 70°C zugegeben. Nach 30 Minuten wurde das Gemisch mit Dichlormethan extrahiert, mit gesättigtem wässrigem Natriumhydrogencarbonat gewaschen und getrocknet. Der Rückstand wurde durch Säulenchromatographie auf Silicagel gereinigt (Ethylacetat: n-Hexan = 3:2, anschließend 1:9).
Produkt : Substanz-4 1.02g (44%), Substanz-4-1 0.78g (33.7%)
TLC (Hex : EtOAc = 1 : 9) Rf= 0.61 (Substanz 4), 0.36 (Substanz 4-1). ¹H-NMR (1-4, 400MHz,CDCl₃), δ in ppm: 2.67(br.d,OH-C(3'); 3.52(dd,H-C(5'); 3.55(dd,H'-C(5')); 3.79(s'2MeO); 4.10(br.d,OH-C(3')); 4.38(dd,H-C(2')); 4.55(br.q,H-C(3')); 5.03,5.09(2d,OCH₂O); 5.04,5.18(2d,ArCH₂O); 5.29(d,H-C(5)); 6.04(d,H-C(1')); 6.82-6.87(m,Ar-4H); 7.21-7.76(m,Ar-12H); 7.94(d,H-C(6)); 8.06-8.09(m,Ar-1H); 9.02(br.s,H-N(3)).
MS(ESI) = 746.5[M+Cl]⁺

### 4) 1-{5'-O-(4,4'-Dimethoxytrityl)-2'-O-{[(2-nitrobenzyl)oxy]methyl} -β-L-robofuranosyl}uracil 3'-[(2-Cyanoethyl)- diispropylphosphorsamidit](1-5) (C₄₇H₅₄N₅O₉P, Mw 863.95)

Ethyldiisopropylamin (227 mg, 1.755 mmol) und Phosphoramidit-B (91 mg, 0.385 mmol) wurden zu Substanz-4 (250 mg, 0.351 mmol) in 3 ml eines Gemisches von 1.5 ml Dichlormethan und 1.5 ml Acetonitril zugegeben. Die Lösung wurde 1 Stunde unter Argon gerührt, mit Butanol gequencht, mit Ethylacetat extrahiert, mit 5% Natriumhydrogencarbonat und wässrigem gesättigtem Natriumchlorid gewaschen und anschließend verdampft. Der Rückstand wurde in 3 ml eines Gemisches von 1.5 ml Dichlormethan und 1.5 ml Ether aufgelöst, anschließend tropfenweise zu 150 ml kaltem Pentan (Eisbad) zugegeben und gefiltert.
Produkt : 273mg (90%)
TLC (Hex : EtOAc = 2 : 3) Rf = 0.5, 0.42. 1H-NMR(400Hz,CDCl₃), δ in ppm: 1.02,1.11,1.13(3d,12H,Me₂CH); 2.44,2.61(2t,2H,OCH₂CH₂CN); 3.41-3.74(m,5H,Me₂CH,H-C(5'),OCH₂CH₂CN); 3.78,3.79(2s,6H,MeO); 3.91(m,1H,OCH₂CH₂ON); 4.21(dt,0.5H,H-C(4')); 4.27(dt,0.5H,H-C(4')); 4.45(dd,0.5H,H-C(2')); 4.51(br.t,0.5H,H-C(2')); 4.53-4.58(m,1H,H-C(3')); 5.00-5.07(m,4H,OCH₂O,ArCH₂); 5.19,5.23(2d,1H,H-C(5)); 6.06(d,0.5H,H-C(1')); 6.10(d,0.5H,H-C(1')); 6.81-6.85(m,Ar-4H); 7.22-7.45(m,Ar-10H); 7.60,7.78(2m,Ar-2H); 7.87,7.95(2d,1H,H-C(6)); 8.06(m,Ar-1H); 8.68(br.s,1H,H-N(2)). 31P-NMR(162MHz): 151.4, 150.4 MS(ESI) = 887[M+Na]⁺

### Beispiel 16:

### Synthese des photolabilen Amidits 1- {5'-O-(4,4'-Dimethoxytrityl)-2'-O- {[(1-(o-nitrobenzyl)ethyl)oxy]methyl}-β-L-robofuranosyl}uracil 3'-[(2-Cyanoethyl)-diispropylphosphorsamidit] (2-6)

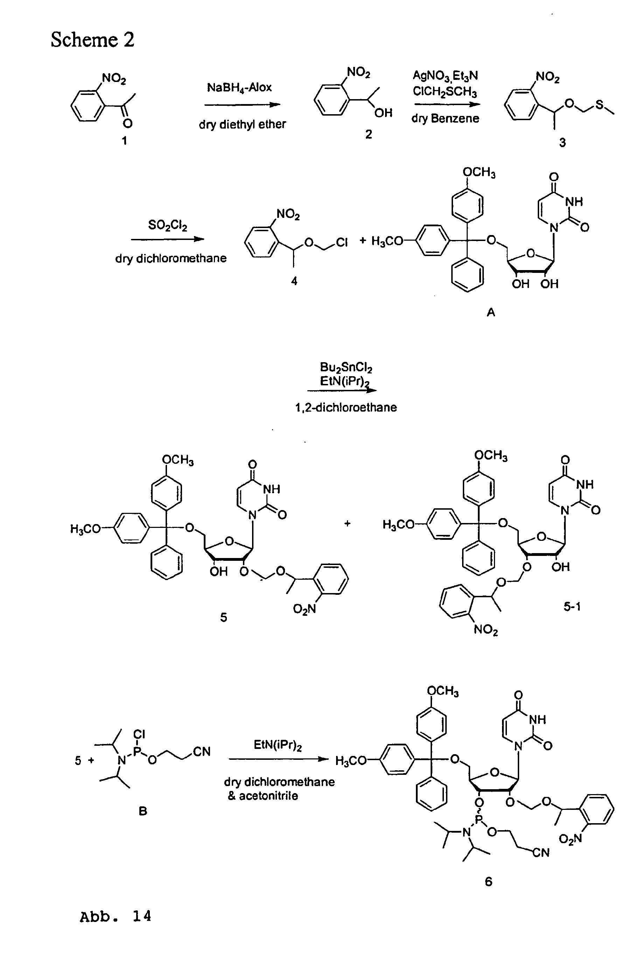

Die Synthese von Synthese von 1-{5'-O-(4,4'-Dimethoxytrityl)-2'-O-{[(1-(o-nitrobenzyl)ethyl)oxy]methyl}-β-L-robofuranosyl}uracil 3'-[(2-Cyanoethyl)-diispropylphosphorsamidit] (2-6) erfolgt in diesem Beispiel nach dem in Abbildung 14 gezeigten Schema.

### 1) 1-(o-Nitrophenyl)ethanol (2-2)

### (C₈H₉NO₃, Mw 167.16)

3 g NaBH₄ und 3 ml Wasser wurden bei Raumtemperatur zu 10 g Aluminiumoxid gegeben. Das Gemisch wurde für 6 Stunden gerührt, anschließend für ca. 18 Stunden mittels einer Vakuumpumpe getrocknet.

o-Nitroacetophenon in 60 ml trockenem Diethylether wurden bei Raumtemperatur zu NaBH₄-Alox in 60 ml trockenem Diethylether zugegeben und 2 Stunden gerührt. Die Lösung wurde ohne Säulenchromatographie auf Silicalgel gefiltert.
Produkt: 5.50g (99.8%)
TLC (MC : Hex = 3 : 1) : Rf = 0.14. ¹H-NMR (250MHz,CDCl₃), δ in ppm: 1.48, 1.50 (d,3H,-CH₃); 2.42 (br,1H,-OH); 5.30-5.37 (q,1H,-CH(CH₃)-); 7.30-7.83(m,4H,Ar-H)

### 2) 1-(o-Nitrophenyl)ethylmethylthiomethylether (2-3)

### (C₁₀H₁₃NO₃S, Mw 227.28)

Eine Lösung von 1-(o-Nitrophenyl)ethanol (5.52 g, 33.00 mmol) und Chlormethylmethylsulfid (3.82 g, 39.55 mmol) in 12 ml trockenem Benzol wurde innerhalb von 5 Minuten tropfenweise zu einer Lösung von Silbernitrat (6.17 g, 36.3 mmol) und Triethylamin (4.01 g, 39.63 mmol) in 20 ml trockenem Benzol zugegeben. Die Lösung wurde bei 60°C für 24 Stunden erwärmt, und anschließend durch eine trockene Celite-Säule gefiltert. Die Lösung wurde mit Dichlormethan extrahiert und mit 3% wässriger Phosphorsäure, gesättigtem wässrigem Natriumhydrogencarbonat und Wasser gewaschen und anschließend getrocknet. Der Rückstand wurde durch Säulenchromatographie auf Silicagel gereinigt (Dichlormethan: n-Hexan = 1:2).
Produkt : 1.70g (22.67%)
TLC (MC : Hex = 3 : 1) : Rf = 0.5. ¹H-NMR (400MHz,CDCl₃), δ in ppm : 1.50, 1.52(d,3H,Ar-CH(CH₃)-); 2.10(s,3H,-S-CH₃); 4.29,4.31,4.59,4.62(dd,2H,-O-CH₂-S); 5.37,5.39,5.40,5.42(q,1H,-CH(CH₃)-O); 7.39-7.90(m,4H,Ar-H)

### 3) 1-(o-Nitrophenyl)ethylchloromethylether (2-4)

### (C₉H₁₀NO₃Cl, Mw 215.64)

Frisch destilliertes Schwefenchlorid (1.57 g, 11.35 mmol) in 10 ml trockenem Dichlormethan wurde bei Raumtemperatur tropfenweise innerhalb von 10 Minuten zu einer Lösung von reinem 1-(o-Nitrophenyl)ethylmethylthiomethylether in 15 ml Dichlormethan zugegeben und anschließend 1 Stunde gerührt. Die Lösung wurde mittels eines Rotationsverdampfers verdampft. Der Rückstand wurde mittels eines Kugelrohrofens bei 100 -110°C und 0,05 torr destilliert. Das Produkt kann ohne Destillation nicht lange gelagert werden.
Produkt: 2.09g (91 %)
TLC (MC) : Rf= 0.07. ¹H-NMR (250MHz,CDCl₃), δ in ppm : 1.52,1.54(d,3H,-CH(CH₃)-O-); 5.17,5.18(d,1H-O-CH₂-Cl); 5.36-5.52(m,3H,-CH(CH₃)-O-CH₂-), 7.34-7.91 (m,4H,Ar-H)

### 4) 1-{5'-O-(4,4'-Dimethoxytrityl)-2'-O-{[(1-(o-nitrobenzyl)ethyl)oxy]methyl} -β-L-robofuranosyl}uracil(2-5) und 1-{5'-O-(4,4'-Dimethoxytrityl)-3'-O-{[(1-(o-nitrobenzyl)ethyl)oxy]methyl}-β-L-robofuranosyl}uracil(2-5-1)

### (C₃₉H₃₉N₃O₁₁, Mw 725.75)

Ethyldiisopropylamin (1.55 g, 12 mmol) und Bu₂SnCl₂ (0.875 g, 2.88 mmol) wurde zu Substanz A in 12 ml 1,2-Dichlorethan zugegeben. Die Lösung wurde bei Raumtemperatur 90 Minuten unter Argon gerührt und anschließend bei 70°C erwärmt.

1-(o-Nitrophenyl)ethylchloromethylether wurde bei 70°C zu der Lösung zugegeben. Nach 30 Minuten wurde das Gemisch mit Dichlormethan extrahiert, mit gesättigtem wässrigem Natriumhydrogencarbonat gewaschen und getrocknet. Der Rückstand wurde durch Säulenchromatographie auf Silicagel gereinigt (Ethylacetat: n-Hexan = 3:2).
Produkt: Substanz-5 740mg (42.5%), Substanz -5-1 550mg (31.6%)
TLC (Hex : EtOAc = 1 : 9) Rf = 0.68 (Substanz 5), 0.43 (Substanz 5-1).
¹H-NMR (2-5,400MHz,CDCl₃), δ in ppm : 1.55-1.57(t,3H,-CH(CH₃); 2.62(br.d,OH-C(3'); 3.55(dd,H-C(5'); 3.81(s,2MeO); 4.12(br.d,OH-C(3')); 4.11(dd,H-C(2')); 4.55(br.q,H-C(3')); 4.94,5.01(2d,OCH₂O); 5.29(d,H-C(5)); 6.02(d,H-C(1')); 6.82-6.88(m,Ar-4H); 7.25-7.78(m,Ar-12H); 7.96(d,H-C(6)); 7.91-7.97(m,Ar-1H). MS(MALDI) = 747[M+Na]⁺

### 5) 1-{5'-O-(4,4'-Dimethoxytrityl)-2'-O-{[(1-(o-nitrobenzyl)ethyl)oxy]methyl} -β-L-robofuranosyl}uracil 3'-[(2-Cyanoethyl)- diispropylphosphorsamidit](2-6)

### (C₄₈H₅₆N₅O₁₂P, Mw 925.97)

Ethyldiisopropylamin (178 mg, 1.38 mmol) und Diisopropylphosphoramidit-B (78.4 mg, 0.331 mmol) wurden zu Substanz (2-5) in 3 ml eines Gemisches von 1.5 ml Dichlormethan und 1.5 ml Acetonitril zugegeben. Die Lösung wurde 1 Stunde unter Argon gerührt, mit Butanol gequencht, mit Ethylacetat extrahiert, mit 5% Natriumhydrogencarbonat und gesättigtem wässrigen Natriumchlorid gewaschen, getrocknet und verdampft. Der Rückstand wurde in 3 ml eines Gemisches von 1.5 ml Dichlormethan und 1.5 ml Ethan gelöst, anschließend tropfenweise zu 150 ml kaltem Pentan (Eisbad) zugegeben und gefiltert.
Produkt: 177mg (92%)
TLC (Hex : EtOAc = 2 : 3) Rf = 0.35, 0.27.
¹H-NMR(400Hz,CDCl₃), δ in ppm: 1.01-1.19(m,12H,Me₂CH); 1.52-1.57(m,3H,-CH(CH₃)-O-); 2.40,2.47(2t,2H,OCH₂CH₂CN); 3.38-3.67(m,5H,Me₂CH,H-C(5'),OCH₂CH₂CN); 3.80,3.81(2s,6H,MeO); 3.91(m,1H,OCH₂CH₂CN); 4.11-4.24(m,1H,H-C(4')); 4.39-4.68(m,3H,H-C(2') and (3')); 4.85-4.97(m,4H,OCH₂O,ArCH₂); 5.14,5.20(2d,1H,H-C(5)); 6.06(d,0.5H,H-C(1')); 6.16(d,0.5H,H-C(1')); 6.83-6.87(m,Ar-4H); 7.22-7.45(m,Ar-10H); 7.60,7.78(2m,Ar-2H); 7.87,7.95(2d,1H,H-C(6)); 7.98(m,Ar-1H);
³¹P-NMR(162MHz): 151.2, 150.5 MS(MALDI) = 948[M+Na]⁺

### Abbildungen:

Abbildung 1: Schema für die Synthese eines Phosphoramidit-Bausteins.

Abbildung 2: Gelbild, das den quantitativen Verlauf der Spaltung des modifizierten Oligonukleotides darstellt.
Von links nach rechts:
1. 5'-TTG ACG GTA TAT CT-3' (14mer-Kontrolle) + Farbstoff (XC + BP)
2. 5'-AGC CCT TAC T-3'(10mer-Kontrolle)
3. Modelloligonukleotid 5'-AGC CCT TAC TTT GAC GGT ATA TCT-3
4. Leer
5. Modelloligonukleotid (unmodifiziert)
6. Spaltungsreaktion
7. Spaltungsreaktion
8. Modelloligonukleotid (unmodifiziert)
9. Spaltungsreaktion
10. Spaltungsreaktion
11. Modelloligonukleotid (modifizierte P-S-Bindung)
12. Spaltungsreaktion
13. Spaltungsreaktion
14. Modelloligonukleotid (modifizierte P-S-Bindung)
15. Spaltungsreaktion
16. Spaltungsreaktion

### Abbildung 3:

a) Anordnung der Sonden bei dem in Beispiel 5 beschriebenen Experiment.
b) Detektion eines Hybridisierungssignal mit gleicher Intensität an beiden Sondenmolekülen in Beispiel 5.

Abbildung 4: Prinzip des Experiments von Beispiel 6.

Abbildung 5: Hybridisierungssignal nach Spaltung des Phosphothioates mit unterschiedlichen Konzentrationen Silbernitrat.

Abbildung 6: Aufnahmen des Arrays nach verschiedenen Schritten des Experimentes.
Von links nach rechts: nach der Hybridisierung des Targets, nach Bindungsspaltung, sowie nach Abschmelzen der Hybride und erneuter Hybridisierung unter stringenten Bedingungen.

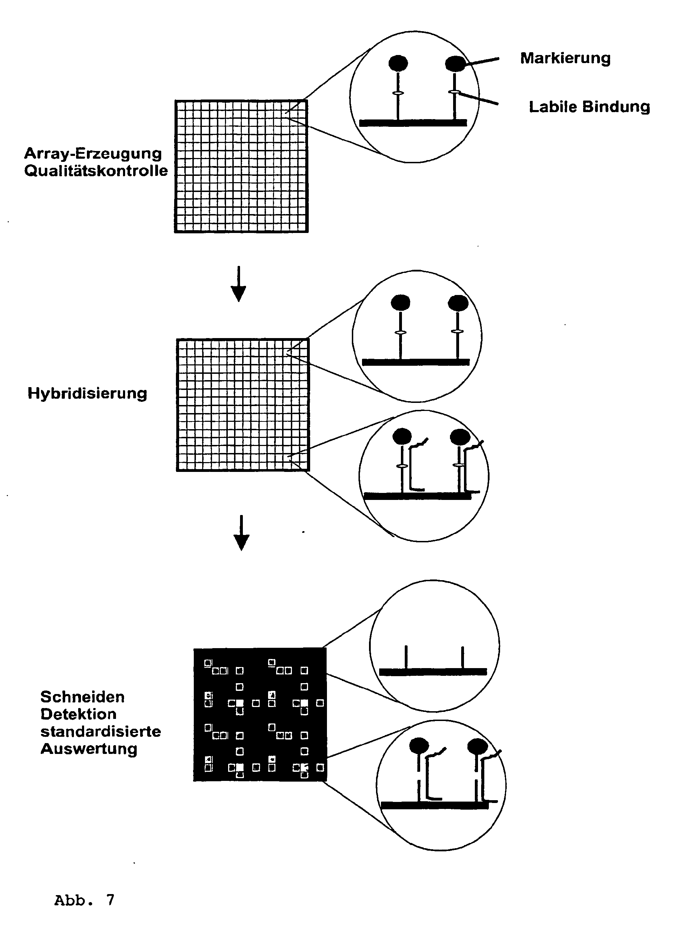

Abbildung 7: Schematische Darstellung der erfindungsgemäßen Verfahren.

Abbildung 8: Aufnahme des Arrays nach der Hybridisierung (siehe Beispiel 9).
Die Bahnen, die das unmodifizierte Oligonukleotid (Match-Sonde) enthalten, sind mit P bezeichnet. Die mit PT gekennzeichneten Bahnen enthalten das sequenzgleiche Oligonukleotid (Match-Sonde) mit der Phosphothiat-Modifikation. Die dazwischen liegenden Bahnen enthalten ein Oligonukleotid, das sich von den beiden anderen durch eine T-Deletion etwa in der Mitte des Moleküls unterscheidet (Mismatch-Sonde).

Abbildung 9: Aufnahme des Arrays nach Spaltung der Phosphothiotat-Bindung und anschließender Hybridisierung (siehe Beispiel 10).
Die Bahnen, die das unmodifizierte Oligonukleotid (Match-Sonde) enthalten, sind mit P bezeichnet. Die mit PT gekennzeichneten Bahnen enthalten das sequenzgleiche Oligonukleotid (Match-Sonde) mit der Phosphothioat-Modifikation. Die dazwischen liegenden Bahnen enthalten ein Oligonukleotid, das sich von den beiden anderen durch eine T-Deletion etwa in der Mitte des Moleküls unterscheidet (Mismatch-Sonde).

Abbildung 10: Schema für die Synthese von 5'-O-(4,4'-Dimethoxytrityl)-thymidylyl-(3'→5')-3'-O-[(2-cyanoethyl)-N,N-diisopropylamidophosphoramidit]-2'-desoxythymidin.

Abbildung 11: Schema für die Synthese von 5'-S-9-[4-methoxyphenyl)xanthen-9-yl]-mercapto-2'-desoxythymidin-3'-O-(2-cyanoethyl, N,N'-diisopropyl-phosphit).

Abbildung 12: Schema für die Synthese von 5'-S-Dimethoxytrityl-geschützten Amiditen.

Abbildung 13: Schema 1 für die Synthese von 1-{5'-O-(4,4'-Dimethoxytrityl)-2'-O-{[(2-nitrobenzyl)oxy]methyl}-β-L-robofuranosyl}uracil 3'-[(2-Cyanoethyl)-diispropylphosphorsamidit] (1-5).

Abbildung 14: Schema 2 für die Synthese von 1-{5'-O-(4,4'-Dimethoxytrityl)-2'-O-{[(2-nitrobenzyl)oxy]methyl} -β-L-robofuranosyl} uracil 3'-[(2-Cyanoethyl)-diispropylphosphorsamidit] (2-6).

## Patentansprüche

1. Sonden-Array zum qualitativen und/oder quantitativen Nachweis von Targetmolekülen in einer Probe durch molekulare Wechselwirkungen zwischen Sondenmolekülen und Targetmolekülen auf dem Sonden-Array,
umfassend eine Array-Oberfläche und an definierten Stellen auf der Array-Oberfläche immobilisierte Sondenmoleküle,
wobei die Sondenmoleküle ausgewählt sind aus der Gruppe bestehend aus Nukleinsäuren, Peptiden und Proteinen, die Sondenmoleküle mindestens eine Markierung aufweisen,
und die Sondenmoleküle in mindestens einem Monomer für den Aufbau von Nukleinsäuren, Peptiden oder Proteinen zwischen dem Ort der Immobilisierung der Sondenmoleküle auf der Array-Oberfläche und der Markierung eine selektiv spaltbare Bindung aufweisen.

2. Sonden-Array nach Anspruch 1,
wobei die Sondenmoleküle Oligonukleotide mit einer Länge von 15 bis 50 Basen sind.

3. Sonden-Array nach einem der vorangehenden Ansprüche,
wobei sich die selektiv spaltbare Bindung ungefähr in der Mitte zwischen dem Ort der Immobilisierung des Sondenmoleküls auf der Array-Oberfläche und der Markierung des Sondenmoleküls befindet.

4. Sonden-Array nach einem der vorangehenden Ansprüche,
wobei die selektiv spaltbare Bindung nicht durch enzymatische Methoden selektiv gespalten werden kann.

5. Sonden-Array nach einem der vorangehenden Ansprüche,
wobei die selektiv spaltbare Bindung durch nicht-enzymatische chemische und/oder durch physikalische Methoden selektiv gespalten werden kann.

6. Sonden-Array nach einem der vorangehenden Ansprüche,
wobei die selektiv spaltbare Bindung durch Zugabe von Säureanionen, Basekationen, Fluorid- und/oder Schwermetallionen wie Quecksilber- und/oder Silberionen selektiv gespalten werden kann.

7. Sonden-Array nach einem der vorangehenden Ansprüche,
wobei die selektiv spaltbare Bindung photolytisch selektiv gespalten werden kann.

8. Sonden-Array nach einem der vorangehenden Ansprüche,
wobei die Sondenmoleküle eine Nukleinsäure der Formel A₁-S-A₂ umfassen, wobei S eine Nukleinsäure ist, die mindestens eine selektiv spaltbare Bindung umfasst und A₁ und A₂ beliebige Nukleinsäuren oder Nukleinsäureanaloga sind.

9. Sonden-Array nach Anspruch 8,
wobei S ein Nukleotid-Dimer ist, das durch eine selektiv spaltbare Bindung verbrückt ist.

10. Sonden-Array nach Anspruch 8 oder 9,
wobei S aus der Gruppe bestehend aus den folgenden Dimeren mit den Formeln I und II ausgewählt ist:
a) 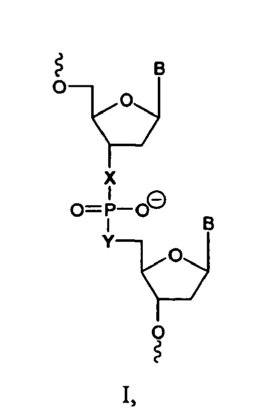 wobei X und Y unabhängig voneinander ausgewählt sind aus der Gruppe bestehend aus O, NH und S, mit der Maßgabe, dass X und Y nicht gleichzeitig O sind; und B für eine Nucleobase wie die Purin-Derivate Adenin und Guanin sowie die Pyrimidine Cytosin uund Thymin steht,
b) 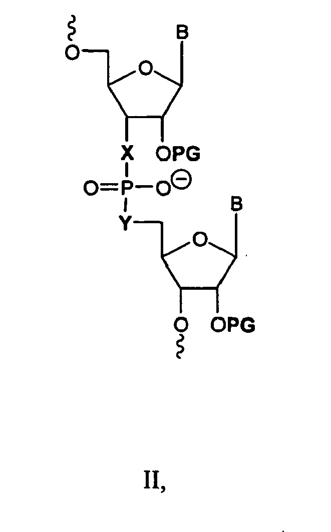 wobei X und Y unabhängig voneinander ausgewählt sind aus der Gruppe bestehend aus O, NH und S, mit der Maßgabe, dass X und Y nicht gleichzeitig O sind, wenn PG keine labile Schutzgruppe ist; B für eine Nucleobase wie die Purin-Derivate Adenin und Guanin sowie die Pyrimidine Cytosin und Uracil steht; und PG ausgewählt ist der Gruppe bestehend aus H und labilen Schutzgruppen wie

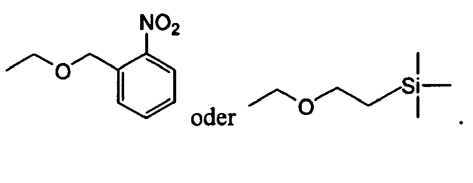

11. Sonden-Array nach einem der vorangehenden Ansprüche,
wobei die selektiv spaltbare Bindung eine Phosphothioatbindung ist.

12. Sonden-Array nach einem der vorangehenden Ansprüche,
wobei die Markierung eine detektierbare Einheit ist, die ausgewählt ist aus der Gruppe bestehend aus Fluoreszenzmarkern, Lumineszenzmarkern, Metallmarkern, Enzymmarkern, radioaktiven Markern, polymeren Markern und Nukleinsäuren, die durch Hybridisierung mit einer markierten Reportersonde detektierbar sind.

13. Sonden-Array nach einem der vorangehenden Ansprüche,
wobei auf mindestens einem Array-Element des Sonden-Arrays Sondenmoleküle angeordnet sind, die mindestens eine Markierung und keine selektiv spaltbare Bindung aufweisen.

14. Sonden-Array nach Anspruch 13,
wobei die nicht mit einer selektiv spaltbaren Bindung versehenen Sondenmoleküle Oligonukleotide mit einer definierten oder randomisierten Sequenz sind.

15. Sonden-Array nach einem der vorangehenden Ansprüche,
wobei auf mindestens einem Array-Element detektierbare Einheiten ohne Verknüpfung mit einem Sondenmolekül angeordnet sind.

16. Sonden-Array nach einem der Ansprüche 13 bis 15,
wobei die nicht mit einer selektiv spaltbaren Bindung versehenen Sondenmoleküle bzw. die nicht mit einem Sondenmolekül verknüpften detektierbaren Einheiten auf verschiedenen Array-Elementen angeordnet sind, die sich in ihrem Markierungsgrad unterscheiden.

17. Sonden-Array nach einem der vorangehenden Ansprüche,
wobei auf mindestens einem Array-Element Sondenmoleküle angeordnet sind, die keine oder zumindest keine spezifische Affinität zu Targetmolekülen aufweisen.

18. Sonden-Array nach Anspruch 17,
wobei die keine oder zumindest keine spezifische Affinität für Targetmoleküle aufweisenden Sondenmoleküle Oligonukleotide mit einer definierten oder randomisierten Sequenz sind.

19. Sonden-Array nach einem der vorangehenden Ansprüche,
wobei auf mindestens einem Array-Element Sondenmoleküle angeordnet sind, die eine spezifische Affinität für zu der Probe vorzugsweise in bekannter Konzentration extern zugegebene Targetmoleküle aufweisen.

20. Sonden-Array nach einem der vorangehenden Ansprüche,
wobei über die gesamte Fläche des Arrays Array-Elemente verteilt sind, auf denen Sondenmoleküle angeordnet sind, die eine Markierung und eine selektiv spaltbare Bindung, angeordnet zwischen Markierung und Immobilisierungsstelle der Sonde auf der Oberfläche, aufweisen, sowie eine spezifische Affinität zu einem extern zugegebenen Targetmolekül oder zu einem in der Probe in ausreichender Konzentration vorhandenen Targetmolekül aufweisen.

21. Verfahren zur Herstellung eines Sonden-Arrays gemäß einem der vorangehenden Ansprüche, umfassend die folgenden Schritte:
a) Synthese von Sondenmolekülen ausgewählt aus der Gruppe bestehend aus Nukleinsäuren, Peptiden und Proteinen, wobei die Sondenmoleküle mindestens eine Markierung tragen und in mindestens einem Monomer für den Aufbau von Nukleinsäuren, Peptiden und Proteinen zwischen der Stelle ihrer Immobilisierung auf der Array-Oberfläche und der Markierung eine selektiv spaltbare Bindung aufweisen; und
b) ortsspezifische Immobilisierung der Sondenmoleküle über eine definierte Position innerhalb der Sondenmoleküle auf der Array-Oberfläche.

22. Verfahren zur Herstellung eines Sonden-Arrays gemäß einem der Ansprüche 1 bis 20 durch in situ-Synthese von Sondenmolekülen ausgewählt aus der Gruppe bestehend aus Nukleinsäuren, Peptiden und Proteinen auf vorbestimmten Positionen der Array-Oberfläche, umfassend die folgenden Schritte:
a) Bereitstellung einer Array-Oberfläche, die mit geeigneten Reagenzien aktiviert werden kann bzw. mit Schutzgruppen versehen ist;
b) Kopplung bzw. Immobilisierung von Untereinheiten der zu synthetisierenden Sondenmoleküle an vorbestimmte Stellen auf der Array-Oberfläche vorzugsweise durch Deposition der Untereinheit, wobei die Kopplung an vorbestimmten Stellen vorzugsweise durch Aktivierung bzw. Entschützung der Array-Oberfläche und anschließende Kopplung der Untereinheit erfolgt;
c) in situ-Synthese der Sondenmoleküle aufbauend auf den in Schritt b) gekoppelten bzw. immobilisierten Untereinheiten unter Einbau einer Markierung und unter Verwendung mindestens eines Monomers für den Aufbau von Nukleinsäuren, Peptiden und Proteinen, das eine selektiv spaltbare Bindung aufweist, wobei das mindestens ein Monomer zwischen der Stelle der Immobilisierung der Sondenmoleküle auf der Array-Oberfläche und der Markierung eingebaut wird.

23. Verfahren nach Anspruch 21 oder 22,
wobei die Immobilisierung der Sonden auf der Array-Oberfläche kovalent erfolgt.

24. Verfahren nach einem der Ansprüche 21 bis 23,
wobei die Synthese von Oligonukleotidsonden nach dem Phoshoramiditverfahren erfolgt.

25. Verfahren nach einem der Ansprüche 21 bis 24,
wobei die selektiv spaltbare Bindung durch Verbrückung von zwei Nukleosiden mit einer Phosphothioatgruppe erzeugt wird.

26. Verfahren nach einem der Ansprüche 21 bis 25,
wobei ein abgestufter Markierungsgrad auf einem Array-Element **dadurch** erreicht wird, dass während der Synthese eine Mischung aus markierten Monomeren und unmarkierten Monomeren gleicher Reaktivität vorzugsweise in einem definierten Verhältnis zugegeben wird.

27. Verfahren zur Überprüfung der Qualität der Sonden-Arrays nach einem der Ansprüche 1 bis 20 bzw. der nach einem der Ansprüche 21 bis 26 hergestellten Sonden-Arrays, umfassend die folgenden Schritte:
a) Bereitstellung eines Sonden-Arrays gemäß einem der Ansprüche 1 bis 20;
b) Detektion der auf der Array-Oberfläche immobilisierten synthetisierten Sondenmoleküle in Form von Signalintensitäten.

28. Verfahren nach Anspruch 27,
wobei die Detektion über direkt zu detektierende Marker, insbesondere Fluoreszenzmarker und/oder radioaktive Marker, erfolgt.

29. Verfahren zum qualitativen und/oder quantitativen Nachweis von Targetmolekülen aus einer zu untersuchenden Probe durch molekulare Wechselwirkungen zwischen Sondenmolekülen und Targetmolekülen auf Sonden-Arrays, umfassend die folgenden Schritte:
a) Bereitstellung eines Sonden-Arrays gemäß einem der Ansprüche 1 bis 20;
b) gegebenenfalls Detektion der auf der Array-Oberfläche immobilisierten bzw. synthetisierten Sondenmoleküle in Form von Signalintensitäten;
c) Inkubation des Sonden-Arrays mit der zu untersuchenden Probe;
d) gegebenenfalls Waschen unter Bedingungen, unter denen eine spezifische Wechselwirkung zwischen Target- und Sondenmolekül weitgehend stabil bleibt und unspezifisch gebundene Targets entfernt werden;
e) gegebenenfalls erneute Detektion in Form von Signalintensitäten;
f) selektive Spaltung der selektiv spaltbaren Bindung in den Sondenmolekülen;
g) gegebenenfalls Waschen, um nicht durch eine Wechselwirkung mit Targetmolekülen an der Array-Oberfläche zurückgehaltene markierte Sondenmolekül-Fragmente zu entfernen;
h) Detektion der durch eine Wechselwirkung mit Targetmolekülen auf der Array-Oberfläche verbliebenen markierten Sondenmolekül-Fragmente in Form von Signalintensitäten; und
i) gegebenenfalls Normierung der in Schritt h) erhaltenen Signalintensitäten.

30. Verfahren nach Anspruch 29,
wobei die Normierung in Schritt i) durch mindestens eine der folgenden Methoden erfolgt:
a) Normierung durch mathematische Verknüpfung der in Schritt h) erhaltenen Signalintensitäten mit einem Korrekturfaktor, der anhand der Signalintensitäten aus Schritt b) nach Anspruch 29 bzw. aus Schritt b) nach Anspruch 27 ermittelt wird;
b) Normierung durch mathematische Verknüpfung der in Schritt h) erhaltenen Signalintensitäten mit einem Korrekturfaktor, der anhand der Signalintensitäten von Kontroll-Array-Elementen ermittelt wird, die über die gesamte Fläche des Arrays verteilt sind und auf denen Sondenmoleküle angeordnet sind, die eine Markierung und eine selektiv spaltbare Bindung, angeordnet zwischen Markierung und Immobilisierungsstelle des Sondemoleküls auf der Oberfläche, aufweisen, sowie eine spezifische Affinität zu einem extern zugegebenen Targetmolekül oder zu einem in der Probe in ausreichender Konzentration vorhandenen Targetmolekül aufweisen;
c) Normierung durch Subtraktion der in Schritt h) erhaltenen Signalintensitäten mit von Hintergrund-Array-Elementen detektierten Signalintensitäten, auf denen Sondenmoleküle angeordnet sind, die keine bzw. keine detektierbare Wechselwirkung mit Targetmolekülen aus der Probe eingehen; und/oder
d) Normierung durch Vergleich der für ein Array-Element erhaltenen Signalintensität mit Signalintensitäten von Detektionsstandard-Array-Elementen, auf denen markierte, jedoch nicht mit einer selektiv spaltbaren Bindung versehene Sondenmoleküle angeordnet sind,
wobei sich der Markierungsgrad der Detektionsstandard-Array-Elemente vorzugsweise in charakteristischer Weise unterscheidet.

31. Verfahren nach Anspruch 29 oder 30,
wobei die selektiv spaltbare Bindung durch chemische und/oder physikalische Methoden selektiv gespalten wird.

32. Verfahren nach einem der Ansprüche 29 bis 31,
wobei die selektiv spaltbare Bindung durch Zugabe von Säureanionen, Basekationen, Fluorid- und/oder Schwermetallionen wie Quecksilber- und/oder Silberionen selektiv gespalten wird.

33. Verfahren nach einem der Ansprüche 29 bis 32,
wobei die Inkubation mit einer Probe von markierten Targets erfolgt.

34. Verfahren nach einem der Ansprüche 29 bis 33,
wobei die Spaltung der selektiv spaltbaren Bindung bei hoher Ionenstärke und/oder niedriger Temperatur erfolgt.

35. Kit zum qualitativen und/oder quantitativen Nachweis von Targetmolekülen aus einer Probe durch molekulare Wechselwirkungen zwischen Sondenmolekülen und Targetmolekülen auf Sonden-Arrays, umfassend die folgenden Bestandteile:
a) ein Sonden-Array nach einem der Ansprüche 1 bis 20;
b) Reagenzien für die selektive Spaltung der selektiv spaltbaren Bindung in den Sondenmolekülen;
c) Hybridsierungspuffer; und
d) gegebenenfalls Waschpuffer.

36. Kit nach Anspruch 35,
wobei die Reagenzien ausgewählt werden aus der Gruppe, bestehend aus Schwermetallionen und Enzymen.

37. Kit nach Anspruch 36,
wobei die Schwermetallionen ausgewählt werden aus Quecksilber- und/oder Silberionen.

38. Kit nach einem der Ansprüche 35 bis 37,
wobei es zusätzlich eine Reaktionskammer und/oder Detektionsvorrichtung und/oder Temperatursteuerungseinheit umfasst.

39. Verwendung des Sonden-Arrays nach einem der Ansprüche 1 bis 20 bzw. des Verfahren nach einem der Ansprüche 29 bis 34 bzw. des Kits nach einem der Ansprüche 35 bis 38 zum qualitativen und/oder quantitativen Nachweis von Targetmolekülen aus einer Probe durch molekulare Wechselwirkungen zwischen Sondenmolekülen und Targetmolekülen auf Sonden-Arrays.

## Claims

1. Probe array for the qualitative and/or quantitative detection of target molecules in a sample by means of molecular interactions between probe molecules and target molecules on the probe array, the probe array comprising an array surface and probe molecules immobilized at defined sites of the array surface, wherein
- the probe molecules are selected from the group consisting of nucleic acids, peptides, and proteins;
- the probe molecules have at least one label; and
- the probe molecules have a selectively cleavable bond in at least one monomer building block of nucleic acids, peptides or proteins between the site of immobilization of the probe molecules on the array surface and the label.

2. The probe array according to claim 1, wherein the probe molecules are oligonucleotides of 15 to 50 bases in length.

3. The probe array according to any of the preceding claims, wherein the selectively cleavable bond is located approximately central between the site of immobilization of the probe molecule on the array surface and the label of the probe molecule.

4. The probe array according to any of the preceding claims, wherein the selectively cleavable bond cannot be selectively cleaved by enzymatic methods.

5. The probe array according to any of the preceding claims, wherein the selectively cleavable bond can be selectively cleaved by non-enzymatic chemical methods and/or by physical methods.

6. The probe array according to any of the preceding claims, wherein the selectively cleavable bond can be selectively cleaved by adding acid anions, base cations, fluoride ions and/or heavy metal ions such as mercury ions and/or silver ions.

7. The probe array according to any of the preceding claims, wherein the selectively cleavable bond can be selectively cleaved photolytically.

8. The probe array according to any of the preceding claims, wherein the probe molecules comprise a nucleic acid of the formula A₁-S-A₂, wherein
- S is a nucleic acid comprising at least one selectively cleavable bond, and
- each of A₁ and A₂ is any nucleic acid or nucleic acid analog.

9. The probe array according to claim 8, wherein S is a nucleotide dimer that is linked by a selectively cleavable bond.

10. The probe array according to claim 8 or 9, wherein S is selected from the group consisting of the dimers having the formulas (I) or (II):
a) 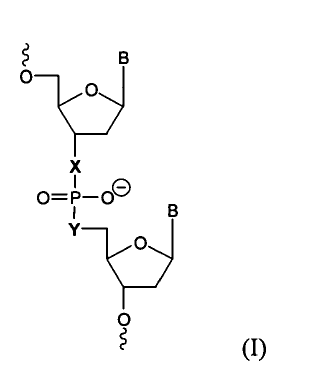 wherein
- X and Y are independently selected from the group consisting of O, NH and S, provided that X and Y are not simultaneously O; and
- B represents a nucleobase such as the purine derivatives adenine and guanine or the pyrimidines cytosine and thymine;
b) 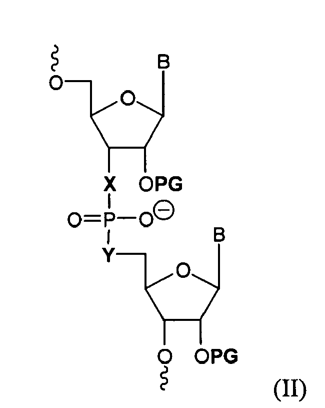 wherein
- X and Y are independently selected from the group consisting of O, NH and S, provided that X and Y are not simultaneously O, in case PG is no labile protecting group;
- B represents a nucleobase such as the purine derivatives adenine and guanine or the pyrimidines cytosine and uracil; and
- PG is selected from the group consisting of H and labile protecting groups such as

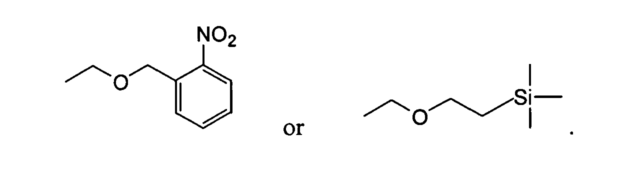

11. The probe array according to any of the preceding claims, wherein the selectively cleavable bond is a phosphothioate bond.

12. The probe array according to any of the preceding claims, wherein the label is a detectable moiety selected from the group consisting of fluorescent labels, luminescent labels, metal labels, enzyme labels, radioactive labels, polymeric labels and nucleic acids, which are detectable by hybridization with a labeled reporter probe.

13. The probe array according to any of the preceding claims, wherein probe molecules are located on at least one array element of the probe array, the probe molecules having at least one label and no selectively cleavable bond.

14. The probe array according to claim 13, wherein that the probe molecules not having a selectively cleavable bond are oligonucleotides having a defined or a randomized sequence.

15. The probe array according to any of the preceding claims, wherein detectable moieties are located on at least one array element without being linked to a probe molecule.

16. The probe array according to any of claims 13 to 15, wherein the probe molecules not having a selectively cleavable bond or the detectable units not being linked to a probe molecule are located on different array elements, the array elements differing in their extent of labeling.

17. The probe array according to any of the preceding claims, wherein probe molecules not having affinity or at least not having specific affinity for target molecules are located on at least one array element.

18. The probe array according to claim 17, wherein the probe molecules not having affinity or at least not having specific affinity for target molecules are oligonucleotides having a defined or a randomized sequence.

19. The probe array according to any of the preceding claims, wherein probe molecules are located on at least one array element, the probe molecules having specific affinity for target molecules externally added to the sample, preferably in a known concentration.

20. The probe array according to any of the preceding claims, wherein array elements, on which probe molecules are located, are distributed over the entire surface of the array, the probe molecules having a label and a selectively cleavable bond, located between the label and the site of immobilization of the probe on the surface, and having specific affinity for a target molecule added externally or for a target molecule present in the sample in sufficient concentration.

21. Method for producing a probe array according to any of the preceding claims, comprising the following steps:
(a) synthesis of probe molecules selected from the group consisting of nucleic acids, peptides, and proteins, wherein the probe molecules have at least one label and have a selectively cleavable bond in at least one monomer building block of nucleic acids, peptides or proteins between the site of their immobilization on the array surface and the label; and
(b) site specific immobilization of the probe molecules on the array surface via a defined position within the probe molecules.

22. Method for producing a probe array according to any of claims 1 to 20 by *in situ* synthesis of probe molecules at predetermined sites of the array surface, the probe molecules being selected from the group consisting of nucleic acids, peptides, and proteins, the method comprising the following steps:
(a) provision of an array surface capable of being activated by suitable reagents or provided with protecting groups;
(b) coupling or immobilization of subunits of the probe molecules to be synthesized to predetermined sites on the array surface, preferably by deposition of the subunit, wherein the coupling to predetermined sites is preferably achieved by activation or deprotection of the array surface and subsequent coupling of the subunit; and
(c) *in situ* synthesis of the probe molecules starting from the subunits coupled or immobilized in step (b) by incorporating a label and by using at least one monomer building block of nucleic acids, peptides or proteins having a selectively cleavable bond, wherein the at least one monomer building block is incorporated between the site of immobilization of the probe molecules on the array surface and the label.

23. The method according to claim 21 or 22, wherein the immobilization of the probes on the array surface is covalent.

24. The method according to any of claims 21 to 23, wherein the synthesis of oligonucleotide probes is performed according to the phosphoamidite method.

25. The method according to any of claims 21 to 24, wherein the selectively cleavable bond is generated by linking two nucleosides via a phosphothioate group.

26. The method according to any of claims 21 to 25, wherein a gradual extent of labeling on an array element is achieved by adding, preferably in a defined ratio, a mixture of labeled monomers and unlabeled monomers having the same reactivity during synthesis.

27. Method for controlling the quality of the probe arrays according to any of claims 1 to 20 or the probe arrays produced according to any of claims 21 to 26, comprising the following steps:
(a) providing a probe array according to any of claims 1 to 20;
(b) detecting in form of signal intensities the probe molecules synthesized that are immobilized on the array surface.

28. The method according to claim 27, wherein detection occurs via directly detectable labels, particularly fluorescent labels and/or radioactive labels.

29. Method for the qualitative and/or quantitative detection of target molecules in a sample to be analyzed by means of molecular interactions between probe molecules and target molecules on probe arrays, comprising the following steps:
(a) providing a probe array according to any of claims 1 to 20;
(b) optionally, detecting in form of signal intensities the probe molecules immobilized or synthesized on the array surface;
(c) incubation of the probe arrays with the sample to be analyzed;
(d) optionally, washing under conditions, in which a specific interaction between target molecule and probe molecule remains largely stable and in which nonspecifically bound targets are removed;
(e) optionally, second detection in form of signal intensities;
(f) selective cleavage of the selectively cleavable bond in the probe molecules;
(g) optionally, washing in order to remove labeled probe molecule fragments being not retained on the array surface by an interaction with target molecules;
(h) detecting in the form of signal intensities the labeled probe molecule fragments being retained on the array surface by an interaction with target molecules; and
(i) optionally, standardization of the signal intensities obtained in step (h).

30. The method according to claim 29, wherein the standardization in step (i) is performed by at least one of the following methods:
(a) standardization by mathematical concatenation of the signal intensities obtained in step (h) with a correction factor, which is determined on the basis of the signal intensities obtained in step (b) according to claim 29 or obtained in step (b) according to claim 27;
(b) standardization by mathematical concatenation of the signal intensities obtained in step (h) with a correction factor, which is determined on the basis of the signal intensities of control array elements, which are distributed over the entire surface of the array and on which probe molecules are located, the probe molecules having a label and a selectively cleavable bond, located between the label and the site of immobilization of the probe molecule on the array surface, and having specific affinity for a target molecule externally added or for a target molecule present in the sample in a sufficient concentration;
(c) standardization by subtraction from the signal intensities obtained in step (h) the signal intensities detected using background array elements, on which probe molecules are located that show no or no detectable interaction with target molecules in the sample; and/or
(d) standardization by comparing the signal intensities obtained for an array element with the signal intensities of detection standard array elements, on which probe molecules are located that are labeled but not provided with a selectively cleavable bond, wherein the extent of labeling of the detection standard array elements preferably differs in a characteristic manner.

31. The method according to claim 29 or 30, wherein the selectively cleavable bond is selectively cleaved by chemical and/or physical methods.

32. The method according to any of claims 29 to 31, wherein the selectively cleavable bond is selectively cleaved by adding acid anions, base cations, fluoride ions and/or heavy metal ions such as mercury ions and/or silver ions..

33. The method according to any of claims 29 to 32, wherein incubation is performed using a sample of labeled targets.

34. The method according to any of claims 29 to 33, wherein the cleavage of the selectively cleavable bond is performed at high ionic strength and/or low temperature.

35. Kit for the qualitative and/or quantitative detection of target molecules in a sample by means of molecular interactions between probe molecules and target molecules on probe arrays, comprising the following components:
(a) a probe array according to any of claims 1 to 20;
(b) reagents for the selective cleavage of the selectively cleavable bond in the probe molecules;
(c) hybridization buffer; and
(d) optionally, washing buffer.

36. The kit according to claim 35, wherein the reagents are selected from the group consisting of heavy metal ions and enzymes.

37. The kit according to claim 36, wherein the heavy metal ions are selected from mercury ions and/or silver ions.

38. The kit according to any of claims 35 to 37, further comprising a reaction chamber and/or a detection device and /or a temperature control unit.

39. Use of the probe array according to any of claims 1 to 20 or the method according to any of claims 29 to 34 or the kit according to any of claims 35 to 38 for the qualitative and/or quantitative detection of target molecules in a sample by means of molecular interactions between probe molecules and target molecules on probe arrays.

## Revendications

1. Réseau de sondes pour détection qualitative et/ou quantitative de molécules cible dans un échantillon par interaction moléculaire sur le réseau de sondes entre les molécules de sondes et molécules cible,
comprenant une surface de réseau et, en des emplacements définis de la surface de réseau, des molécules de sonde immobilisées,
les molécules de sonde étant choisies dans un groupe composé d'acides nucléiques, de peptides et de protéines, les molécules de sonde présentant au moins un marquage et les molécules de sonde présentant au moins un monomère pour l'élaboration d'acides nucléiques, de peptides ou de protéines entre l'emplacement de l'immobilisation des molécules de sonde sur la surface de réseau et le marquage d'une combinaison clivable.

2. Réseau de sondes selon la revendication 1,
dans lequel les molécules de sonde sont des oligonucléotides d'une longueur de 15 à 50 bases.

3. Réseau de sondes selon l'une quelconque des revendications précédentes,
dans lequel la combinaison clivable de façon sélective se situe environ au milieu entre l'emplacement de l'immobilisation de la molécule de sonde sur la surface de réseau et le marquage de la molécule de sonde.

4. Réseau de sondes selon l'une quelconque des revendications précédentes,
dans lequel la combinaison clivable de façon sélective ne peut pas être clivée de façon sélective par des méthodes enzymatiques.

5. Réseau de sondes selon l'une quelconque des revendications précédentes,
dans lequel la combinaison clivable de façon sélective peut être clivée de façon sélective par des méthodes non enzymatiques, chimiques et/ou des méthodes physiques.

6. Réseau de sondes selon l'une quelconque des revendications précédentes,
dans lequel la combinaison clivable de façon sélective peut être clivée de façon sélective par apport d'anions d'acide, de cations de base, d'ions de fluorure ou de métal lourd tels des ions de mercure et/ou d'argent.

7. Réseau de sondes selon l'une quelconque des revendications précédentes,
dans lequel la combinaison clivable de façon sélective peut être clivée de façon sélective par méthode photolytique.

8. Réseau de sondes selon l'une quelconque des revendications précédentes,
dans lequel les molécules de sonde comprennent un acide nucléique de formule A₁-S-A₂, S étant un acide nucléique comprenant au moins une combinaison clivable et A₁ et A₂ étant des acides nucléiques ou analogues d'acides nucléiques quelconques.

9. Réseau de sondes selon la revendication 8,
dans lequel S est un dimère de nucléotide ponté par une combinaison clivable de façon sélective.

10. Réseau de sondes selon la revendication 8 ou 9,
dans lequel S est choisi dans le groupe se constituant des dimères suivants des formules I et II :
a) 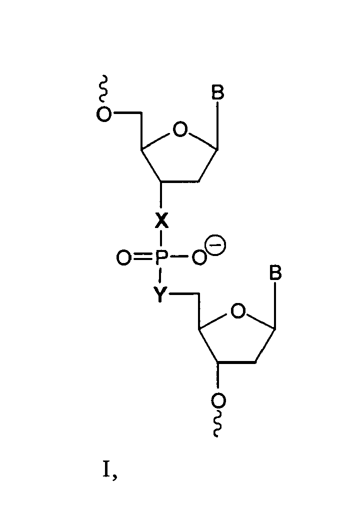 où X et Y sont choisis indépendamment l'un de l'autre dans le groupe se constituant de O, NH et S, avec la contrainte que X et Y ne soient pas simultanément O ; et que B représente une nucléobase telle les dérivés de purine, adénine et guanine, ainsi que les pyrimidines, cytosine et thymine,
b) 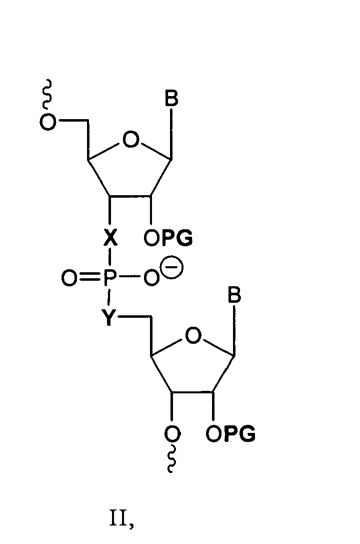 où X et Y sont choisis indépendamment l'un de l'autre dans le groupe se constituant de O, NH et S, avec la contrainte que X et Y ne soient pas simultanément O lorsque PG n'est pas un groupe de protection instable ;
que B représente une nucléobase telle les dérivés de purine, adénine ou guanine, ainsi que les pyrimidines, cytosine et uracile ;
et que PG est choisi dans le groupe se constituant de H et de groupes de protection instables tels

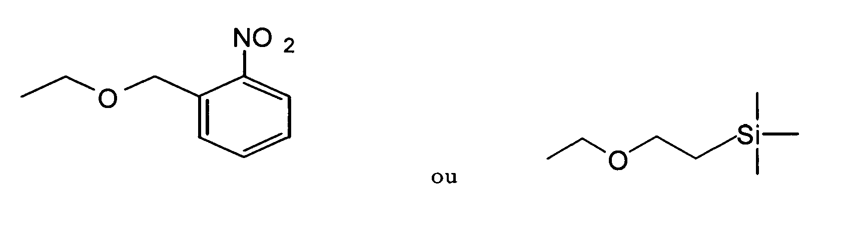

11. Réseau de sondes selon l'une quelconque des revendications précédentes,
dans lequel la combinaison clivable de façon sélective est une combinaison thiophosphate.

12. Réseau de sondes selon l'une quelconque des revendications précédentes,
dans lequel le marquage est une unité détectable choisie dans le groupe se constituant de marqueurs fluorescents, de marqueurs luminescents, de marqueurs métalliques, de marqueurs enzymatiques, de marqueurs radioactifs, de marqueurs polymère et d'acides nucléiques, détectables par hybridation avec une sonde reporter marquée.

13. Réseau de sondes selon l'une quelconque des revendications précédentes,
dans lequel des molécules de sonde sont disposées sur au moins un élément de réseau du réseau de sondes qui présentent au moins un marquage et aucune combinaison clivable de façon sélective.

14. Réseau de sondes selon la revendication 13,
dans lequel les molécules de sonde qui ne sont pas pourvues d'une combinaison clivable de façon sélective sont des oligonucléotides d'une séquence définie ou aléatoire.

15. Réseau de sondes selon l'une quelconque des revendications précédentes,
dans lequel sont disposées sur au moins un élément de réseau des unités détectables sans liaison avec une molécule de sonde.

16. Réseau de sondes selon l'une quelconque des revendications 13 à 15,
dans lequel les molécules de sonde qui ne sont pas pourvues d'une combinaison clivable de façon sélective ou les unités détectables sans liaison avec une molécule de sonde sont disposées sur différents éléments de sonde qui se distinguent par leur degré de marquage.

17. Réseau de sondes selon l'une quelconque des revendications précédentes,
dans lequel sont disposées sur au moins un élément de réseau des molécules de sonde qui ne présentent aucune affinité ou, au moins, aucune affinité spécifique avec des molécules cible.

18. Réseau de sondes selon la revendication 17,
dans lequel les molécules de sonde qui ne présentent aucune affinité ou, au moins, aucune affinité spécifique avec des molécules cible sont des oligonucléotides d'une séquence définie ou aléatoire.

19. Réseau de sondes selon l'une quelconque des revendications précédentes,
dans lequel sont disposées sur au moins un élément de réseau des molécules de sonde qui présentent une affinité spécifique avec des molécules cible ajoutées externes à l'échantillon, de préférence en concentration connue.

20. Réseau de sondes selon l'une quelconque des revendications précédentes,
dans lequel des éléments de réseau sont répartis sur la totalité de la surface, sur lesquels sont disposées des molécules de sonde présentant un marquage et une combinaison clivable de façon sélective disposée entre marquage et emplacement d'immobilisation sur la surface, ainsi qu'une affinité spécifique avec une molécule cible ajoutée externe ou avec une molécule cible présente en concentration suffisante dans l'échantillon.

21. Procédé de fabrication d'un réseau de sondes selon l'une quelconque des revendications précédentes, comprenant les étapes suivantes :
a) synthèse de molécules de sonde choisies dans le groupe se constituant d'acides nucléiques, de peptides et de protéines, les molécules de sonde portant au moins un marquage et présentant une combinaison clivable de façon sélective dans au moins un monomère pour l'élaboration d'acides nucléiques, de peptides et de protéines, entre l'emplacement de leur immobilisation sur la surface de réseau et le marquage ; et
b) immobilisation spécifique à l'emplacement des molécules de sonde dans un emplacement défini à l'intérieur des molécules de sonde sur la surface de réseau.

22. Procédé de fabrication d'un réseau de sondes selon l'une quelconque des revendications 1 à 20 par synthèse *in situ* de molécules de sonde choisies dans le groupe se constituant d'acides nucléiques, de peptides et de protéines, en des emplacements prédéterminés de la surface de réseau, comprenant les étapes suivantes :
a) préparation d'une surface de réseau pouvant être activée par des réactifs adaptés ou pourvue de groupes de protection ;
b) couplage ou immobilisation de sous-unités de molécules de sonde à synthétiser en des emplacements prédéterminés de la surface de réseau de conférence par dépôt de la sous-unité, le couplage en des emplacements prédéterminés se réalisant de préférence par activation ou dé-protection de la surface de réseau puis couplage de la sous-unité ;
c) synthèse *in situ* des molécules de sonde élaborées sur les sous-unités couplées ou immobilisées à l'étape b) en introduisant un marquage et en utilisant au moins un monomère pour l'élaboration d'acides nucléiques, de peptides et de protéines, qui présentent une combinaison clivable de façon sélective, ledit au moins un monomère étant introduit entre l'emplacement de l'immobilisation des molécules de sonde sur la surface de réseau et de marquage.

23. Procédé selon la revendication 21 ou 22,
dans lequel l'immobilisation des sondes sur la surface de réseau s'effectue de façon covalente.

24. Procédé selon l'une quelconque des revendications 21 à 23,
dans lequel la synthèse de sondes d'oligonucléotides s'effectue selon le procédé phosphate amidite.

25. Procédé selon l'une quelconque des revendications 21 à 24,
dans lequel la combinaison clivable sélectible s'effectue par pontage de deux nucléosides avec un groupe thiophosphate.

26. Procédé selon l'une quelconque des revendications 21 à 25,
dans lequel un degré de marquage étagé est obtenu pour un élément de réseau du fait que pendant la synthèse un mélange de monomères marqués et de monomères non marqués de même réactivité est, de préférence, apporté selon une proportion définie.

27. Procédé de vérification de la qualité des réseaux de sondes selon l'une quelconque des revendications 1 à 20, ou des réseaux de sondes fabriqués selon l'une quelconque des revendications 21 à 26, comprenant les étapes suivantes :
a) préparation d'un réseau de sondes selon l'une quelconque des revendications 1 à 20 ;
b) détection des molécules de sonde synthétisées, immobilisées sur la surface de réseau sous la forme d'intensités de signal.

28. Procédé selon la revendication 27,
dans lequel la détection se réalise par des marqueurs à détecter directement, en particulier des marqueurs fluorescents et/ou des marqueurs radioactifs.

29. Procédé de mise en évidence qualitative et/ou quantitative de molécules cible
d'un échantillon à examiner par interactions moléculaires entre molécules de sonde et molécules cible sur des réseaux de sonde, comprenant les étapes suivantes :
a) préparation d'un réseau de sondes selon l'une quelconque des revendications 1 à 20 ;
b) détection éventuelle des molécules de sonde synthétisées ou immobilisées sur la surface de réseau sous la forme d'intensités de signal ;
c) incubation du réseau de sondes avec l'échantillon à examiner ;
d) lavage éventuel sous conditions, parmi lesquelles une interaction spécifique entre molécule cible et sonde demeure largement stable et des cibles combinées non spécifiques sont éliminées ;
e) éventuellement nouvelle détection sous la forme d'intensités de signal ;
f) clivage sélectif des combinaisons clivables de façon sélectives dans les molécules de sonde ;
g) lavage éventuel de façon à ne pas éliminer par une interaction avec des molécules cible à la surface de réseau des fragments de molécule de sonde marqués retenus ;
h) détection des fragments de molécule de sonde marqués demeurant par une interaction avec des molécules de sonde sur la surface de réseau sous la forme d'intensités de signal ; et
i) normalisation éventuelle des intensités de signal obtenues à l'étape h).

30. Procédé selon la revendication 29, dans lequel la normalisation de l'étape i) s'effectue au moyen d'au moins l'une des méthodes suivantes :
a) normalisation par combinaison mathématique des intensités de signal obtenues à l'étape h) avec un facteur de correction pouvant être déterminé au moyen des intensités de signal de l'étape b) selon la revendication 29 ou de l'étape b) selon la revendication 27 ;
b) normalisation par combinaison mathématique des intensités de signal obtenues à l'étape h) avec un facteur de correction pouvant être déterminé au moyen des intensités de signal d'éléments de réseau de contrôle qui sont répartis sur la totalité de la surface du réseau et sur lesquels des molécules de sondes sont disposées, qui présentent un marquage et une combinaison clivable de façon sélective disposée entre marquage et emplacement d'immobilisation de la sonde de molécule sur la surface, ainsi qu'une affinité spécifique avec une molécule cible apportée externe ou avec une molécule cible présente en concentration suffisante dans l'échantillon ;
c) normalisation par soustraction des intensités de signal obtenues à l'étape h) avec des intensités de signal détectées d'éléments de réseau d'arrière-plan sur lesquels des molécules de sonde sont disposées, qui ne subissent pas d'interaction ou pas d'interaction détectable avec des molécules de sonde de l'échantillon ; et/ou
d) normalisation par comparaison de l'intensité de signal obtenue pour un élément de réseau avec des intensités de signal d'éléments de réseau de standard de détection sur lesquels des molécules de sonde sont disposées, marquées, toutefois non pourvues d'une combinaison clivable de façon sélective, le degré de marquage des éléments de réseau de standard de détection se distinguant, de préférence, de façon caractéristique.

31. Procédé selon la revendication 29 ou 30,
dans lequel la combinaison clivable de façon sélective est clivée de façon sélective par des méthodes chimiques et/ou physiques.

32. Procédé selon l'une quelconque des revendications 29 à 31,
dans lequel la combinaison clivable de façon sélective peut être clivée de façon sélective par apport d'anions d'acide, de cations de base, d'ions de fluorure et/ou de métal lourd tels des ions de mercure et/ou d'argent.

33. Procédé selon l'une quelconque des revendications 29 à 32,
dans lequel l'incubation s'effectue avec un échantillon de cibles marquées.

34. Procédé selon l'une quelconque des revendications 29 à 33,
dans lequel le clivage de la combinaison clivable de façon sélective s'effectue avec une forte intensité d'ions et/ou sous faible température.

35. Kit pour la mise en évidence qualitative et/ou quantitative de molécules cible
dans un échantillon par interactions moléculaires entre molécules de sonde et molécules cible sur des réseaux de sonde, comprenant les constituants suivants :
a) un réseau de sonde selon l'une quelconque des revendications 1 à 20 ;
b) des réactifs pour le clivage sélectif de la combinaison clivable de façon sélective dans les molécules de sonde ;
c) un tampon d'hybridation ; et
d) éventuellement un tampon de lavage.

36. Kit selon la revendication 35,
dans lequel les réactifs sont choisis dans le groupe se constituant d'ions de métal lourd et d'enzymes.

37. Kit selon la revendication 36,
dans lequel les ions de métal lourd sont choisis parmi les ions de mercure et/ou d'argent.

38. Kit selon l'une quelconque des revendications 35 à 37,
qui, en outre, comprend une chambre de réaction et/ou un dispositif de détection et/ou une unité de commande de température.

39. Utilisation du réseau de sondes selon l'une quelconque des revendications 1 à
20 ou du procédé selon l'une quelconque des revendications 29 à 34 ou du kit selon l'une quelconque des revendications 35 à 38 pour la mise en évidence qualitative et/ou quantitative de molécules cible dans un échantillon par des interactions moléculaires entre molécules de sonde et molécules cible sur des réseaux de sonde.
